(19) Europäisches Patentamt
European Patent Office
Office européen des brevets

(11) **EP 4 103 028 B1**

(12) ## EUROPÄISCHE PATENTSCHRIFT

(45) Veröffentlichungstag und Bekanntmachung des Hinweises auf die Patenterteilung:
**24.01.2024 Patentblatt 2024/04**

(21) Anmeldenummer: **21710573.3**

(22) Anmeldetag: **15.02.2021**

(51) Internationale Patentklassifikation (IPC):
**A47J 37/12** *(2006.01)*

(52) Gemeinsame Patentklassifikation (CPC):
**A47J 37/1223**

(86) Internationale Anmeldenummer:
**PCT/IB2021/051236**

(87) Internationale Veröffentlichungsnummer:
**WO 2021/161279 (19.08.2021 Gazette 2021/33)**

(54) **VORRICHTUNG UND VERFAHREN ZUR FILTERUNG IM NANOBEREICH FÜR FRITTIERGERÄTE, WOBEI DIE FILTERUNG EINE QUERSTROMMEMBRANFILTERUNG IM HOCHDRUCKBEREICH UMFASST**

DEVIC AND METHOD FOR FILTRATION AT THE NANOSCALE FOR FRYERS, THE FILTRATION COMPRISING CROSSFLOW MEMBRANE FILTRATION AT A HIGH-PRESSURE RANGE

DISPOSITIF, SYSTÈME ET PROCÉDÉ DE FILTRATION DE L'ORDRE DU NANOMÈTRE POUR DES FRITEUSES, LA FILTRATION COMPRENANT UNE FILTRATION MEMBRANAIRE À FLUX TRANSVERSAL DANS LA ZONE À HAUTE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2020 US 202062976432 P**

(43) Veröffentlichungstag der Anmeldung:
**21.12.2022 Patentblatt 2022/51**

(73) Patentinhaber: **Gastrofrit AG**
**9400 Rorschach (CH)**

(72) Erfinder:
• **SCHLEGEL, Alexander**
**9320 Arbon (CH)**
• **GEIGER, Philippe**
**6004 Luzern (CH)**
• **BUCHLI, Jürg**
**6440 Brunnen (CH)**
• **MÜLLER, Nadina**
**8713 Uerikon (CH)**

(74) Vertreter: **Mötteli-Mantelli, Novella**
**Da Vinci Partners LLC**
**Rathausgasse 1**
**9320 Arbon (CH)**

(56) Entgegenhaltungen:
KR-A- 20090 052 777    US-A- 4 622 135
US-A- 5 486 370        US-A1- 2016 236 150

**Beschreibung**

**Urheberrechte und Rechtshinweis**

Ein Teil der Offenbarung dieser Patentschrift enthält Material, welches dem Urheberschutz unterliegt. Der Urheberrechtsinhaber erhebt keinen Einwand gegen die originalgetreue Wiedergabe der Patentschrift oder der Patentoffenbarung - durch wen auch immer -, wie sie in der Patentakte beziehungsweise den Unterlagen des Patent- und Markenamtes erscheint, behält sich jedoch ansonsten alle Urheberrechte vor. Ferner sind keine in diesem Dokument enthaltenen Verweise auf die Patente oder Erzeugnisse Dritter als Zugeständnis dahingehend auszulegen, dass die vorliegende Erfindung nicht berechtigt ist, derartiges Material aufgrund einer früheren Erfindung vorzudatieren.

**Hintergrund der Erfindung**

Die Lebensdauer von Frittieröl ist begrenzt. 60 % des gebrauchten Frittieröls müssen aufgrund komplexer chemischer und physikalischer Reaktionen, die während des Frittiervorgangs auftreten, entsorgt werden.

Der Einsatz von Membranfiltrationssystemen und -geräten wird hier für die kontinuierliche Reinigung von Frittieröl in einer kommerziellen Friteuse, wie sie z. B. in der Gastronomie eingesetzt wird, vorgeschlagen, um den Ölabfall zu minimieren. Die Erkenntnisse zur Membranfiltration aus Tests und Literatur sowie die für ein Scale-up generierten Daten wurden in der detaillierten Beschreibung dieser Anwendung zusammengefasst.

Die Funktionsweise von Membranen wird beispielsweise im Artikel "Einführung in Theorie und Praxis der Membrantechnik" von Dr. Peter Schirg beschrieben, dessen Inhalt in seiner Gesamtheit hier ausdrücklich durch Bezugnahme aufgenommen und zur Definition der Merkmale herangezogen wird, für die hiermit Schutz beansprucht werden kann.

In der Gastronomie müssen trotz verschiedener Aufbereitungs- und Filtrationsverfahren erhebliche Mengen an Frittieröl entsorgt werden. Der chemische und sensorische Verderb des Öles gründet in komplexen Abbau- und Reaktionsprozessen die während dem Frittieren und unter Hitzeeinfluss stattfinden und zum Verderb des Öles führen. Die Verlängerung der Lebensdauer von Frittieröl könnte deshalb zu signifikanten Ressourceneinsparungen führen.

**Zusammenfassung der Erfindung**

Es werden ein Frittiersystem und ein Verfahren bereitgestellt, wobei eine Frittiervorrichtung eine Umhüllung (d. h. ein Gehäuse), die durch Außenwände begrenzt ist, und einen Behälter umfasst, der zur Aufnahme einer Flüssigkeit geeignet ist, wobei die Flüssigkeit vorzugsweise ein Öl ist und die Frittiervorrichtung mit einem Filtrationssystem verbunden ist. Das Filtrationssystem ist so konfiguriert, dass es kontinuierlich einen Strom der Flüssigkeit in einer Anzapfschleifenkonfiguration aufnimmt. Das Filtrationssystem hat ein Filterelement, wobei das Filterelement ein Membranfilter ist.

Ein Frittiersystem ist bekannt aus US-A-4622135.

Diese Erfindung beschäftigt sich mit der Aufgabe eine Fritteuse für die Systemgastronomie zu entwickeln, welche Frittieröl in konstant guter Qualität innerhalb der tolerierbaren Grenzwerte garantiert. Die Entsorgung von gebrauchtem Frittieröl könnte so erheblich reduziert werden.

Um dieses Ziel zu erreichen, wurden Anwendungen und Verfahren aus der Lebensmittelindustrie für die Aufbereitung des Frittieröles in Betracht gezogen. Es wurden verschiedene Arbeiten zu den Themen Membranfiltration, Tiefenfiltration und Fraktionierung durchgeführt, sowie der Zusatz von natürlichen Antioxidantien untersucht und evaluiert. Die Resultate zeigten auf, dass die Membranfiltration am geeignetsten ist, um die Lebensdauer von Frittieröl zu verlängern, ohne dass Zusatzstoffe (wie bspw. Antioxidantien) eingesetzt werden.

**Kurzbeschreibung der Zeichnungen**

Die beigefügten Zeichnungen stellen beispielhaft verschiedene Ausführungsformen des Erfindungsgegenstandes dar.

> Figur 1 zeigt schematisch den Massen- und Wärmetransfer, der während dem Frittieren innerhalb des Frittiergutes stattfindet.
> Figur 2 zeigt Membranverfahren: Mikrofiltration (MF), Ultrafiltration (UF), Nanofiltration (NF) und die Umkehrosmose (UO).
> Figur 3 zeigt die Darstellung des Prinzips der Cross-Flow Filtration.
> Figur 4 zeigt ein möglicher Ablauf beim Design eines Membransystems.
> Figur 5 zeigt ein dreidimensionaler Farbkörper.

Figuren 6A und 6B zeigen die Testanlage TestUnit M20 von Alfa Laval.

Figur 7 zeigt den Aufbau der einzelnen Plattenmodulkomponenten.

Figur 8 zeigt ein Schema des Wärmetauschers mit einem Füllvolumen von 7.6 Liter und vier Schabern.

Figur 9 zeigt das zweite Becken, welches als Prototyp-Fritteuse dient und mit der angepassten Membrantestanlage M20 verbunden.

Figur 10 zeigt die Beschriftung der Probenbehälter.

Figur 11 zeigt Massenströme.

Figur 12 zeigt schematisch den Versuchsaufbau.

Figur 13 zeigt den Ablauf eines Versuchstags, welcher in zwei Teile gegliedert ist.

Figur 14 zeigt eine Risikomatrix.

Figur 15 zeigt die Messergebnisse der vier Temperatursonden und der Luftfeuchtigkeit als Funktion der Zeit.

Figur 16 zeigt die gemessenen Massen und TPA-Werte.

Figur 17 zeigt die Resultate der Vorversuche zur Membranselektion.

Figur 18 zeigt, dass der Permeatflux bei steigendem TPAR abnimmt.

Figur 19 zeigt die Veränderung des Rückhaltefaktors.

Figur 20 zeigt, dass der Rückhaltefaktor sowie der Permeatflux bei Erhöhung des Druckes steigen.

Figur 21 zeigt, dass der höchste Permeatflux mit 3.12 l/h·m2 bei einer Temperatur von 90°C gemessen wird.

Figur 22 zeigt, dass der Volumenstrom den Permeatflux geringfügig beeinflusst.

Figur 23 zeigt den Permeatflux im Verhältnis zum TPAR im Langzeitversuch.

Figur 24 zeigt die Veränderung des Rückhaltefaktors.

Figur 25 zeigt den Verlauf der Viskosität.

Figur 26 zeigt die Verfahrensskizze der erfindungsgemässen Fritteuse.

Figur 27 zeigt eine Übersicht der aufgestellten Beziehungen.

Figur 28 zeigt einen Ausschnitt aus der Simulation.

Figur 29 zeigt den Einfluss der Membranfläche auf den TPA Verlauf in der Fritteuse.

Figur 30 zeigt die TPA Werte des Prototyps über den gesamten Verlauf.

Figur 31 zeigt die Säurezahlen der gemessenen Frittierölproben von Standard und Prototyp in Abhängigkeit der Laufzeit.

Figur 32 zeigt den Verlauf der Anisidin Zahl von Standard und Prototyp im Verlauf der Versuchszeit.

Figur 33 zeigt PTG Werte.

Figur 34 zeigt DEGLEV Werte.

Figur 35 zeigt den Verlauf des Permeatflux während des Frittierversuches.

Figur 36 zeigt Visokositätswerte der Proben vom Standard, Prototyp und Retentat.

Figur 37 zeigt Angaben zur Fabdifferenz.

Figur 38 zeigt den Bräunungsindex von Standard, Prototyp und Retentat.

Figur 39 zeigt die wahrgenommene Farbintensitäten aus der Standard Fritteuse und des Prototyps.

Figur 40 zeigt die Beurteilung der olfaktorischen Ranzigkeit im deskriptiven In-Out Test der Öle von Standard Fritteuse und Prototyp.

Figur 41 zeigt, dass das Frittieröl des Prototyps zu Beginn als fischig wahrgenommen wird.

Figur 42 zeigt die olfaktorische Wahrnehmung der Frittieröle am siebten Versuchstag.

Figur 43 zeigt die Beurteilung der Gold-Braun Färbung im deskriptiven In-Out Test der Pommes Frites aus der Standard Fritteuse und Prototyp.

Figur 44 zeigt Informationen zum Attribut Röstig.

Figur 45 zeigt die Einstellungen der Simulation beim Vergleich des kontinuierlichen und batchweisen Ölablasses.

Der Fachmann wird verstehen, dass die Elemente in den Abbildungen der Einfachheit und Klarheit halber dargestellt sind und nicht unbedingt maßstabsgetreu gezeichnet wurden. So können z. B. Abmessungen relativ zu anderen Elementen übertrieben dargestellt sein, um das Verständnis der Erfindung und ihrer Ausführungsformen zu verbessern. Wenn in diesem Dokument die Begriffe "erster", "zweiter" und dergleichen verwendet werden, dient dies der Unterscheidung ähnlicher Elemente und nicht unbedingt der Beschreibung einer sequentiellen oder chronologischen Reihenfolge. Darüber hinaus werden relative Begriffe wie "vorne", "hinten", "oben" und "unten" und dergleichen in der Beschreibung und/oder in den Ansprüchen nicht notwendigerweise zur Beschreibung einer exklusiven relativen Position verwendet. Der Fachmann wird daher verstehen, dass diese Begriffe durch andere Begriffe austauschbar sind und dass die hier beschriebenen Ausführungsformen auch in anderen Ausrichtungen als den explizit dargestellten oder anderweitig beschriebenen arbeiten können.

**Detaillierte Beschreibung der bevorzugten Ausgestaltung**

Die folgende Beschreibung soll den Umfang der Erfindung in keiner Weise einschränken, da sie exemplarischen Charakter hat und dazu dient, die beste Ausführungsform der Erfindung zu beschreiben, die den Erfindern zum Zeitpunkt der Anmeldung bekannt war. Folglich können Änderungen in der Anordnung und/oder Funktion eines der Elemente, die in den hier offengelegten beispielhaften Ausführungsformen beschrieben sind, vorgenommen werden, ohne vom Geist und Umfang der Erfindung abzuweichen.

Es wurden primär zwei Membrantypen getestet und charakterisiert, die PERVAP 4060 der DeltaMem AG und die GMT oNF-3 der GMT Membrantechnik GmbH. Die Membranfiltrationstests wurden mit einer Alfa Laval TestUnit M20 durchgeführt.

Es wurde ein kontinuierliches Filtrationssystem mit integrierter Membranfiltration in einer Fritteuse entwickelt, um die Auswirkungen der kontinuierlichen Membranfiltration auf den Ölabbau zu bewerten und die kritischen Parameter im System zu identifizieren. Darüber hinaus wurde der Prozess mit Hilfe eines Simulationsmodells simuliert. Der Prototyp wurde auf Basis einer F2-300 Fritteuse der Firma Gastrofrit AG und der TestUnit M20 aufgebaut und über 13 Tage einem Frittierversuch unterzogen. Während dieses Frittierversuchs wurden täglich sechs Stunden lang Pommes frites und Chicken Nuggets frittiert und jeden Tag fünf Proben Frittieröl analysiert.

Die Ölqualität wurde anhand von Verderbnisindikatoren bewertet. Dazu gehörten: die gesamte polare Fraktion (TPA), die Säurezahl (SZ), die Anisidin-Zahl und die polymeren Triglyceride (PTG), bestimmt durch Fourier-Transform-Nahinfrarot-Spektroskopie (FT-NIR). Die Viskosität und Farbe der Frittieröle wurden mit Viskosimetern bzw. Spektralphotometern gemessen. Zusätzlich wurde während der Frittierversuche ein sensorischer In-Out-Test durchgeführt.

Basierend auf den Ergebnissen der Membrancharakterisierung erwies sich der Typ GMT oNF-3 als die am besten geeignete Membran für den Frittierprozess. Der GMT oNF-3-Typ erreichte die optimale Filtrationswirkung bei folgenden Prozessparametern: Transmembrandruck (TMP): 25bar, Überlauf: 15 l/min, Öltemperatur: 80°C, TPA im Retentat (TPAR): < 45%. Der höchste Permeatfluss bei 80°C Öltemperatur betrug 2,42 l/h·m2. Der Retentionsfaktor lag zwischen 0,5 und 0,6 und ist abhängig von der TPA-Konzentration im Retentat. Die oben genannten Parameter und die Reynoldszahl sollten bei einem zukünftigen Scale-up des Systems berücksichtigt werden.

Die simulierten Ergebnisse des Frittierversuchs widerlegten die Annahme, dass mit einem hohen Permeatfluss eine konstante Ölqualität erreicht werden kann. Es konnte gezeigt werden, dass der begrenzende Faktor des Systems der Retentionsfaktor der Membran ist, da dieser mit steigendem TPAR direkt die TPA-Konzentration im Filtrat beeinflusst.

Während des Frittierversuchs mit dem Prototyp wurden verschiedene Schwächen des Systems deutlich. Die Pumpen und Ventile waren sehr anfällig für Feststoffpartikel. Eine Vorfiltration war daher unerlässlich, um einen einwandfreien Betrieb zu gewährleisten. Es zeigte sich jedoch, dass sich der Abbau des Frittieröls mit dem Prototyp deutlich verlangsamte. In einem speziellen Testlauf hielt der Prototyp das Frittieröl auch nach 13 Tagen (312 Stunden) Frittierzeit auf einem TPA-Gehalt von 11,84 %. Im Vergleich dazu überschritt die Standardfritteuse den gesetzlichen Höchstwert von 27 % TPA nach 295 Stunden. Auch die Farbmessungen zeigten, dass am Ende der Testreihe ein deutlicher Farbunterschied von ΔE*ab= 43,83 zwischen Öl aus der Standardfritteuse und dem Prototyp bestand. Der Permeatfluss betrug zu Beginn eines spezifischen Tests 2,18 l/h·m2, der im Laufe des Tests abnahm und sich zwischen 1,00 und 1,20 l/h·m2 einpendelte. Der sensorische In-Out-Test zeigte bei beiden Friteusen keine Auffälligkeiten, die das Lebensmittelprodukt negativ beeinflussen würden.

Systeme und Vorrichtungen gemäß der vorliegenden Erfindung zeigen, dass eine deutliche Verlängerung der Lebensdauer von Frittieröl erreicht werden kann. Kriterien wie Membranfläche, Frittieröltemperatur im Membrankreislauf, Reynoldszahl, Transmembrandruck (TMP) und die Menge an Feststoffpartikeln im Frittieröl sind zu berücksichtigen, um eine Auslegung des Membransystems speziell für die Bedingungen in Friteusen zu definieren und umzusetzen. Die Menge der Feststoffpartikel im Frittieröl muss durch Vorfiltration reduziert werden, um verstopfungsbedingte Störungen im System zu vermeiden.

In einer Variante einer Fritteuse ist die Fritteuse mit einer entsprechend dimensionierten Membranfiltrationsanlage ausgestattet, die in einem geschlossenen Kreislauf angeschlossen ist. Zusammenfassend steht mit der vorliegenden Erfindung ein umweltfreundliches, innovatives und kundenorientiertes Produkt zur Verfügung, das die Erwartungen der Kunden übertrifft und ein einfaches, sicheres und kostengünstiges Frittieren ermöglicht.

Die Erfindung zeigte sich, dass eine Vorfiltration mittels Tiefenfilter durchaus einen positiven Effekt auf den Verderbsverlauf von Frittieröl haben könnte und deshalb weiterverfolgt werden sollte.

**1. Theorie**

Basierend auf der in der Einleitung beschriebenen Ausgangslage stellen sich fünf Themenschwerpunkte heraus, deren theoretische Grundlagen in diesem Abschnitt beleuchtet werden. Dazu gehören der Frittierprozess, die Filtration, die Fraktionierung von Öl sowie die Definition des Scale-Up und wie dieses auf die Entwicklung eines Membransystems angewendet werden kann. Zudem werden die Theoriegrundlagen zur verwendeten Analytik erklärt.

## 1.1 Grundlagen des Frittierprozesses

Der Frittierprozess zeichnet sich durch die schnelle Zubereitung von geschmacksvollen Lebensmitteln aus. Über die Jahre ist das Interesse an der Optimierung dieses komplexen Frittierprozesses gewachsen. Dies führte zu einem besseren Verständnis des gesamten Prozesses, vom Frittieröl über die Produkte bis zur Fritteuse und den allgemeinen Frittierbedingungen. Beim Frittieren werden Lebensmittel Temperaturen von 140-180°C ausgesetzt und in Speiseöl gegart. Neben der Garung des Lebensmittels während dem Frittiervorgang, durchläuft auch das Frittieröl verschiedenste chemische und physikalische Prozesse. Im folgenden Abschnitt wird auf die chemischen und physikalischen Reaktionen und Veränderungen eingegangen, die während dem Frittierprozess im Produkt, aber auch im Frittiermedium ablaufen.

## 1.1.1 Massen- und Wärmetransfer während dem Frittieren

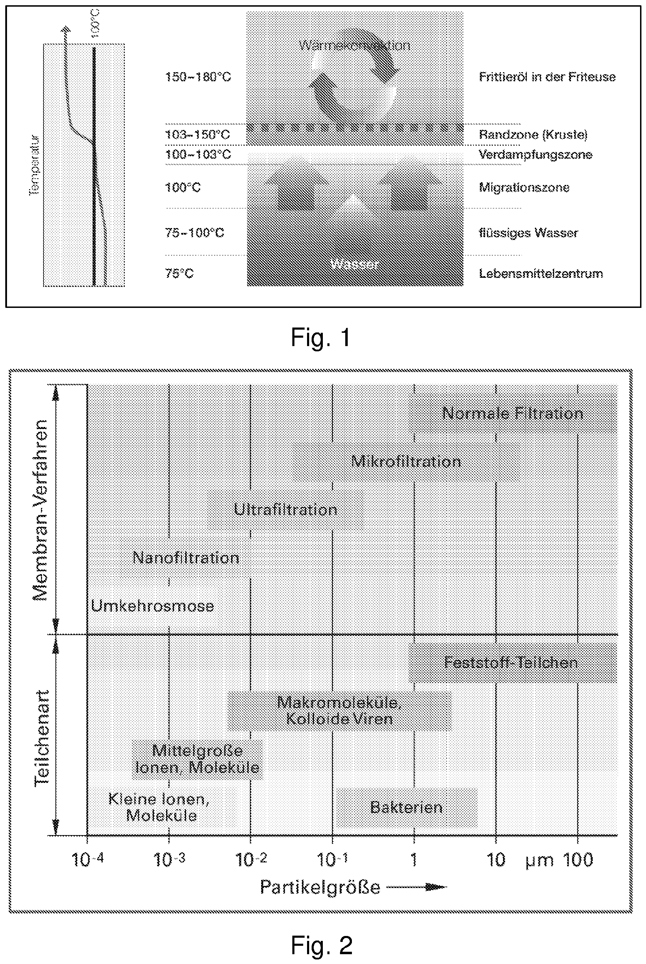

Die Figur 1 zeigt schematisch den Massen- und Wärmetransfer, der während dem Frittieren innerhalb des Frittiergutes stattfindet. Bereits wenige Sekunden nach dem Eintauchen des Produktes in das Frittierfett bildet sich in einer ersten Phase eine dünne Kruste deren Struktur den weiteren Frittierprozess sowie die Qualität und Knusprigkeit entscheidend beeinflusst. Hierbei findet durch das Verdunsten des Wassers an der Randzone ein Massentransfer statt. Das im Lebensmittel gebundenen Wasser dringt nach Aussen und wird an das Frittieröl abgegeben. Während dieser Phase steigt die Temperatur nicht über 100°C an. Das verdampfende Wasser im Frittieröl verursacht eine Blasenbildung, welche die Kontaktfläche zwischen Luft und Frittieröl vergrössert und so die Wärmeübertragungsrate zwischen Frittieröl und Luft, sowie den oxidativen Abbau des Frittieröles, beschleunigt. Diese Blasenbildung kann durch Temperatursenkung, Reduzierung der Menge an frittiertem Produkt oder Vortrocknung der Lebensmittel verringert werden. Auf diese Weise kann der Dampf eine schützende Wirkung auf das Frittieröl haben, indem er darüber eine Dampfschicht bildet und somit den Kontakt mit Sauerstoff verhindert. Solange die Verdampfung von Wasser schneller ist, als die Fähigkeit des umgebenden Frittieröles den Dampf durch Konvektion zu entfernen, ist die Wärmeübertragungsrate von Öl auf die Lebensmitteloberfläche gleich Null. Der Wassertransport sorgt dafür, dass die Aussenschicht des Lebensmittels gekühlt wird und somit nicht verbrennt. Erst wenn kein Wasser vom Inneren des Lebensmittels an die Randschicht getragen wird, steigt die Temperatur von aussen nach innen an. Der Massentransfer der Ölabsorption erfolgt gegenläufig zum verdampfenden Wasser, wobei jedoch der grösste Teil der Ölaufnahme ausserhalb des Frittiermediums beim Abkühlen der Lebensmittel stattfindet. Durch die Abkühlung entsteht ein Vakuum in den Poren des Lebensmittels, wodurch Frittieröl von der Lebensmitteloberfläche leicht absorbiert wird.

## 1.1.2 Chemische und physikalische Veränderungen des Frittiermediums

Die Art und Geschwindigkeit der Entstehung von Abbauprodukten im Frittieröl hängen unter anderem von der Zusammensetzung des Frittieröls (Fettsäuremuster, Gehalt an unverseifbaren Stoffen), der Art des Frittierens (intermittierend oder kontinuierlich), der angewandten Frittiertemperatur, der Dauer des Frittiervorgangs und der Art des Frittiergutes ab. Die Zunahme von total polarem Anteil (TPA), Säuregehalt, Di- und polymere Triglyceride (DPTG) und dunkel werdende Farbe sind typische Indizien für den Frittierölabbau bei erhöhten Temperaturen. Die Oxidation ungesättigter Fettsäuren führt zu flüchtigen Kurzfragmenten (C6, C7) und nichtflüchtigen, oxidierten, monomeren TAG-Fragmenten.

## 1.1.3 Veränderungen im Frittiergut

Grundsätzlich kann zwischen erwünschten und unerwünschten Veränderungen im Frittiergut unterschieden werden. Die Verkleisterung der Stärke und das Denaturieren von Eiweiss sind Veränderungen, die zur Verbesserungen der Verdaubarkeit und der Schmackhaftigkeit des Lebensmittels beitragen. Des Weiteren ist die Maillard-Reaktion zur Bräunung des Lebensmittels und zur Bildung von Aromakomponenten nötig und somit erwünscht. Zu den unerwünschten Veränderungen kann die Fettaufnahme gezählt werden. Diese ist stark vom Verhältnis der Oberfläche des Frittiergutes zu dessen Masse abhängig. Bei Kartoffelchips liegt die Frittierölaufnahme durch das Frittieren bei 30-40%, bei Pommes Frites sind es 6-12%. Eine zu hohe Fettaufnahme ist zwar negativ, eine gewisse Fettaufnahme ist allerdings für die sensorische Qualität einiger Produkte essentiell. Dies lässt den Schluss zu, dass das Frittieröl, welches vom Produkt aufgenommen wird, sensorisch in einwandfreier Qualität sein muss, um ein qualitative einwandfreies Produkt zu produzieren. Wie beim Braten, Backen, Grillen oder Rösten kann es beim Frittieren stärkehaltiger und wasserarmer Lebensmittel, die zudem Eiweisskomponenten wie Asparagin und reduzierende Zucker enthalten, zur Bildung von kanzerogenem Acrylamid kommen.

## 1.2 Filtration

Beim Filtrieren wird eine Flüssigkeit mit suspendierten Teilchen durch ein poröses Medium geführt. Dabei werden die suspendierten Teilchen zurückgehalten und ein klares Filtrat entsteht. Die Filtrationsarten können, nach der Art wie die Teilchen zurückgehalten werden, in kuchenbildende Filtration, Tiefenfiltration oder Membranfiltration eingeteilt werden.

### 1.2.1 Tiefenfiltration

Die Tiefenfiltration findet meist in einer relativ dicken Filtermittelschicht von 3-6mm statt. Diese kann aus Fasern oder auch Körnern bestehen. Die zu entfernenden Partikel werden durch physikalisch-chemische Mechanismen, die das Festhalten der Partikel bewirken, bei der Durchdringung der Filterschicht aus der Flüssigkeit entfernt. Ein Absetzen von Teilchenagglomeraten auf der Oberfläche der Filterschicht ist unerwünscht, da dies den weiteren Zutritt von Partikeln in den Tiefenfilter behindert und somit einen Druckverlust hervorruft. Für den Filtrationsprozess können verschiedene Abbruchkriterien definiert werden, bei denen die Filtration gestoppt und der Filter gereinigt oder ausgewechselt werden muss. Mögliche Abbruchkriterien sind: Erreichen vom maximalen Druckverlust, unzureichende Filtrationsqualität (Filtrat ist nicht klar) oder unzureichender Volumenstrom. Das Haften der Partikel am Filtermedium findet durch elektrostatische und Van-der-Waals Kräfte statt. Daher lässt es sich mit Zusätzen beeinflussen, die das Wechselwirkungspotential der einzelnen Haftpartner verändern. Dies ist beispielsweise mit einer Veränderung des pH-Wertes möglich. So können auch Teilchen abgeschieden werden, die kleiner als die Porengrösse des Filters sind.

Für eine schnelle Filtration eignen sich Tiefenfilter mit elektrostatischer Bindung besonders gut. Tiefenfilter werden als Patronen-, Faser- und Sandfilter verwendet. Da der Feststoff am Filtermedium fixiert wird, muss er von diesem wieder getrennt oder mit ihm entsorgt werden. Bei einer sehr hohen Konzentration von Feststoffen, ist das Verfahren der Tiefenfiltration nicht effektiv.

### 1.2.2 Membranfiltration

Heutzutage wird die Membrantechnologie in verschiedensten Bereichen der Lebensmittelindustrie eingesetzt. Die meisten dieser Applikationen sind druckgetriebene Membranprozesse. Dazu gehören die in Figur 2 dargestellten Membranverfahren: Mikrofiltration (MF), Ultrafiltration (UF), Nanofiltration (NF) und die Umkehrosmose (UO).

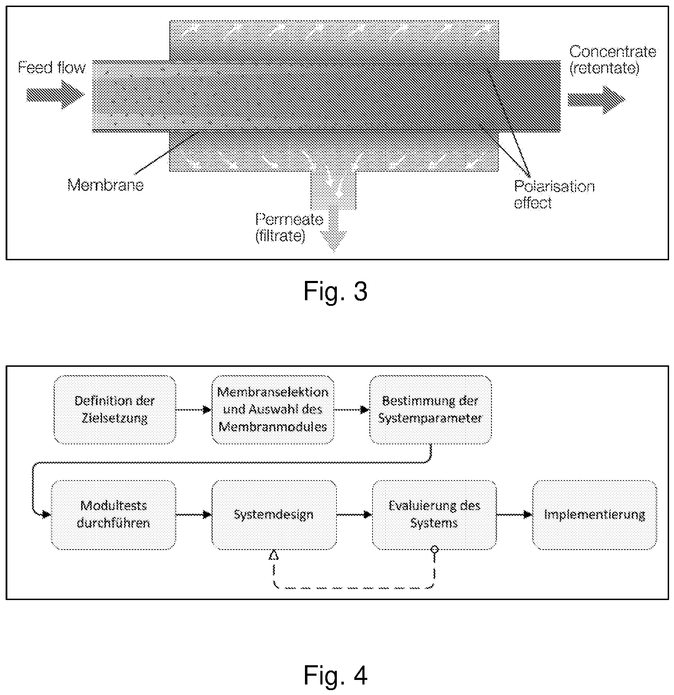

Das Membranseparationsverfahren dient meist dazu ein Lösungsmittel, Makromoleküle oder kleine suspendierte Teilchen von einer Flüssigkeit abzuscheiden. Als Unterscheidungskriterium gelten nicht nur die Grösse und die Oberflächeneigenschaft der Moleküle, sondern auch, wenn auch in kleinerem Ausmass, die physikalischen und chemischen Eigenschaften der Membranen. Es werden dünne, semipermeable Membranen eingesetzt, welche eine selektive Durchlässigkeit aufweisen. In der Regel durchdringen Lösungsmittel und kleine Moleküle die Membranen, Makromoleküle oder suspendierte Feststoffe werden jedoch durch die Membranen zurückgehalten. Das Produkt, welches die Membran durchdringt wird als Permeat bezeichnet und der zurückgehaltene Anteil als Retentat. Der Produktzulauf bzw. das zu filtrierende Medium wird meist als Feed bezeichnet. Die Membranfiltration wird idealerweise im Querstrom-Kreislauf (cross-flow) geführt und ist in Figur 3 schematisch dargestellt. Figur 3 zeigt die Darstellung des Prinzips der Cross-Flow Filtration. Das Produkt läuft von links nach rechts über die Membran wobei das Permeat durch die Membran dringt und abfliesst. Dadurch findet eine Aufkonzentrierung des Retentates statt.

Der Transmembrandruck (TMP) gilt als treibende Kraft der Membranfiltration und definiert sich aus der Differenz vom Druck auf der Retentat-Seite und dem Druck auf der Permeat-Seite (normalerweise Umgebungsdruck). Da durch den Förderstrom ein Druckabfall entsteht, wird für die Berechnung des TMP der Durchschnittsdruck vom Eingangsdruck vor der Membran und dem Ausgangsdruck nach der Membran herbeigezogen. Je niedriger dieser Druckverlust ist, desto besser verläuft die Filtration.

In der Auslegung von Membranverfahren gibt es zwei grundlegende Faktoren, welche die Leistung der Filtration indizieren. Zum einen der Flux und zum anderen die Selektivität. Der Flux definiert sich als Permeat-Volumen, welches pro Zeit- und Flächeneinheit durch die Membran dringt (z.B. Liter/$m^2 \cdot$h). Er hängt von der Membran, der Applikation sowie den Betriebsbedingungen ab und ist normalerweise eine Funktion der Zeit. Die Selektivität wird generell als Rückhaltung von spezifischen Stoffen beschrieben und wird mit dem Rückhaltefaktor R beschrieben. Der Faktor R ist dimensionslos und variiert zwischen 0% (keine Rückhaltung) und 100% (komplette Rückhaltung des gelösten Stoffes).

Der Permeatflux und der Rückhaltefaktor sind abhängig von den Eigenschaften des zu filtrierenden Mediums und den suspendierten Teilchen sowie der Membraneigenschaften. Die Membraneigenschaften werden durch die Porengrösse, Porengrössenverteilung, die Krümmung des Fliessweges der Flüssigkeit und der Teilchen über die Membranoberfläche, die Membrandicke und die Porengestalt bestimmt.

Beim Durchströmen vom Produkt durch die Membran steigt die Konzentration der Feststoffe in der Umgebung der Membran an. Dabei entsteht ein Konzentrationsgradient, der den Permeatflux negativ beeinflussen kann. Dies wird auch als Konzentrationspolarisation bezeichnet. Die Konzentrationspolarisation steigt als Ausdruck des Verhältnisses der Konzentration an der Membranoberfläche und im Hauptstrom, wenn der Transmembrandruck und die Dicke der Grenzschicht ansteigen. Die Konzentration an der Membranoberfläche erhöht sich mit steigendem Permeatflux.

Bei der Querstromfiltration kann dem Absinken des Permeatflux, als Folge der Konzentrationspolarisation, mit der Erhöhung der Strömungsgeschwindigkeit entgegengewirkt werden. Sind keine suspendierten Feststoffe vorhanden die Ablagerungen verursachen, verhält sich der Permeatflux konstant. Dieser verhält sich grundsätzlich dann konstant, wenn die Strömungsgeschwindigkeiten an der Membranoberfläche, die Feststoffkonzentration im Feed und der Transmembrandruck sich ebenfalls konstant verhalten. Sollte ein Fluxabfall trotz konstanter Bedingungen vorkommen, dann kann dieser dem Fouling, also der Verschmutzung durch Ablagerungen auf der Membranoberfläche, zugeschrieben werden.

Eine hohe Strömungsgeschwindigkeit bewirkt meist, dass der Permeatflux begünstigt wird. Allerdings führt dies auch zu einem Druckverlust über die Länge der in Reihe geschalteten Membranmodulen. Zudem erhöht sich durch die Erhöhung des Volumenstromes und des Druckabfalls auch der Energieeintrag und somit die Kosten. Die Optimierung der Überströmungsgeschwindigkeit ist deshalb wichtig, um die Wirtschaftlichkeit eines Membranprozesses zu gewährleisten.

Um die Filterqualität zu verbessern und um Prozessstörungen zu vermeiden wird eine Vorbehandlung des zu filtrierenden Mediums empfohlen. Das zu filtrierende Medium kann Schwebstoffe wie Fasern oder organische bzw. anorganische Partikel enthalten. Werden diese vor dem Membranfiltrationsprozess nicht entfernt, können sie sich an der Membranoberfläche ablagern und so zu Verstopfungen im System führen, was wiederum zu einem Druckverlust über der Membran und somit zu einem erhöhtem Fouling führt. Folgende Vorbehandlungen werden typischerweise eingesetzt:

- Entfernung von groben Partikeln mit einem Grobsieb
- Klärung mit oder ohne Flockung
- Reduktion der Alkalität durch pH-Einstellung
- Reduktion von freiem Chlor durch Natriumdisulfit oder Aktivkohle Filter

Diese dienen als Schutz vor Verschmutzung und Inkonsistenzen während der Filtration und ermöglichen verbesserte Leistungen und eine längere Lebensdauer der Membran.

### 1.2.2.1 Membranarten

Für eine Membranfiltration stehen verschiedenste Membranarten sowie Membrantypen zur Verfügung. Membranen können entweder in isotroper oder anisotroper Form vorkommen. Die isotropen Membranen weisen quer über ihre Dicke uniforme Poren auf. Anisotrope Membranen bestehen hingegen aus einer Stützschicht auf welcher ein dünnes, semipermeables Material die Oberfläche ausmacht. Mikrofiltration (MF) Membranen sind in der Regel isotrop. In der Ultrafiltration (UF), Nanofiltraion (NF) und Umkehrosmose (UO) werden grundsätzlich anisotrope Membranen eingesetzt.

Typische Charakteristiken von verschiedenen Membranmodulen sind in Tabelle 1 zusammengefasst.

Tabelle 1:

| Typische Charakteristiken von verschiedenen Membranmodulen wie Spiralwickel-, Platte-, Hohlfaser- und Rohrmodule. Die erwähnten Membranmodule sind meist mit verschiedenen Porengrössen verfügbar. Die Mikrofiltration (MF) weist üblicherweise eine Porengrösse von 0.1-10$\mu$m auf. Weitere übliche Porengrössen sind: Ultrafiltration (UF) 0.01-0. 1$\mu$m, Nanofiltraion (NF) 0.001-0.01$\mu$m und die Umkehrosmose erfordert eine Porengrösse von >0.001$\mu$m: | | | | | |
|---|---|---|---|---|---|
| | *Spiralwickelmodul* | *Platten- und Rahmenmodul* | *Hohlfasermodul* | *Rohrmodul* | |
| | | | | **Polymer** | **Keramik** |
| *Porengrösse* | MF, UF, NF, UO | MF, UF, NF, UO | MF, UF, NF, UO | MF, UF, NF, UO | MF, UF, NF |
| *Materialien* | Polymere (grosse Auswahl) | Polymere (grosse Auswahl) | Polymere (geringere Auswahl) | $Al_2O_3$, $ZrO_2$, $TiO_2$, Kohlenstoff | $Al_2O_3$, $ZrO_2$, $TiO_2$, Kohlenstoff |
| *Kosten* | Tief | Hoch | Mittel | Mittel | Sehr hoch |
| *Platzbedarf* | Tief | Mittel - Hoch | Mittel | Mittel - Hoch | Hoch |
| *Empfindlichkeit gegenüber suspendierten Feststoffen im Zulauf* | Hoch | Mittel | Hoch | Tief | Tief |
| *Zulässige Viskosität* | Mittel | Hoch | Tief | Hoch | Hoch |
| *Tempertaturbeständi gkeit* | Tief - Mittel | Mittel | Tief - Mittel | Tief | Sehr hoch |
| *Rückspülbarkeit* | Nein | Nein | Ja | Ja | Ja |
| *Fouling Resistenz* | Mittel - Gut | Mittel - Gut | Mittel - Gut | Gut | Gut |
| *Reinigung* | Gut | Mittel | Mittel | Gut | Sehr gut |
| *Austausch der Membran* | Einfach | Relativ aufwendig | Einfach | Relativ aufwendig | Aufwendig |

Für jede Anwendung sollten verschiedene Membranen getestet und ein passendes Membransystem entwickelt werden. Damit können Investitions- und Betriebskosten besser abgeschätzt und minimiert werden. Die nötigen Schritte zur Erarbeitung und Entwicklung eines solchen Membransystems werden im Abschnitt 1.4.2 betrachtet.

## 1.2.2.2 Betriebsarten

Grundsätzlich gibt es vier Betriebsarten mit denen ein Membransystem betrieben werden kann. Der Batchbetrieb stellt eine davon dar. Bei dieser Betriebsart wird so lange filtriert, bis die gewünschte Konzentration im Retentat erreicht wurde. Des Weiteren kann die Filtration als Einzeldurchlauf oder Zu- und Abführungssystem (feed and bleed) betrieben werden. Der Einzeldurchlauf ist ein kontinuierlicher Betrieb, bei dem keine Rezirkulierung des Retentates vorgesehen ist. Das Zu- und Abführungssystem hingegen ermöglicht trotz hohem Einfluss der Feedkonzentration auf die Filterleistung, eine kontinuierliche Filtration bei konstanter Filtrationsrate. Die vierte Betriebsart ist der Mehrstufenbetrieb, auch genannt Kaskadensystem. Hierbei wird das Retentat oder Permeat nach der ersten Filtration als Feed auf die nächste Stufe bzw. über die nächste Membran geleitet, bis die gewünschte Konzentration oder das gewünschte Produkt erreicht ist.

## 1.2.2.3 Lebensmittelrechtliche Situation beim Einsatz von Membranen

Beim Einsatz von Membranen in Lebensmittelprozessen muss gewährleistet werden, dass keine Migration von der Membran in das Produkt stattfindet und die Membran das Produkt nicht negativ verändert. Die Gesetzgebung besagt, dass mit Lebensmittel in Kontakt kommende Materialien nach guter Herstellungspraxis (GHP, engl. GMP) produziert warden müssen. Diese dürfen keine Bestandteile in solchen Mengen an das Lebensmittel abgeben, welche die Gesundheit des Menschen gefährdet, die Lebensmittelzusammensetzung in unvertretbarer Weise verändert oder eine Beeinträchtigung der organoleptischen Eigenschaften der Lebensmittel herbeiführt. Aus lebensmittelrechtlicher Sicht gehört die Membran zu den Bedarfsgegenständen. In der Schweiz ist die Verordnung des Eidgenössischen Departement des Inneren (EDI) vom 16. Dezember 2016 über Materialien und Gegenstände relevant, die dazu bestimmt sind, mit Lebensmitteln in Berührung zu kommen (Bedarfsgegenständeverordnung, SR 817.023.21), welche die allgemeinen Anforderungen an Bedarfsgegenstände in den Artikeln 3 - 8 festgelegt. Für spezifischere Anforderungen muss das Material, aus dem die Membran zusammengesetzt ist, bekannt sein. Dies ist daher wichtig, da gemäss Schweizer- und EU-Recht für Produkte aus bestimmten Materialien sogenannte Konformitätserklärungen benötigt werden. Nach der Verordnung (EG) Nr. 1935/2004 des europäischen Parlaments und des Rates über Materialien und Gegenstände, die dazu bestimmt sind, mit Lebensmitteln in Berührung zu kommen, sind die entsprechenden Produktkategorien:

1. Aktive und intelligente Materialien

2. Klebstoffe

3. Keramik

4. Kork

5. Gummi

6. Glas

7. Ionenaustauscherharze

8. Metalle und Legierungen

9. Papier und Karton

10. Kunststoffe

11. Druckfarben

12. Regenerierte Cellulose

13. Silikone

14. Textilien

15. Lacke und Beschichtungen

16. Wachse

Die Konformitätserklärung belegt, dass die verwendeten FCM (Food Contact Material) allen lebensmittelrechtlichen Anforderungen entsprechen. Sie ist ein wesentliches Element der Selbstkontrolle, welche für alle involvierten Hersteller, Händler und Verwender von FCM relevant ist. Alle Beteiligten sind auf ihrer jeweiligen Stufe für die lebensmittelrechtliche Konformität verantwortlich. Neben der Übernahme der Konformitätsverantwortung innerhalb der mitgelieferten Spezifikation kann diese auch durch die Delegation von verbleibender Konformitätsarbeit, mit präzisen Informationen über die noch ausstehenden Arbeiten, abgegeben werden. Ein zentraler Bestandteil der Konformitätsarbeit ist die bereits erwähnte Konformitätserklärung. Damit wird die lebensmittelrechtliche Konformität des FCM bei der spezifizierten Verwendung übernommen. Sie ist allerdings nur für FCM aus Kunststoff, Cellulose, Keramik sowie aktiver und intelligenter Materialien explizit und mit spezifizierten Inhalten gefordert. Spezifische Anforderungen an den Inhalt einer Konformitätserklärung für FCM aus beispielsweise Kunststoff sind in der Schweizer Bedarfsgegenständeverordnung (SR 817.023.21) oder der EU-Verordnung Nr. 10/2011 der Kommission über Materialien und Gegenstände aus Kunststoff, beschrieben.

**1.3 Fraktionierung**

Bei Fetten können durch fraktionierte Kristallisation unerwünschte Bestandteile entfernt oder gewünschte Triacyglycerole (TAG) angereichert werden. In der Lebensmittelindustrie wird die Fraktionierung zur Herstellung von Spezialfetten mit standardisierten Eigenschaften eingesetzt. Dazu wird das Fett so langsam gekühlt, dass die hochschmelzenden TAG möglichst selektiv kristallisieren. Dabei sollten möglichst keine Mischkristalle gebildet werden. Um eine Fraktionierung in ausreichender Schärfe, von zwei oder mehreren Bestandteilen zu erreichen, ist eine Schmelzpunktdifferenz von mindestens 10°C nötig. Der Schmelzbereich eines TAG ist von der Stellung der Fettsäuren im Molekül abhängig. Die verschiedenen Fette weisen durch ihre individuellen Mischungen an TAG sortentypische Schmelzbereiche anstatt präzise Schmelzpunkte auf. Nach der Abkühlung bzw. Fraktionierung müssen die Kristalle abgetrennt werden. Dies geschieht entweder durch eine Filtrierung oder durch Auswaschen mit einer Tensidlösung. Eine weitere Variante ist die Fraktionierung nach dem Lösen in Hexan oder einem anderen Lösungsmittel. Dies ermöglicht zwar eine schärfere Trennung, ist aber durch den höheren Aufwand des Verfahrens wirtschaftlich nur in sehr speziellen Fällen lohnenswert. Die Schmelzpunkte von einigen Fettsäuren sind in Tabelle 2 aufgelistet.

Tabelle 2: Schmelzpunkte von verschiedenen Fettsäuren und Glycerolen

| Schmelzpunkt [°C] | | | |
|---|---|---|---|
| **Fettsäure** | **1-Monoacylglycerol** | **1,3-Diacylglycerol** | **Triacylglycerol (TAG)** |
| *Laurinsäure* 40.0 | 63.0 | 56.5 | 46.5 |
| *Palmitinsäure* 62.9 | 77.0 | 72.5 | 65.5 |
| *Stearinsäure* 69.6 | 81.0 | 78.0 | 73.0 |
| *Ölsäure* 16.3 | 35.2 | 21.5 | 5.5 |
| *Elaidinsäure* 45.0 | 58.5 | 55.0 | 42.0 |
| *Linolsäure* -5.0 | 12.3 | -2.6 | -13.1 |
| *Linolensäure* -11.0 | 15.7 | -12.3 | -24.2 |

**1.4 Scale-up**

Bei der technischen Realisierung von Verfahren, bei denen chemische und mikrobiologische Stoffumwandlungen mit Stoff- und Wärmeaustausch verbunden sind, verhalten sich Versuchsanlagen im Labor- bzw. Technikumsmassstab meist anders als im abschliessenden Betriebsmassstab. So werden heterogene Grundoperationen wie beispielsweise Mischen, Sieben, Filtrieren oder Zentrifugieren als massstabsabhängige Vorgänge bezeichnet. Um solche Prozesse im Modell abbilden zu können und Aufschluss über die Auslegung und Dimensionierung einer neuen technischen Anlage zu bekommen, müssen eine Reihe wichtiger Fragen beantwortet werden. Dabei kann es sich nicht nur um eine Massstabsvergrösserung (Scale-up) sondern auch um eine Massstabsverkleinerung (Scale-down) handeln. Der Begriff Scale-up wird allerdings nicht ausschliesslich für die Massstabsvergrösserung eingesetzt, sondern beinhaltet auch die Massstabsverkleinerung. Zusammenfassend kann er deshalb als systematische Generierung von Prozesswissen, mit dem Ziel, Ideen in erfolgreiche Implementierungen zu überführen, definiert werden.

Das Generieren von Wissen involviert die Literaturrecherche, das Konsultieren von Beratern und Experten, die Durchführung von Experimenten sowie das Design und die Modellierung. Risiken können so abgeschätzt und auf ein akzeptierbares Niveau reduziert werden. Eine erfolgreiche Implementierung ist dann erreicht, wenn der Prozess im kommerziellen Massastab die Konstruktionsziele erfüllt.

### 1.4.1 Grundlagen eines Scale-Up

Bei einem Scale-Up handelt es sich um eine Modelübertragung, wobei beachtet warden muss, dass sich physikalische Prozesse bei ändernden Grössenverhältnissen der Apparaturen unterschiedlich verhalten. So müssen verfahrenstechnische, dimensionslose Kennzahlen oder physikalische Grössen, die bei einer Hochrechnung konstant bleiben, als Übertragungskriterien festgelegt werden.

Wird eine neue Technologie, wie beispielsweise die Membrantechnologie, in einem Industriezweig bereits erfolgreich genutzt, ist die Implementation der Technologie in einem neuen Bereich mit Vorsicht anzugehen. Verschiedene Arbeitsgebiete haben unterschiedliche Betriebsabläufe und ein zuverlässiger Betrieb der Technologie kann in jedem Gebiet auf eine ganz andere Weise zu erreichen sein.

Soll ein chemisch- oder physikalisch-technisches Problem durch eine mathematische Beziehung beschrieben werden und in einem beliebigen Dimensionssystem gültig sein, muss dieses dimensionshomogen formuliert werden. Eine Dimension definiert sich zusammengefasst als rein qualitative Beschreibung einer Eigenschaft bzw. Erscheinungsform. So kann jedem physikalischen Begriff eine Grössenart und jeder Grössenart wiederum eine Dimension zugeordnet werden. Die Dimension der Masse definiert sich beispielsweise als Masse (M) und die der Länge als Länge (L). Als sekundäre Grössenart wird dann beispielgebend für die Fläche die Dimension $L^2$ verwendet. Dabei kann es vorkommen, dass verschiedene Grössenarten dieselbe Dimension aufweisen. Anders als die Dimension, definiert sich eine physikalische Grösse als quantitative Beschreibung einer physikalischen Eigenschaft und setzt sich aus einem Zahlenwert und einer Masseinheit zusammen (z.B. 5kg). Da sich die Masseinheiten allerdings unterscheiden können, muss sich in einem Masseinheitssystem auf eine Masseinheit festgelegt werden. Im Scale-Up werden häufig dimensionslose Kennzahlen verwendet. Damit können scheinbar unvereinbare Versuchsergebnisse miteinander verglichen und deren Gültigkeitsbereiche deutlich vergrössert werden. Es können alle Einflussgrössen in einigen, wenigen dimensionslosen Kennzahlen, wie es beispielsweise die Reynolds- oder Eulerzahl sind, zusammengefasst werden. Ein weiteres Beispiel einer dimensionslosen Kennzahl ist der hydraulische Gradient (i), welcher in der Strömungsmechanik, genauer ausgedrückt in der Darcy-Gleichung, verwendet wird. Die Reynolds-Zahl (*Re*) wird in der Strömungslehre verwendet und zeigt das Verhältnis von Trägheits- und Zähigkeitskräften auf bzw. gibt Aufschluss über das Turbulenzverhalten von Strömungen. So weisen beispielsweise zwei verschieden grosse Rohrmembranmodule das gleiche Turbulenzverhalten auf, wenn die Reynolds-Zahl identisch ist. Damit wird deutlich, dass bei einem Scale-Up von strömungsabhängigen Prozessen die Reynolds-Zahl in die Modelübertragung einfliessen sollte, um strömungsabhängige Veränderungen des Prozesses zu vermeiden. In die Reynolds-Zahl fliessen die Dichte ($\rho$), Strömungsgeschwindigkeit (*v*), charakteristische Länge (*d*) und die dynamische Viskosität ($\eta$) ein. Die entsprechende Formel ist in Abschnitt 3.2.6 aufgeführt.

Mit einer gegebenen Transformationsregel und gleicher dimensionsloser Kennzahlen können so alle Grössen zweier Prozesse, welche durch das gleiche mathematische Model definiert sind, vom einen zum anderen übertragen werden.

### 1.4.2 Konzeptdesign im Rahmen des Scale-Up eines Membransystems

Um die benötigten Daten für ein Scale-Up zu ermitteln ist das Konzeptdesign als Ausgangspunkt jeder Prozessentwicklung unerlässlich. In diesem Abschnitt wird das Vorgehen bei einem Konzeptdesign, konkret am Beispiel der Entwicklung eines Membransystems, betrachtet.

Das Konzeptdesign dient während einer Entwicklungsphase verschiedenen Zielen. Während dem Design des Prozesskonzeptes werden Informationslücken für ein verlässliches Design ersichtlich, welche anschliessend durch Forschungsarbeit geschlossen werden sollten. So unterstützt das Konzeptdesign bereits bei der Definierung von nötigen Forschungsarbeiten.

Ein möglicher Ablauf beim Design eines Membransystems ist in Figur 4 schematisch dargestellt. Als erster Schritt soll hierbei das Ziel der Separation definiert werden. Dazu müssen die Membrancharakteristiken (Material, Membranart, Polarität) sowie die Art wie die Membran genutzt werden soll (Modul Typ, Betriebsmodus, System-Design) in Betracht gezogen werden. Die Polarität und die Porengrösse der entsprechenden Membranen können hierbei eine wichtige Rolle spielen (siehe auch Tabelle 1). Figur 4 zeigt eine vorgeschlagene Herangehensweise für das Design eines Membransystems. Nach dem Schritt vom Systemdesign wird das System evaluiert und so das Systemdesign wieder überarbeitet, bis das System in der endgültigen Anwendung implementiert werden kann.

Die Auswahl der richtigen Membran und des passenden Membransystems ist für eine erfolgreiche Implementierung einer neuen Anwendung essentiell, aber noch nicht ausreichend. Um die Eigenschaften und Leistungen des Membranprozesses sowie die Systemparameter über die Zeit zu verstehen, müssen Versuche im Labormassstab sowie an einer Pilotanlage durchgeführt werden. So kann die Membranfiltration charakterisiert und optimiert werden, bis eine Implementierung in der angestrebten Anwendung möglich ist.

Im nachfolgenden Abschnitt werden die wichtigsten Punkte und Schritte, die im Verlauf eines erfolgreichen Membransystem-Designs beachtet werden sollten, aufgezeigt und erläutert.

### 1.4.2.1 Membranselektion und Bestimmung der Systemparameter

Dieser Abschnitt beleuchtet die in Figur 4 ersichtlichen Schritte der Membranselektion, Bestimmung der Systemparameter und die Durchführung von Modultests.

Für Versuche im Labormassstab stehen verschiedenste Testanlagen zur Auswahl. Eine davon ist die TestUnit M20 von AlfaLaval, welche Versuche sowohl mit Flachmembranen als auch mit Spiralwickelmodulen ermöglicht. Die Platten der Anlage ermöglichen separierte Permeatausgänge, was die Validierung von mehreren Membranen gleichzeitig ermöglicht. Ferner können mit dieser Testanlage grössere Mengen an Mustern zur Weiterverarbeitung und Analyse bereitgestellt werden. Die Aufstellung einer Massenbilanz während den Laborversuchen wird empfohlen, um unerwartete Veränderungen des Produktes während der Membranfiltration zu beurteilen. So kann beispielsweise die Zunahme der Konzentration auf der Seite des Inputs durch eine einfache Massenbilanz ermittelt werden.

Nach erfolgreicher Durchführung erster Laborversuche können weitere Versuche an Pilotanlagen durchgeführt werden, um die optimalen Prozessbedingungen zu ermitteln. In Pilotanlagen können Rohr- oder Spiralwickelmodule mit unterschiedlichen Massen parallel oder in Serie getestet werden. Um den TMP zu bestimmen werden vor und nach dem Modul Drucksensoren benötigt. Neben der Aufzeichung des Druckes, muss auch die Temperatur überwacht werden. Diese kann die Viskosität des zu filtrierenden Mediums und somit auch die Filtration beeinflussen. Pilotversuche werden zudem zur Ermittlung der Abhängigkeit des Permeatflux von der Konzentration im Retentat und der Batch-zu-Batch Reproduzierbarkeit durchgeführt. Weitere wichtige Parameter, welche während den Versuchen an einer Pilotanlage ermittelt werden sollten, sind:

- Bestimmung der Filtrationseigenschaften als Funktion der Prozessparameter (Temperatur, Druck, Volumenstrom)
- Bestimmung der Filtrationseigenschaften als Funktion der Konzentration im Kreislauf
- Auswahl der Konfiguration der Membranelemente (z.B. Abstandshalter)

Durch möglichst lange Laufzeiten können, während den Versuchen an der Pilotanlage, Erkenntnisse über das Fouling und die Filterleistung im Verlauf der Zeit gewonnen werden.

### 1.4.2.2 Systemdesign einer membranbasierten Filteranlage

Auf der Basis der Daten aus den Labor- und Pilotversuchen kann in der Designphase ein Membransystem im gewünschten Massstab entwickelt werden. Dafür sollten folgende Parameter bestimmt bzw. berechnet worden sein.

- Massenbilanz: Die Permeat- und Retentatdurchflussmengen ermöglichen, zusammen mit dem Rückhaltefaktor der Membran, die Berechnung der relevanten Substanzen (z.B. TPA) in den Permeat- und Retentatströmen.
- Prozessparameter: Druck, Temperatur, Permeatvolumenstrom und Rückhaltefaktor (als Funktion des Drucks, der Temperatur und der Konzentration im Retentat).
- Systemdesign: Funktionsweise, Gesamtzahl der Elemente, Gehäuse und Rahmen, Anordnung der Elemente in den Gehäusen sowie Konfiguration und Inszenierung.

Weitere Parameter wie Betriebsart, benötigte Membranoberfläche, Design und Konfiguration der Membran-Abstandhalter sowie die Anzahl der benötigten Elemente im Gehäuse sind zusätzlich als Grundlage der Designphase zu bestimmen.

Ein Membransystem kann mit einer einzelnen oder mehreren Betriebsstufen konzipiert sein. Bei geringem Einfluss der Feedkonzentration auf die Filtrationsleistung reicht ein einzelner Durchgang meist aus. Mehrere Betriebsstufen sind komplexer und kostenaufwendiger, ermöglichen aber eine effiziente Filtration bei grossem Einfluss der Feedkonzentration auf die Filtrationsleistung. Ist das Ziel der Filtration eine Aufkonzentrierung des Retentates und der Einfluss der Feedkonzentration geringfügig, werden gewöhnlich Batchsysteme eingesetzt.

Um ein Membransystem zu kontrollieren, können allgemein drei Arten in Betracht gezogen werden:

- Konstanter Konzentrationsfaktor
- Konstanter Druck
- Konstanter Permeatdurchfluss

Die Auswahl der geeigneten Kontrollart hängt von der Charakteristik des Feeds, dem Einfluss der Konzentrationen und dem Systemdruck bei Verschmutzungen ab. Bei Verwendung des konstanten Konzentrationsfaktors wird das Verhältnis zwischen Konzentration im Permeat und Konzentration im Retentat konstant gehalten. Der Konzentratdurchfluss wird kontinuierlich über ein Regelventil eingestellt, welches den Messwert vom Permeatdurchflussmesser erhält. Sobald die Membran verschmutzt ist, erhöht sich der Systemdruck, um einen konstanten Permeat- und Retentatfluss aufrechtzuerhalten. Das System wird beim Erreichen eines bestimmten Drucks gestoppt, gereinigt und neu gestartet.

Die am häufigsten genutzte Art das System zu kontrollieren ist der konstante Druck. Die Messungen und Kontrollinstrumente sind simpel und kostengünstig. Vermehrt warden Prozesse unter dem kritischen Maximaldruck der Membran ausgelegt, was zu einem verminderten Fouling führt, grössere Abstände zwischen den Reinigungen und eine längere Lebensdauer der Membran zulässt. Als dritte Möglichkeit zur Kontrolle des Membransystems wird, typischerweise in Anwendungen der industriellen Biotechnologie, der konstante Permeatdurchfluss verwendet. Dabei wird das Permeat bei einer konstanten Geschwindigkeit durch ein Regelventil oder eine Pumpe entfernt. Der Systemdruck steigt mit der Zeit an, um die Senkung des Permeatflux durch Konzentrationspolarisation und Fouling auszugleichen. In diesem Modus werden sowohl der Konzentrationsfaktor als auch der Systemdruck im Laufe der Zeit erhöht. Bei kontinuierlichen Systemen kann das dazu führen, dass eine chemische Reinigung über einen längeren Zeitraum nicht erforderlich ist.

Einer der Schlüsselfaktoren eines jeden Membransystems ist die Membranfläche. Die benötigte Membranfläche, kann je nach gewünschter Trennung berechnet werden. Die Lebensdauer einer Membran kann, je nach Anwendung und Material, bis zu sechs Jahre betragen. Bei Anwendungen mit Öl liegt die Lebensdauer zwischen sechs Monaten und drei Jahren und kann durch Belastungstests und Erfahrungswerten des Herstellers bestimmt werden. Diese Werte sollten zwingend in die Kostenrechnung und die ökonomische Evaluierung des Systems miteinfliessen. Für eine Einschätzung der Kosten eines Membransystems, sind neben der Lebensdauer folgende Faktoren zu beachten:

- Erstinvestitionskosten
- Betriebskosten
- Kosten für Membranaustausch
- Reinigungskosten (inklusive Reinigungsmittel und -aufwand)
- Wartungskosten
- Abschreibungen

**1.4.2.3 Risikoanalyse**

Bei einem Systemdesign eines neuen Prozesses wird eine Risikoanalyse empfohlen. Da nicht alle relevanten Informationen zur Verfügung stehen, stellt sich dies oft als schwierig dar. Fehlt beispielsweise eine spezifische Information, kann diese als «unbekannt» definiert werden. Es kommt jedoch häufig vor, dass auch das Wissen des Unwissens nicht vorhanden ist. So wird unter spezifischer Wissenslücke und unbekannter Wissenslücken unterschieden. Aus diesem Grund sollten Risikoanalysen an verschiedenen Punkten eines Innovationsprozesses durchgeführt werden. Nach jeder Risikoanalyse können Wissenslücken geschlossen und neue Risikofaktoren identifiziert werden. So wird die Risikobewertung stetig verbessert und Gegenmassnahmen können bei zu hohem Risiko eingeleitet werden. Risiken können in folgende Risikodimensionen unterteilt werden:

- Sicherheit
- Gesundheit
- Umwelt
- Soziales
- Wirtschaft
- Technik

Bezogen auf die technische Risikodimension in der Forschungs- und Entwicklungsphase können diese Risikofaktoren nützlich sein:

- Anzahl an neuen Prozessschritten
- Fehlende Kenntnissen über die Zusammensetzung des Produktstromes
- Vorkommen von Strömen die Feststoffe enthalten

Unter der Anzahl an neuen Prozessschritten werden Prozessschritte verstanden, welche in dieser spezifischen Applikation noch nie im kommerziellen Massstab angewendet wurden. Dazu gehören auch Prozessschritte, die in anderen Bereichen bereits etabliert sind. Ein weiterer Risikofaktor ist das Wissen über den Produktstrom und dessen Zusammensetzung. Dieses ist für ein erfolgreiches Scale-Up wichtig, da mögliche Wechselwirkungen der Oberflächen mit dem Produkt zu Kontaminationen führen können und eine falsche Materialauswahl zu schneller Korrosion, Verschmutzung sowie Schaumbildung führen kann. Als dritter Risikofaktor wurden Feststoffe im Produktstrom definiert. Ströme, welche Feststoffe enthalten, haben die Tendenz zu verkleben, sich in toten Ecken abzulagern und unregelmässig zu fliessen. Zu diesem Faktor gehören allerdings auch Feststoffe wie Polymerisationsprodukte, welche im Prozess gebildet werden. Neben den erwähnten drei Hauptrisikofaktoren, sind meist rotierende oder bewegliche Teile wie Pumpen, Ventile, Kompressoren oder Förderanlagent, die einen Geräteausfall zu verschulden haben.

**1.5 Analytik**

Die traditionelle Beurteilung von Frittierölen wurde anhand von Veränderungen von Farbe, Geruch, Viskosität (Schäumen) und vom Rauchpunkt vorgenommen. Um eine objektivere Charakterisierung durchführen zu können, wurden analytische Methoden entwickelt um verschiedene Abbauprodukte zu quantifizieren. In den meisten Ländern wird die Methode zur Bestimmung der TPA als Beurteilungskriterium anerkannt und deren Grenzwerte sind gesetzlich festgelegt. Diese liegen in der Schweiz bei 27% und in der EU bei 24%. Die TPA erfassen alle Verbindungen, die polarer sind als die ursprünglichen Triglyceride und während dem Fettabbau entstehen. Die dabei erfassten Abbauprodukte sind hauptsächlich oxidierte und oligomerisierte Triglyceride, freie Fettsäuren (FFS), Mono- und Diglyceride, oxidierte und oligomerisierte Sterole und Abbauprodukte von Antioxidantien und anderen Bestandteilen des Öls und Lebensmittels. Der TPA allein kann jedoch keine endgültige Aussage über die Qualität des Frittieröles liefern. Deshalb empfiehlt die deutsche Gesellschaft für Fettwissenschaften weitere Parameter bzw. Verderbskennzahlen wie polymere Triglyceride (PTG), Peroxidzahl (PZ), Ansidinzahl (AnZ), Säurezahl (SZ) und die freien Fettsäuren (FFS) zu analysieren.

Um den sensorischen Verderb von Frittieröl abzuschätzen und um die Frittierölqualität nicht mit einem einzelnen Parameter bestimmen zu müssen, kann der DEGLEV Wert (level of degradation) verwendet werden. Dieser wurde durch eine Gleichung der linearen Regression entwickelt ($y$ = 117 - 8 $x$ $SZ$ - 3 $x$ $TPA$). Er soll dazu dienen den Zeitpunkt, an dem ein Frittieröl sensorisch verdorben ist und entsorgt werden muss, analytisch zu bestimmen. Diese Methode ist unabhängig von der Ölzusammensetzung, dem Frittiergut und den Frittierbedingungen. Grundsätzlich gilt, dass das Frittieröl entsorgt werden soll, wenn der DEGLEV Wert unter 50 liegt.

Es gibt verschiedene Methoden um die Verderbskennzahlen zu messen. Analysen die eine hohe Genauigkeit verlangen, sollten mit einem Standardverfahren der DGF oder der amerikanischen Ölchemiker Gesellschaft (AOCS) durchgeführt werden. Dazu zählt auch die Fourier Tranfsorm Nahinfrarotspektroskopie (FT-NIR) Methode.

**1.5.1 Fourier Transform Nahinfrarotspektroskopie (FT-NIR)**

Mit der FT-NIR Methode können in der Lebensmittel- und Getränkeindustrie qualitative und quantitative nichtdestruktive Analysen durchgeführt werden. Sie ermöglicht zeitsparende Messungen verschiedener Parameter in einem einzelnen Analysedurchlauf ohne Chemikalien oder Lösungsmittel. Die NIR Spektroskopie gehört zu den Methoden der Molekülspektroskopie, welche die Wechselwirkung von Materie mit Licht im Nahinfrarotbereich des elektromagnetischen Spektrums nutzt, um qualitative und quantitative Aussagen über die Probe zu ermöglichen. Die Anregung der Moleküle durch Strahlung führt zu Molekülschwingungen, die im Nah-Infrarotbereich (780-2500 nm) detektiert werden können. Bei den schwingenden Molekülen handelt es sich hauptsächlich um Hydroxy-, Amino-, Methin- und Carbonyl- Gruppen. Als Basis zur Verwendung der NIR Methode dient das Lambert-Beersche Gesetz. Dieses besagt, dass sich die Absorption an einer Wellenlänge proportional zur Konzentration des jeweiligen Stoffes verhält. Die auf dem Markt vielzählig zu erhaltenden NIRSpektrometer können sich beispielsweise in der Art der Lichterzeugung unterscheiden. Sie lassen sich grundsätzlich in die Gruppen der Dioden-, Filter-, Prisma-, Gitter-, AOTF- und Fourier Transform- Spektrometer unterteilen. Je nach Einsatzgebiet kann sich neben dem Spektrometer auch die Art der Probenpräsentation unterscheiden. Für Feststoffe wird üblicherweise das Prinzip der Reflexion genutzt, wobei bei Flüssigkeiten, je nach Eigenschaft, die Transmission oder Transflexion zum Einsatz kommt.

Grundlage für eine nutzbare NIR-Analyse sind Kalibrationsmodelle. Zur Übersetzung der gemessenen spektralen Daten in chemische Informationen sind eine Vielzahl von Regressionsverfahren und Datentransformationen verfügbar. Diese werden unter dem Begriff «Chemometrie» zusammengefasst. Durch die Verwendung von standardisierten, chemischen Methoden werden Referenzmessungen durchgeführt, die in ein Kalibrationsmodell überführt werden können. Für jeden Parameter, der gemessen werden soll, wird eine Kalibration benötigt. Das heisst wiederum auch, dass die Genauigkeit der NIR Methoden immer nur so exakt sein können, wie die Referenzanalytik, welche für das Kalibrationsmodell verwendet wurde. Für jede Messung kann ein Residual angegeben werden. Da der Residual grundsätzlich die Abweichung zwischen dem rekonstruierten Spektrum und dem Original-Spektrum angibt, wird dieser auch als Spektrums-Rekonstruktionswert bezeichnet. Zu Beginn werden die Spektren einer Hauptkomponentenanalyse (PCA) unterzogen. Dabei werden die Spektren zu Punkten in einem mehrdimensionalen System umgerechnet. Diese Rechnung kann auch rückgängig gemacht werden und die Punkte können wieder zurück in Spektren gerechnet werden. Die so entstandenen Spektren werden rekonstruierte Spektren genannt. Dieser Residual gibt ausschliesslich an, wie sehr sich die gemessene Probe von der Probe von den Kalibrationsproben unterscheidet und gibt keine Informationen über die Messgenauigkeit.

### 1.5.2 Farbmessung

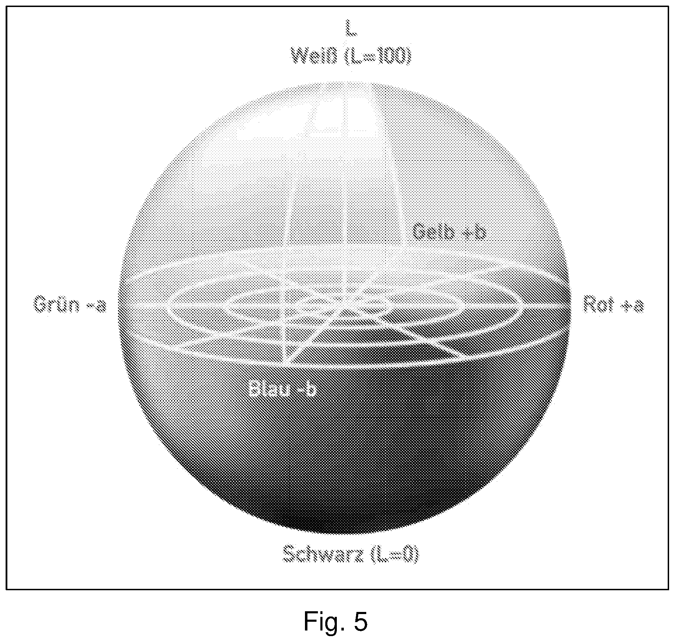

Die menschliche Wahrnehmung von Farbe ist oft sehr subjektiv. Dies führt zu Problemen bei der Festlegung und Kommunikation von Produktfarben und verunmöglicht eine einheitliche Bewertung. Die Wahrnehmung der Farbe hängt von der Art der Lichtquelle, der Objektgrösse, der Betrachtung und dem Objekthintergrund ab. Um die Farbe objektiv beurteilen zu können, kann sie in die drei Attribute unterteilt werden: Farbton, Helligkeit und Sättigung. Diese können mit verschiedenen Systemen bestimmt werden. Das am weitest verbreitete System ist das L*a*b-System, auch CIELAB-System genannt. Der Farbraum wird durch die Helligkeit L* und den Koordinaten a* und b* beschrieben. In Figur 5 ist ein solcher dreidimensionaler Farbkörper abgebildet. Der L*a*b*-Farbraum ermöglicht es zudem, geringe Farbunterschiede mit einem einzelnen Wert (E*ab) anzugeben. Dieser gibt jedoch nur den Betrag der Farbdifferenz an und nicht die Richtung im L*a*b*-System. Figur 5 zeigt ein Modell des CIELAB-Farbraums, das alle wahrnehmbaren Farben enthält und unabhängig von bestimmten Medien oder Geräten ist.

### 1.5.3 Sensorische Prüferverfahren

Die sensorische Beurteilung von Lebensmitteln nach Aussehen, Geruch, Geschmack und Textur ist für die Bewertung eines neuen Prozesses neben den analytischen Methoden nicht zu vernachlässigen. Die sensorischen Eigenschaften von frittierten Lebensmittel hängen stark vom verwendeten Öl ab. Aus diesem Grund ist eine sensorische Beurteilung der Endprodukte für die Qualitätsbestimmung des Frittieröles empfehlenswert. Im folgenden Abschnitt werden relevante sensorische Methoden zur Qualitätskontrolle von Produkten eines neuen Verfahrens aufgezeigt.

### 1.5.3.1 Auswahl der Methoden zur Qualitätskontrolle

In der Qualitätskontrolle werden sensorischen Tests besondere Anforderungen gestellt. So sollten die Tests schnell und einfach durchzuführen sein, die Prüfergebnisse ohne komplizierte Auswahlverfahren zu Qualitätsbeurteilungen und Entscheidungen führen sowie die Beurteilungskriterien auf sensorischen Spezifikationen beruhen, damit die Ergebnisse objektiv nachvollziehbar sind. Diese Anforderungen werden vom In-Out Test am besten erfüllt.
Die Profilprüfung ist eine sensorische Methode, welche sehr detaillierte und objektivierte Beurteilungen ermöglicht. Die Bewertung und Qualitätsbeurteilung sind bei dieser Methode entkoppelt. Die trainierten Prüfer bestimmen dabei die Intensitäten von Attributen entsprechend dem Vorgehen einer Profilprüfung.
Die klassischen Unterschiedstests (Duo, Duo-Trio, Dreiecktests) sind für die Qualitätskontrolle weniger geeignet, da diese eher für die Erkennung von geringen Unterschieden konzipiert sind.

### 1.5.3.2 In-Out Test

In produzierenden Betrieben hat sich der In-Out Test, als sensorisches Standardverfahren zur Qualitätskontrolle, vermehrt durchgesetzt. Die angestrebte sensorische Qualität und die zulässigen Abweichungen müssen für eine In-Out-Beurteilung vorgängig mittels Attributen und Intensitäten spezifiziert werden.
Es kann zwischen folgenden drei Varianten unterschieden werden, welche sich in der steigenden Komplexität unterscheiden:

- Kategorischer In-Out-Test mit einfacher In-Out Beurteilung
- Skalierter In-Out-Test mit abgestufter In-Out Beurteilung
- Deskriptiver In-Out-Test mit abgestufter In-Out Beurteilung und Kurzprofil

Bei Lagertests sowie für die Startphase eines neuen Produktes oder einer neuen Linie werden gewöhnlich Qualitätsabweichungen erwartet. In diesen Fällen bietet sich der deskriptive In-Out Test an. Der In-Out Entscheidung wird hier eine vereinfachte Profilprüfung angehängt und so quantitative Informationen generiert, die statistisch auswertbar sind. Für diesen In-Out-Test müssen die Prüfer geschult werden, um Attribute vollständig zu verstehen und mit den Intensitäten bewerten zu können. Die Profilprüfung ist in der Norm DIN 10967-2 beschrieben.

**2 Material**

**2.1 Allgemein genutzte Materialien**

In der Tabelle 3 werden Materialien aufgelistet, welche für verschiedenste Anwendungen und Versuche benötigt oder allgemein genutzt werden.

Tabelle 3: Allgemein genutzte Materialien während den Versuchen

| *Materialien* | *Spezifische Angaben* |
|---|---|
| *Pommes Frites* | Pistor: Art. 5586 TK Golden Frites Normalschnitt Karton ä 10 Kg von Frigemo |
| *Chicken Nuggets* | 30757TK Poulet Nuggets roh BIANCHI CH Schenkelfleisch geformt paniert $4 \times$ 2.5 kg |
| *Probenbehälter* | CELLSTAR® TUBES 15ml |
| | Weithalsflaschen 50ml, HuberLab |
| *Pasteur Pipetten* | Transferpipetten BIOSIGMA Stab-Volumen 3m1 |
| *Reinigungsmittel* | Hellmanex® III von Hellma |
| *Labormaterial* | Bechergläser, Messzylinder, Erlenmeyerkolben, |
| *Behälter* | 15 liter Kanister für Öl |
| *Waage* | Mettler Type PM 6000 Seriennr.: J55737 |
| *Küchenmaterial* | Schüsseln, Kelle, Messbecher, Löffel |
| *Werkzeug* | Verschiedenstes Standardwerkzeug |

**2.2 Verwendete Öle**

Für die Versuche wird, wenn nicht anders beschrieben, HOLL-Rapsöl verwendet. Die SV Group stellt gebrauchtes HOLL-Rapsöl aus den Kantinen zu Verfügung und liefert zusätzlich das frische Frittieröl von Pistor (Art. Nr. 2643). Tabelle 4 zeigt die in der Arbeit verwendeten Öl-Bezeichnungen und deren detaillierte Beschreibung.

| *Öl-Bezeichnung* | *Spezifische Angaben* |
|---|---|
| *Frisch* | HOLL Rapsöl, Bibox, Suisse Garantie, Pistor (Art. Nr. 2643) |
| *Gebraucht* | HOLL Rapsöl, gebraucht in Mensa Vista (TPA : 17%) |
| *Ranzigkeitsstandard* | Virgin Olive Oil: Ranzig Median: 8.65 von International Olive Council in 28002 Madrid |

**3 Methode**

Die Versuche werden in Anlehnung an den in Absatz 2.4.2 beschriebenen Ablauf zur Erstellung eines Membransystems aufgebaut. Der erste Schritt der Zielsetzung sowie eine erste Membranselektion wurden bereits in einer früheren Phase des Projektes OLFO durchgeführt. Die hier beschriebenen Arbeitsschritte und Versuche dienen zur akkurateren Membranselektion sowie zur Bestimmung der Systemparameter. Weiter werden in den Absätzen 4.5 sowie 4.6 Arbeiten zur Entwicklung des Systemdesign durchgeführt. Eine erste Evaluierung des entwickelten Systemdesigns bzw. Des Verfahrensentwurfs wird in Absatz 4.7 und 4.8 durchgeführt. Die Implementierung wird zu einem späteren Zeitpunkt im Projekt stattfinden und wird in dieser Arbeit nicht behandelt.

**3.1 Gerätschaften**

Der folgende Absatz führt die verwendeten Geräte sowie Anlagen auf und beschreibt allfällige vorgenommene Modifikationen. Die Analysegeräte werden in diesem Absatz nicht berücksichtigt und werden im Abschnitt 3.2 gesondert beschrieben.

### 3.1.1 Membranfiltrationsanlage

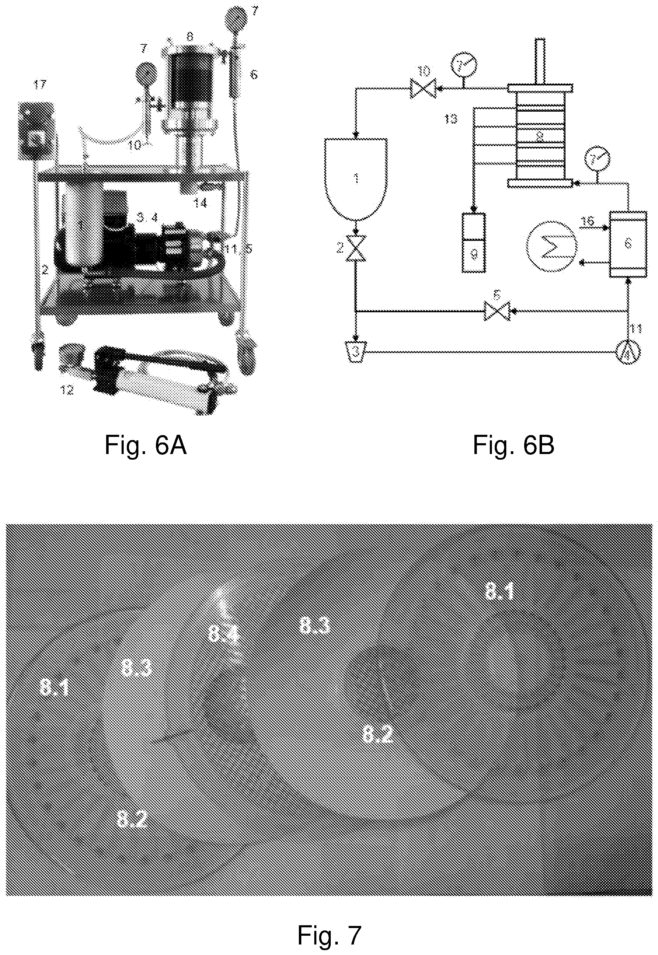

Für die Membranfiltrationen wird die, in Figuren 6A und 6B dargestellte, Testanlage TestUnit M20 von Alfa Laval verwendet. Diese ermöglicht verschiedenste Membranen in einem Plattenmodul testen zu können. Die Testanlage besteht aus Tank 1, Ventil 2, Kontrollpumpe 4, Sicherheitsmembran 3 der Kontrollpumpe, Rückschlagventil 5 der Kontrollpumpe, Würmetauschmantel 6, Manometer 7, Plattenmodul 8, Auffangbehälter 9 für das Permeat (nicht gezeigt), Manometerventil 10, Schraube 11 für Entlüftung der Kolbenpumpe, Hydraulikpumpe 12, Permeatableitungen 13 beim Plattenmodul, Druckventil 14, Wärmetauscher 15, Verbindungsschläuche 16 zwischen Wärmetauscher und Wärmemantel und manuelle Bedienung 17 zum Starten/Stoppen des Systems und zum Einstellen der Umdrehungszahl der Kolbenpumpe.

In dieser Testanlage können bis zu 20 Membranen gleichzeitig eingespannt werden. Der Aufbau der einzelnen Plattenmodulkomponenten ist in Figur 7 abgebildet. Die benötigten Gewinderinge sind vom Typ DSS Neck Ring M20 und werden von Alfa Laval vertrieben. Die Plattenmodulkomponenten bestehen aus Distanzplatte 8.1, Gewindering 8.2, Membran 8.3 und Stützplatte 8.4.

### 3.1.1.1 Anpassungen

Um den verschiedensten Bedürfnissen während den Versuchen gerecht zu werden und einheitliche Prozessbedingungen einhalten zu können, werden an der Testanlage verschiedenen Anpassungen vorgenommen. Um die Öltemperaturen von bis zu 90°C zu erreichen und diese konstant halten zu können, wird ein speziell angefertigter Tauchsieder der Firma Backer (230V / 7000W) mit einem Temperaturregler (Tecon Control von Roth + Co. AG, Seriennummer: 5-492) in den Feedtank eingebaut. Da die Standardtestanlage keinen Deckel für den Feedtank enthält, wird ein Silikondeckel für die Abdeckung zugeschnitten. Der Feedtank wird zudem mit 5mm selbstklebender Thermoisolation isoliert. Für den Einsatz von Keramikmembranen wird ein zusätzliches Filtrationsgehäuse (M1-10×500-PN25-TC-SO von Inopor) eingesetzt. Dieses ist mit Tri-Clamp 1/2" Anschlüssen (DIN32676 Reihe C) ausgestattet und kann anstelle des Plattenmoduls (Nummer 8 in Figuren 6A und 6B) an die TestUnit M20 angeschlossen werden.

### 3.1.1.2 Verwendete Membranen

Es werden folgende Membranen auf der TestUnit M20 getestet: PERVAP 4060, GMT oNF-1 und GMT oNF-3. Zudem wird eine Keramikmembran (TiO2 5nm, hydrophob) der Firma Inopor, für den in Abschnitt 3.4.1 beschriebenen Versuch, eingesetzt.

### 3.1.2 Contherm

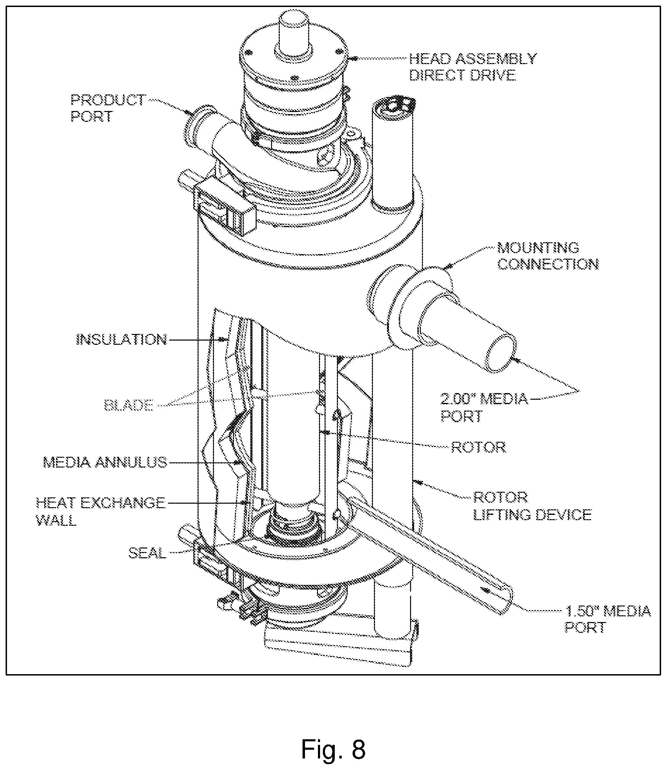

Für die Fraktionierung wird der Schabwärmetauscher Contherm der Firma Alfa Laval eingesetzt. Ein Schema des Wärmetauschers mit einem Füllvolumen von 7.6 Liter und vier Schabern ist in Figur 8ersichtlich.

Für den Versuch des kombinierten Verfahrens in Abschnitt 3.4.1 werden zusätzlich folgende Materialien und Geräte verwendet:

- Schlauchquetschpumpe (Watson Marlow von SKAN AG Basel)
- Schlauch (GARDENA Profi Plus, Gummi)
- Kältemaschine (Huber Unistat 430, Seriennr.: 263312/16)

### 3.1.3 Almemo Temperatur Messsystem

Für die Temperatur- bzw. Luftfeuchtigkeitsmessungen wird ein Almemo Messsystem mit den entsprechenden Sensoren verwendet. In Tabelle 5 sind die eingesetzten Elemente im Detail aufgeführt. Weitere Informationen sind im Herstellerkatalog von Ahlborn zu finden.

Tabelle 5: Detailangaben zu den Elementen des ALMEMO® Messsystems

| Gerät | Spezifische Angaben |
|---|---|
| *Datenübertragungsmodule* | Module zur Datenübertragung ALMEMO 8590-9 Seriennr. T12100294, AHLBORN |
| *Laptop* | Dell Latitude E 6430 mit Windows 10 Enterprise mit ALMEMO AMR WIN CONTROL Software und Microsoft Excel |

(fortgesetzt)

| Gerät | Spezifische Angaben |
|---|---|
| Bluetooth Sender/Empfänger | Bluetooth Empfänger, Funkmodul ZA 1719-BTX1XS, ALMEMO, AHLBORN |
| | Bluetooth Sender, Funkmodul ZA 1719-BTX1XS, ALMEMO, AHLBORN |
| Temperatursensoren und Stecker | NiCr-Ni Typ K (ZA 9020-FS) |
| | Pt100-Kabelfühler |
| | NiCr-Ni-Thermodraht T 190-0 |
| | NiCr-Ni Typ K (R2E4) |
| | NiCr-Ni-Fühler FTA 025 P |
| | **NiCr-Ni** Typ K (ZA 9020-FS), |
| Digitaler Fühler | Für Luftfeuchte, Temperatur, Luftdruck FHAD 46-C0, freiliegendes Sensorelement, mit ALMEMO® D6-Stecker. |

### 3.1.4 Prototyp Fritteuse

Die für den Prototypen verwendeten Materialien sind in der Tabelle 6 aufgelistet.

Tabelle 6: Verwendete Materialien für die Verbindung der Fritteuse mit der TestUnit M20

| Gerät | Spezifische Angaben |
|---|---|
| Fritteuse | F2-400 von Gastrofrit (modifiziert und flexibel auf einem offenen Gestell montiert) |
| Pumpe | G300XK/DC24 Zahnradpumpe von Nanjing Ouruike Pump & Valve Co., Ltd., mit Spannungsregler geregelt |
| Spanungsregler | HQ Power, Model: PS1503SB, Input: 230V AC 50 Hz, Output: 0-15V DC; 0-3 AMP |
| Füllstandsensor | Ultraschallsensor UPS 200 TVPA 24 C, Messbereich 200mm, Schaltausgang PNP, Teachin, Bauform M12, Steckerabgang M12, 4-polig Produkt: SNT Sensortechnik AG |
| CPU Steuerung | Mitsubishi Alpha Power, AL-10MR-D, 24-1.5, AC 100-240V; DC24V 1.5A mit Alpha Software |
| Schlauch | PTFE-Schlauch 010mm von Maagtechnic (Art. Nr. 10075784) |
| | Silikon Druckschlauch Unisil W Werkstoff: VMQ, glatt, von Angst & Pfister (Art. Nr. 06.5331.7010) |
| Schlauchverbinder | Micro-Schlauchverbinder aus PP Y-Form, für Schläuche mit Innendurchmesser. = 1,5mm von Huberlab (3.3210.66) |
| Magnetventil | Tri-Matic, Model: NTE-20S, Size: DN15-KT2, 230V AC, 90 $\pm$ 10mA Seriennummer: CH548251 |
| Tiefenfilter | 3mm Cellulose Filterpad von Filtrox |
| Diverses | Verbindungstücke aus Edelstahl, Schlauchbriden, Kabelbinder, Klebeband |

Als Grundlage des Prototyps dient eine F2-400 Fritteuse der Firma Gastrofrit. Diese wird in einem offenen Gestell montiert, mit den nötigen Anschlüssen erweitert und von Gastrofrit der Zürcher Hochschule für Angewandte Wissenschaften (ZHAW) für weitere Anpassungen bereitgestellt.

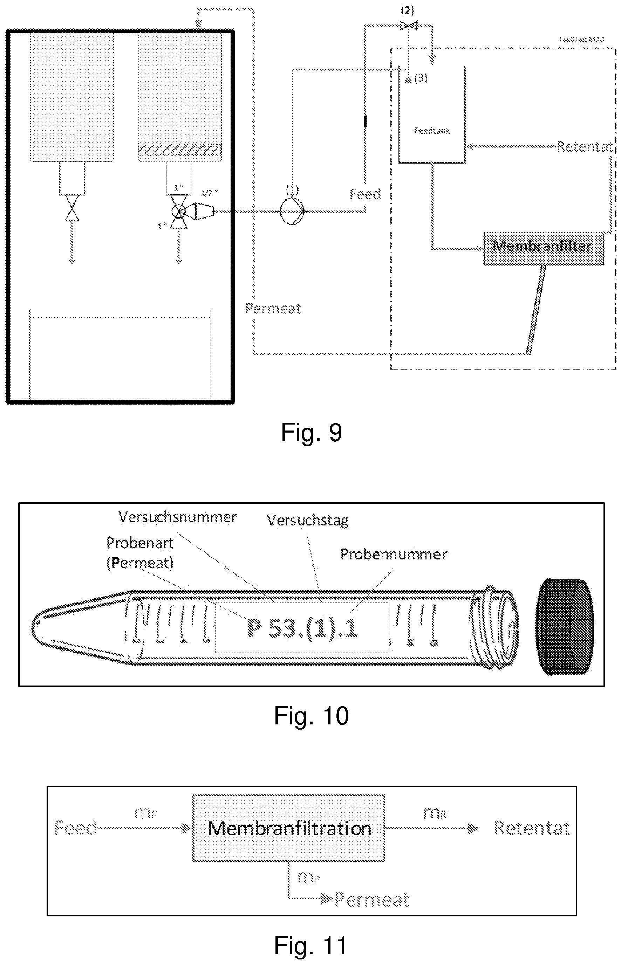

Die F2-400 besteht aus zwei Frittierbecken. Davon wird ein Becken als Standardfritteuse verwendet und nicht verändert. Das zweite Becken dient als Prototyp-Fritteuse und wird wie in Figur 9 dargestellt, mit der angepassten Membrantestanlage M20 (Siehe Abschnitt 3.1.1) verbunden. Im Frittierbecken des Prototyps befindet sich eine Halterung aus Edelstahl in welches ein Filterpad eingesetzt wird. Die Verbindungen zwischen der Fritteuse und der TestUnit M20 werden mit den in der Tabelle 6 aufgeführten Polytetrafluorethylen (PTFE) Schläuchen hergestellt.

Die Pumpe (1) sowie das Magnetventil (2) werden über einen Füllstandsensor (3) und eine zentrale Verarbeitungseinheit (CPU-Steuerung) gesteuert. Wird ein definierter Füllstand für mindestens fünf Sekunden unterschritten, wird ein 24V Signal vom Füllstandsensor (3) an die Alpha Steuerung gesendet. Das Signal fällt wieder aus, sobald die ebenfalls definierte Maximalhöhe im Tank erreicht wird. Die Steuerung ist so programmiert, dass sich das Magnetventil (2) bei aktivem Signal öffnet und die Pumpe (1) aktiviert wird. Die Programmierung sieht nach Verlust des Signals eine Verzögerung von 20 Sekunden vor, bevor die Pumpe wieder deaktiviert und das Ventil geschlossen wird. Somit liegt der Füllstand nach der Befüllung leicht über dem eingestellten maximalen Level.

### 3.2 Analytik

Um die Verderbskennzahlen zu quantifizieren und das Frittieröl zu beurteilen sind verschieden Analysemethoden erforderlich. Dieser Abschnitt geht auf alle verwendeten Analysemethoden ein und beschreibt die dafür verwendeten Analysegeräte.

### 3.2.1 Probenzug und -beschriftung

Die Frittierölproben werden je nach benötigter Menge in Tubes à 15ml oder Weithalsflaschen à 50ml abgefüllt und mit der Versuchsnummer beschriftet. Die Proben werden bis zur weiteren Verwendung lichtgeschützt und bei 5°C gelagert. Die Beschriftung der Probenbehälter beinhaltet, wie in Figur 10 beispielhaft dargestellt, folgende Angaben: Probenart (Permeat (P), Retentat (R), Feed bzw. Fritteuse (F) oder Standard (S)), Versuchsnummer und Probennummer. In bestimmten Versuchen, welche über mehrere Tage laufen, wird zudem der Versuchstag vermerkt.

### 3.2.2 FT-NIR

Zur Bestimmung der Verderbskennzahlen wird ein FT-NIR Gerät der Firma Büchi AG, Switzerland verwendet. Die verwendete Methode und Kalibration stammt von Torsten Welles, vom chemischen und Veterinäruntersuchungsamt Stuttgart.

Die Tabelle 7 listet alle Materialien auf, welche für die NIR Messungen benötigt werden.

Tabelle 7: Verwendete Materialien zur Messung der Verderbskennzahlen mit FT-NIR

| Materialien | Spezifische Angaben |
|---|---|
| NIR Gerät | NIRFlex Liquids N-500 SN:1000272626; von: Büchi Labortechnik AG |
| Laptop | Dell Latitude E 6430 mit Windows 10 Enterprise |
| Büchi Software | NIR Software Suite NIRWare 1.4 |
| Küvetten | Hellma Analytics High Precision Light Path 2mm Cell SN: 100-2-20 |
| Ethanol | 70% in Spritzflasche |
| Sonstiges | Einwegtücher, Tube-Ständer |

Für das Projekt wird zudem eine Applikation erstellt, um die Analyseeinstellungen auf die Bedürfnisse des Projektes anzupassen. Informationen zu der Erstellung einer Applikation sind in den NIR-Schulungsunterlagen ersichtlich. Die FT-NIR Analysen werden, wie in der Standardarbeitsanweisung (SOP) des Analysegeräts beschrieben, durchgeführt. Es wird jeweils eine Dreifachbestimmung durchgeführt und der Mittelwert und die Standardabweichung der Messungen bestimmt.

### 3.2.3 Viskosimeter

Die Viskosität wird mit dem Viskotester VT 550 von HAAKE (Typ: 002-7026) gemessen. Der Messbecher NV ST (807-0702) wird mit jeweils 9ml Probe befüllt und der Drehkörper NV ST (807-0713) eingesetzt. Die Temperatur ist mit der Kälteumwälzpumpe Julaba F12 auf 70°C geregelt und die Frittierölprobe wird vor der Messung fünf Minuten im Viskosimeter temperiert. Für jede Probe werden sechs Messungen innerhalb von 60 Sekunden bei einer Scherrate von $\dot{y}$ = 200 [1/s] Sekunden durchgeführt. Dabei warden Mittelwert und Standardabweichung bestimmt. Für die Messungen wird mit der Rheo Win Job Manager Software (Version: 4.63.0004) gearbeitet. Die dynamische Viskosität wird in Millipascal (mPas) angegeben.

### 3.2.4 Farbmessung

Die Transmissionsfarbmessungen und Farbdifferenzmessungen werden mit einem Spectrophotometer gemessen und die Farbe mit dem L*a*b Farbraum durch Transmission bestimmt. Dazu werden die in Tabelle 8 aufgelisteten Materialien verwendet.

Tabelle 8: Verwendete Materialien zur Reflexionsfarbmessung und Farbdifferenzmessungen.

| Materialien | Spezifische Angaben |
|---|---|
| Spectrophotometer | Spectrophotometer CM-5 von Konica Minolta |
| Probenhalter | CM-A96 Transmission von Konica Minolta |
| Küvetten | CM-A98 Glas-Rechteck-Küvette 50 × 38 Schichtstärke 10 mm |
| Sonstiges | Einwegtücher, Einwegpipetten |

Im Gerät wird die Funktion «Transmission» ausgewählt und die Messungen warden anhand der SOP des Gerätes dreifach und in Transmission vorgenommen. Um die Farbdifferenzen der Proben zu bestimmen wird der ΔE*ab-Wert ermittelt. Zusätzlich wird der Bräunungsindex (BI) berechnet. Dazu werden folgende Formeln verwendet:

| Farbdifferenz ΔE*ab | |
|---|---|
| $$\Delta E^* ab = [(\Delta L^*)^2 + (\Delta a^*)^2 + ((\Delta b^*)^2]^{1/2}$$ | (1) |

| Bräunungsindex (BI) | |
|---|---|
| $$\mathrm{BI} = [100\,(\mathrm{x} - 0.31)] / 0.17$$ | (2) |
| wobei: x = ($a^*$ + 1.75$L^*$) / (5.645$L^*$ + $a^*$ - 0.3012$b^*$ ) | |

### 3.2.5 Messung Permeatflux

Der Permeatflux wird mit einem Messzylinder und als Einfachbestimmung ermittelt. Der Messzeitraum variiert je nach Versuchsaufbau und ist in den jeweiligen Versuchsprotokollen ersichtlich.

### 3.2.6 Berechnung weiterer Kennzahlen

Mit den gewonnenen Daten aus den verschiedenen Filtrationsversuchen und den FT-NIR Analysen werden jeweils weitere Kennzahlen berechnet. Nachfolgend sind die verwendeten Formeln für die jeweiligen Kennzahlen aufgelistet. Für den Vergleich der Datenreihen aus dem Frittierversuch wird der Kruskal-Wallis-Test angewendet. Dafür und für alle statistischen Kennzahlen und Berechnungen wird das Statistikprogramm XLSTAT Version 2018.5 eingesetzt.

| Reynolds-Zahl | |
|---|---|
| $$Re = \frac{\rho \cdot \upsilon \cdot d}{\eta}$$ | (3) |
| wobei gilt: | |
| $\rho$ = Dichte | |
| $\upsilon$ = Überströmmungsgeschwindigkeit | |
| $d$ = charakteristische Länge | |
| $\eta$ = dynamische Viskosität | |

| Rückhaltefaktor | |
| --- | --- |
| $$R = \dfrac{C_R - C_P}{C_R}$$ | (4) wobei gilt: |
| $R$ = Rückhaltefaktor | |
| $C_R$ = TPA Konzentration im Retentat | |

| DEGLEV | |
| --- | --- |
| $$y = 117 - 8\ x\ SZ - 3\ x\ TPA$$ | (5) |
| wobei gilt: | |
| $SZ$ = Säurezahl | |
| TPA = Total Polare Anteile in % | |

### 3.2.7 Sensorische Prüfung

Für die sensorische Beurteilung wird ein deskriptiver In-Out Test eingesetzt. Als Grundlage für diese Methode dienen die Normen DIN 10975 und DIN 10973. So werden zum einen die Pommes Frites und zum anderen auch das Frittieröl beurteilt.

Prüfpersonen

Das Prüferpanel stellt sich aus Mitarbeitern des Instituts für Lebensmittel- und Getränkeinnovation (ILGI) der ZHAW zusammen. Es werden sechs Prüfer geschult, mit dem Ziel bei jeder Prüfung mindestens drei Prüfer zu Verfügung zu haben.

Vorbereitende Schulung

Den Prüfern wird das Grundprinzip des In-Out Tests erläutert und das Ziel der durchzuführenden sensorischen Tests erklärt.

Als Standardprobe wird eine in frischem Frittieröl frittierte Probe gereicht. Anschliessend werden den Prüfern monadisch in verschiedenen Ölen zubereitete Pommes Frites vorgelegt. Die Frittierzeit beträgt vier Minuten bei 170°C. Die Tabelle 9 zeigt die ausgehändigten Proben mit den jeweilig verwendeten Ölen (Siehe auch Abschnitt 2.2).

Tabelle 9: Ölmischungen für die in der Sensorik Schulung verwendeten Proben.

| Probebezeichnung | Frittieröl | Zusatz zum Öl | Bewertung (IN-OUT) |
| --- | --- | --- | --- |
| Öl 1 | Frisch (600ml) | Keiner | in |
| Öl 2 | Frisch (400ml) + gebraucht (100ml) | 13ml Ranzigkeitsstandard | just out |
| Öl 3 | Gebraucht (600ml, TPA 17%) | Keiner | in |
| Öl 4 | Gebraucht + 50ml Retentat aus Versuch GMT 53 | Keiner | out |
| Öl 5 | HOLL Rapsöl frisch | 20 ml Ranzigkeitsstandard | just out |

Durchführung während dem Frittierversuch

Den Prüfpersonen werden jeweils zwei Pommes Frites Proben und zwei Frittierölproben gereicht, welche je mit A und B beschriftet sind. Die Probe A stammt aus der Standardfritteuse und die Probe B aus der Prototyp-Fritteuse. Diese werden anhand des vorbereiteten Prüfformulars durch die Prüfer bewertet.

Auswertung

Die In-Out Resultate werden als prozentualer Anteil der «in» bzw. «just in» Entscheide angegeben. Wird ein Produkt nicht mit 100% «in» Antworten bewertet, dann wird die Prüferanzahl für die nächste Prüfung Session erhöht. Wird ein Produkt mit mindestens 33% als «out» eingestuft, wird im Projektteam entschieden, ob der Frittierversuch weitergeführt wird. Die Resultate der Profilierung werden als Mittelwert und mit Angabe der Standardabweichung zusammengefasst. Auf weitere statistische Auswertungen wird auf Grund der geringen Prüferzahl verzichtet.

### 3.3 Prozessanalyse

### 3.3.1 Temperatur- und Luftfeuchtigkeitsmessungen in einer Standard Fritteuse

Zur Beurteilung der im Innenraum einer laufenden Fritteuse herrschenden thermischen Bedingungen werden im SV Restaurant «Grüental» Temperatur- und Luftfeuchtigkeitsmessungen an einer F-300 Fritteuse der Firma Gastrofrit durchgeführt.

Hierzu werden die Materialien aus Absatz 4.1.3 eigesetzt und drei Messsonden im Innenraum der Fritteuse befestigt. Ein Temperatursensor wird zusätzlich direkt im Frittierbecken befestigt, um die Öltemperatur zu überwachen.

An folgende Messstellen werden Sensoren platziert:

- Oberflächentemperatur Seitenwand innen
- Frittierbecken bzw. Öl
- Innenraum Mitte (Lufttemperatur und Luftfeuchtigkeit)
- Oberflächentemperatur Ablaufhahn

### 3.3.2 Massenbilanz während der Membranfiltration

Es soll untersucht werden, ob mit einer einfachen Massenbilanz, die feedseitige Konzentration berechnet werden kann, bzw. ob die gemessenen Parameter mit den durch die Massenbilanz errechneten Werten übereinstimmen. Dabei geht es um die in Figur 11 dargestellten Massenströme. Es soll überprüft werden, ob die Masse an TPA im Feed gleich der Summe der Masse der TPA im Retentat und im Permeat ist. Es werden folgende Formeln verwendet:

| **Massenbilanz:** | |
|---|---|
| $$m_F = m_R + m_P$$ | (6) |
| **TPA-Bilanz:** | |
| $$m_F \cdot TPA_F = m_R \cdot TPA_R + m_P \cdot TPA_P$$ | (7) |
| **TPA-Verlust / TPA-Zunahme:** | |
| $$x = m_F \cdot TPA_F - m_R \cdot TPA_R - m_P \cdot TPA_P$$ <br> wobei gilt: <br> $m_F$ = Masse Feed [g] <br> $m_P$ = Masse Permeat [g] <br> $m_R$ = Masse Retentat [g] <br> $TPA_F$ = TPA-Gehalt im Feed [g/g] <br> $TPA_R$ = TPA-Gehalt im Retentat [g/g] <br> $TPA_P$ = TPA-Gehalt im Feed [g/g] <br> $x$ = Unbekannte Abnahme oder Zunahme des TPA-Wertes [g] | (8) |

Um diesen Zusammenhang zu überprüfen, wird ein Filtrationsversuch mit der Membran GMT oNF-3 durchgeführt. Der Versuch wird bei 70°C, 20 bar und einer Überströmung von 6 liter/min mit der TestUnit M20 durchgeführt. Es wird eine Feedmenge von rund 3.5 kg Frittieröl eingesetzt und die Filtration nach Generierung von mindestens 0.7 kg Permeat (20% der Feedmenge) beendet. Proben werden vom Feed (vor der Filtration), Permeat und Retentat (nach der Filtration) gezogen und mit dem FT-NIR analysiert. Die Permeatproben werden alle drei Stunden entnommen, um mögliche Veränderungen im Verlauf der Filtration zu erfassen. Für die Massenbilanz wird der Mittelwert aller TPAP Messungen verwendet. Zudem wird die Masse des Permeats gravimetrisch bestimmt. Da die Messung des gesamten Volumens, welches im Filtrationskreislauf zurückbleibt, nicht exakt möglich ist, wird die Masse des Retentat rechnerisch bestimmt ($m_F$ -$m_P$).

**3.4 Membranfiltration**

In diesem Abschnitt sind alle Versuche beschrieben, welche eine Membranfiltration beinhalten. Der in Abschnitt 3.4.1 beschriebene Versuch befasst sich mit der Kombination von Fraktionierung und Membranfiltration. Darauffolgend werden die Versuche zur klassischen Membranselektion und Membrancharakterisierung dargestellt.

Bei den beschriebenen Versuchen wird jeweils die Versuchsanlage TestUnit M20 als Basis verwendet (Siehe Abschnitt 3.1.1). Bei allen Membranversuchen werden standardmässig Proben gezogen (Siehe Abschnitt 3.2.1), sowie der Permeatflux mit Hilfe eines Messzylinders bestimmt und die Laufzeit notiert. Bewertet werden jeweils der Permeatflux sowie die Verderbskennzahlen von Retentat und Permeat, wobei der Fokus bei den Verderbskennzahlen auf den TPA liegt.

**3.4.1 Membranfiltration nach vorhergehender Fraktionierung**

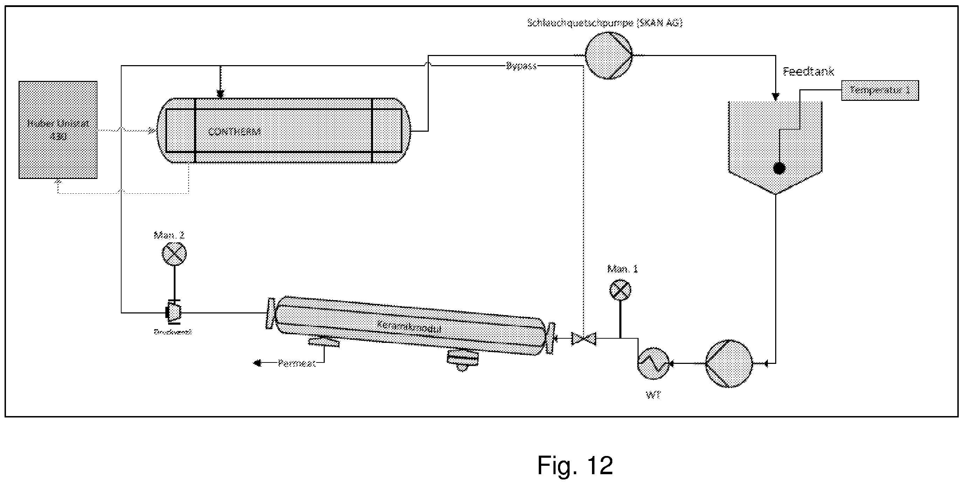

Dieser Abschnitt beschreibt den Versuch eines kombinierten Verfahrens aus Membranfiltration und Fraktionierung, wozu die Filtrationsanlage M20 mit dem Contherm verbunden wird. Dieser Versuch soll die Machbarkeit aufzeigen, Fettkristalle aus der Fraktionierung mit Hilfe eines Membranseparationsverfahrens von der flüssigen Phase abtrennen zu können. Die Erkenntnisse der Vorversuche dienen dabei als Grundlage. Der Aufbau des Versuchs ist schematisch in Figur 12 ersichtlich. Die Verbindung zwischen dem Contherm, welcher für die Fraktionierung verantwortlich ist, und der Filtrationsanlage wird durch eine Schlauchquetschpumpe hergestellt. Diese ist so eingestellt, dass der Durchfluss mit dem Retentatfluss gleichgestellt ist. Das Frittieröl wird im Contherm über vier Stunden auf -4°C heruntergekühlt, bevor der Kreislauf über die Filtration gestartet wird. Für die Filtration wird das Rohrmodul für die Keramikmembranen von Inopor installiert. Getestet warden die 5nm $TiO_2$ Membranen zum einen in der hydrophilen und zum anderen in der hydrophoben Konfiguration. Der Permeatflux wird jeweils über zwei Stunden gemessen.

**3.4.2 Membranselektion**

Der Membrantyp PERVAP 4060 vom Hersteller DeltaMem AG ist eine geeignete Ausgangsmembran. Zwei weitere Membranen von der Firma GMT Membrantechnik GmbH wurden ebenfalls mit Frittieröl getestet (oNF1 und oNF3). Für eine erste Evaluierung der beiden neuen Membranen von GMT werden Vorversuche durchgeführt.

Während den Vorversuchen werden Prozessparameter wie Druck oder Öltemperatur durch den Versuchsleiter definiert und während den Versuchen entschieden, ob und welche weiteren Parameter getestet werden. Eine systematische Charakterisierung der Membran findet nur dann statt, wenn die ersten Versuchsdurchläufe positive Resultate zeigen, das heisst, wenn die Resultate Verbesserungen im Vergleich zur PERVAP 4060 (Permeatflux oder Rückhaltefaktor) aufweisen. So wird der Referenzwert des Rückhaltefaktors basierend auf den Messungen von Ramona Rüegg auf 0.47 festgelegt und der des Permeatflux auf 0.7 l/h·m2. Liegen die Resultate der neu getesteten Membranen über diesen Referenzwerten, werden weitere Versuche durchgeführt.

Es werden jeweils zwei Membransheets ä 0.0295m$^2$ für die TestUnit M20 zugeschnitten und bei den, in Tabelle 10 ersichtlichen Prozessparametern getestet. Laut Datenblatt des Herstellers der GMT Membranen sollen die Membranen zwei Stunden der zu filtrierenden Lösung ausgesetzt werden, bevor die Filtration gestartet wird. Aus diesem Grund werden die Membranen vor dem ersten Test bei 3.2 l/min und ohne Druck in der Versuchsanlage zwei Stunden dem frischen Frittieröl exponiert.

Tabelle 10: Prozessparameter der Vorversuche mit der Membran GMT o-NF1 und o-NF3

| *Versuchsnummer* | *Druck [bar]* | *Öltemperatur [°C]* | *Überströmung [l/min]* | *Laufzeit [h]* |
|---|---|---|---|---|
| *oNF1-50.1* | 25 | 75 | 6 | 6.0 |
| *oNF1-50.2* | 25 | 75 | 6 | 14.3 |
| *oNF1-50.3* | 25 | 85 | 12 | 4.0 |
| *oNF1-50.4* | 12.5 | 85 | 12 | 19.5 |
| *oNF1-50.5* | 30 | 85 | 12 | 3.0 |
| *oNF1-50.6* | 30 | 85 | 6 | 3.5 |

(fortgesetzt)

| Versuchsnummer | Druck [bar] | Öltemperatur [°C] | Überströmung [l/min] | Laufzeit [h] |
|---|---|---|---|---|
| oNF1-50.7 | 35 | 85 | 12 | 3.0 |
| oNF3-53.1 | 25 | 75 | 6 | 2.0 |

### 3.4.3 Membrancharakterisierung

Die Membrancharakterisierung dient der Generierung von Wissen um die Eigenschaften der einzelnen Membranen zu beurteilen und die optimalen Prozessbedingungen für die spezifische Anwendung zu definieren.

### 3.4.3.1 Charakterisierung PERVAP 4060

In einer wurden die wichtigsten Versuche zur Charakterisierung der PERVAP 4060 durchgeführt. Um den Einfluss einer Aufkonzentrierung des Retentats auf den Permeatflux und die Zusammensetzung des Permeates zu untersuchen, wird zusätzlich ein Langzeitversuch durchgeführt. Hierzu wird über 190h filtriert und der Füllstand im Feedtank, mit regelmässiger Zugabe von Feedöl (TPA ca. 27%), auf konstantem Level gehalten. Da die Filtrierzeit bei diesem Versuch nur eine untergeordnete Rolle spielt, werden Proben aus organisatorischen Gründen in unregelmässigen Abständen gezogen. Es wird der Permeatflux bestimmt sowie Permeat- und Retentatproben mit dem FT-NIR analysiert. Es soll untersucht werden, ob der Permeatflux bei steigender TPA Konzentration im Retentat ($TPA_R$) abnimmt und wie der TPA im Permeat ($TPA_P$) vom TPAR abhängt. Um zu evaluieren, ob der abnehmende Permeatflux durch Verschmutzung (Fouling) oder durch die Veränderungen im Retentat entsteht, werden die Versuchsbedingung am Ende des Versuches wieder auf die zu Beginn herrschenden Parameter gesetzt. Dafür wird das Retentat durch das Ausgangsöl ersetzt, welches einen TPA-Wert von ca. 28% aufweist. Erholt sich der Permeatflux und pendelt sich wieder auf den Wert vom Anfang des Versuches ein, kann die Senkung auf den Konzentrationsgradienten oder auf die Erhöhung der Viskosität zurückgeführt werden. Bleibt der Permeatflux jedoch auf tiefem Niveau, wird es an einem Fouling liegen.

### 3.4.3.2 Charakterisierung GMT o-NF3

Die GMT o-NF3 wird mit weiterführenden Versuchen charakterisiert. Dabei werden drei Versuchsdurchläufe durchgeführt, um das Verhalten des Permeatflux und des Rückhaltefaktors bei unterschiedlichem Druck, Öltemperatur und Überströmung zu evaluieren (Versuchsnummern oNF-3 53a-c). Die verwendeten Prozessparameter sind in Tabelle 11 ersichtlich.

Wie bei der PERVAP 4060 Membran soll zusätzlich das Verhalten der oNF-3 Membran bei einer Aufkonzentrierung durch einen Langzeitversuch charakterisiert werden. Dazu wird ein Langzeitversuch durchgeführt wobei der TPAR bis auf 50% aufkonzentriert werden soll (Versuchsnummer oNF3-53d). Dafür wird über 187.3h kontinuierlich filtriert und insgesamt 62 Proben gezogen sowie mit dem FT-NIR analysiert. Bei jedem Probenzug wird zudem der Permeatflux bestimmt. Zusätzlich wird von jedem zehnten Probenzug und am Ende des Versuches die Viskosität des Retentates ermittelt. Wie beim Langzeitversuch der PERVAP 4060 wird am Ende des Versuchs das Retentat durch das Ausgangsfrittieröl ersetzt und für weitere zwei Stunden filtriert.

Tabelle 11: Prozessparameter bei der Charakterisierung der Membran GMT o-NF3

| Versuchsnummer | Druck [bar] | Öltemperatur [°C] | Überströmung [l/min] | Laufzeit [h] |
|---|---|---|---|---|
| Druckabhängigkeit | | | | |
| oNF3-53a.1 | 10 | 70 | 6 | 1 |
| oNF3-53a.2 | 15 | 70 | 6 | 2 |
| oNF3-53a.3 | 20 | 70 | 6 | 1 |
| oNF3-53a.4 | 25 | 70 | 6 | 1 |
| Temperaturanhängigkeit | | | | |
| oNF3-53b.1 | 20 | 60 | 6 | 1 |
| oNF3-53b.2 | 20 | 70 | 6 | 1 |
| oNF3-53b.3 | 20 | 80 | 6 | 1 |

(fortgesetzt)

| Temperaturanhängigkeit | | | | |
|---|---|---|---|---|
| oNF3-53b.4 | 20 | **90** | 6 | 1 |
| oNF3-53b.5 | 20 | **50** | 6 | 1 |
| Durchflussabhängigkeit | | | | |
| oNF3-53c.1 | 20 | 70 | 6 | 1 |
| oNF3-53c.2 | 20 | 70 | 12 | 1 |
| oNF3-53c.3 | 20 | 70 | 15 | 1 |
| oNF3-53c.4 | 20 | 70 | **20** | 0.25 |
| Aufkonzentrierung | | | | |
| oNF3-53d | 20 | 70 | 6 | 187.3 |

### 3.5 Systemdesign

Um das Membranverfahren spezifisch in einer Gastronomiefritteuse einsetzen zu können, muss ein passendes Verfahren entwickelt werden, welches die herrschenden Bedingungen und die Zielsetzung berücksichtigt. Anhand den Erfahrungen durch die Membranfiltrationsversuche, Expertengesprächen und in Absprache mit dem Industriepartner Gastrofrit AG, warden erste Skizzen des Verfahrens erstellt und die Verfahrensschritte einzeln beschrieben. Diese Skizzen sollen zu einem späteren Zeitpunkt im Projekt als Ausgangslage dienen, um in Kooperation mit einem Konstrukteur die Membranfiltration in einer neuen Gastronomiefritteuse implementieren zu können. Alle Skizzen werden mit Microsoft Visio, Version 2016 erstellt.

### 3.6 Simulation

Basierend auf dem theoretisch entwickelten Prozess wird im Rahmen einer Zusammenarbeit mit dem Institut für angewandte Simulation (IAS) der ZHAW, namentlich mit Lukas Hollenstein, eine Simulation des Prozesses erstellt. Ziel soll sein, das Verhalten der TPA Werte im neuen Prozess bei verschiedenen Prozessparametern simulieren zu können und damit Informationen für die weiteren Prototypen zu generieren.

Es wird mit der Applikation «Jupyter» (Version 5.5.0) aus der Software «Anaconda Navigator» (Version 1.8.7) und der Programmiersprache «Python» gearbeitet. Dazu wird der Prozess definiert und skizziert. Darauf basierend werden die Beziehungen des Systems in mathematischen Formeln ausgedrückt und als Simulation programmiert. Die mathematischen Grundlagen und darauf aufbauenden Programmierungen werden vom IAS erstellt. Die dazu benötigten Informationen und Parameter werden durch das Projektteam OLFO generiert und bereitgestellt.

Als Grundlage der Simulation werden folgende Beziehungen und Grössen definiert:

- Indizes für Teilsystem $i, j = 1, \ldots, n$, mit $n = 8$
- Volumen: $V_i$ [$l$]
- Dichte: $\rho_i$ [$g/ml$] = [$kg/l$]
- Volumenstrom von $i$ nach $j$: $Q_{ij}$ [$l/h$]
- Massenstrom von $i$ nach $j$: $q_{m, ij}$ [$kglh$]
- TPA Konzentration (Anteil): $c_i$ [1]
- Filterfaktor von $i$ nach $j$: $f_{ij}$ [1]
- Zeit: $t$ [$h$]

Für die Programmierung der Simulation wurden folgende Annahmen zum Prozess getroffen:
Dichte Öl = 0.9 [g/ml]

- Dichte TPA = 0.95 [g/ml]
- TPA Frischöl = 3 [%TPA]
- Input Pommes Frites = 15 [kg/h]
- Ölaufnahme Pommes Frites = 3 [%]
- Verderbsrate des Öls

o Im Standby Modus = 0.085 [%TPA/h]

o Beim Frittieren = 0.4 [%TPA] (bei 15kg Pommes Frites pro Stunde und 9 Liter Ol)

- Umwälzung in der Fritteuse = 20 [l/h]
- Frittierzeiten pro Tag = 11:00 - 14:00 Uhr und 17:00 bis 21:00 Uhr

### 3.7 Frittierversuch mit Prototyp

Das Ziel dieses Versuches ist es, herauszufinden wie sich die Verderbskennzahlen von Frittieröl einer konventionell betriebenen Fritteuse (Standard) im Vergleich zur Prototyp Fritteuse verhalten. Hierzu werden über dreizehn Tage Pommes Frites und Chicken Nuggets frittiert, um einen Betrieb in der Gastronomie so nah wie möglich nachzustellen. Wie aufgezeigt, schwanken die TPA Messungen von verschiedenen Standardversuchen. Durch seine zwei getrennten Frittierbecken ermöglicht der Prototyp die zeitgleiche Durchführung von zwei Versuchsbatches. So kann jeder Versuch direkt mit einem Standardversuch unter gleichen Bedingungen verglichen werden. Das eine Frittierbecken wird dafür mit dem Filtersystem verbunden, das andere läuft, als Standard, klassisch ohne Filtration. Die Fritteusen werden mit jeweils sieben Litern Holl Rapsöl befüllt.

Die Membranfiltration wird mit einer Feedtemperatur von 70°C, einem TMP von 20 bar und einer Überströmung von 6 l/min geführt. Die Membranoberfläche beträgt 0.236m$^2$ (acht GMT oNF-3 Membransheets ä 0.0295m$^2$) und der Feedtank ist zu Beginn des Versuchs mit drei Litern frischem Holl-Rapsöl gefüllt.

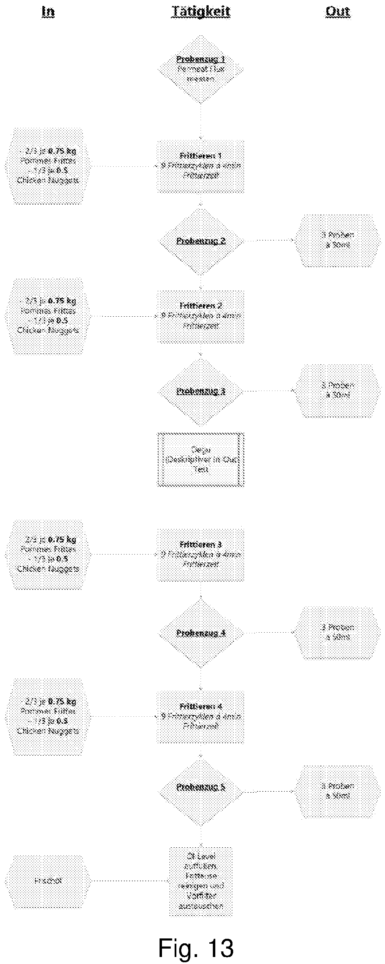

Die Figur 13 zeigt den Ablauf eines Versuchstags, welcher in zwei Teile gegliedert ist. Dies soll die Abschaltung der Fritteuse nach einem Mittagsservice simulieren. Es wird somit zweimal drei Stunden pro Tag frittiert. Dabei werden jeweils 0.75 kg Pommes Frites oder 0.5 kg Chicken Nuggets pro Frittierkorb verwendet. Chicken Nuggets warden in jedem dritten Frittiervorgang frittiert. Die restlichen Frittiervorgänge werden mit Pommes Frites durchgeführt. Beide Produkte werden jeweils für vier Minuten frittiert. Alle 90 Minuten werden Frittierölproben aus der Standard Fritteuse, dem Retentat und dem Prototyp gezogen. Alle gezogenen Proben werden mit dem FT-NIR auf die Verderbskennzahlen untersucht. Die Viskosität wird an jedem dritten Tag gemessen und die Farbe jeweils täglich von der ersten und letzten Probe aufgenommen. Zudem wird täglich nach Probenzug 2 ein deskriptiver In-Out Test durchgeführt, welcher allfällige sensorische Fehler der frittierten Pommes Frites aufzeigen soll und mit den Proben aus Probenzug 2 durchgeführt wird. Der sensorische Test ist in Absatz 4.2.7 beschrieben. Am Ende eines Versuchstages werden die Fritteusen ausgeschaltet, die Membranfiltration jedoch über Nacht laufen gelassen. Die Reinigung der Fritteuse und der Austausch des Vorfilters finden jeweils am nächsten Morgen statt.

Um den Ölverderb zu beschleunigen, wird in den letzten drei Versuchstagen auf die Reinigung verzichtet, die Temperatur auf 175°C erhöht und die Frittierhäufigkeit auf vier Körbe ä 500g Pommes Frites oder Chicken Nuggets pro 90 Minuten reduziert. Der Versuchsablauf wird im Versuchsformular festgehalten.

### 3.8 Risikoanalyse

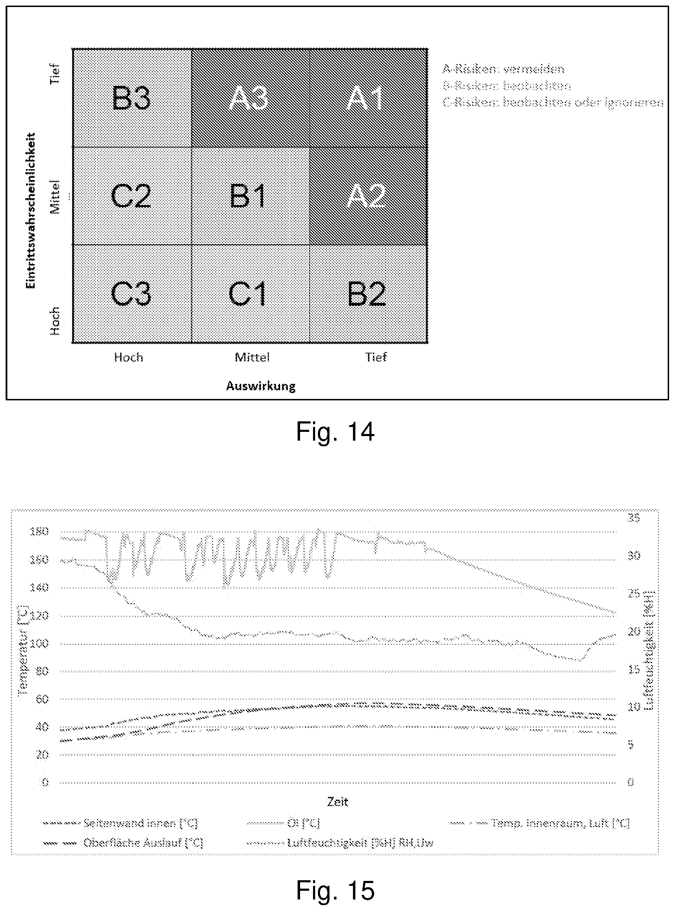

Für die Evaluierung der potentiellen Risiken, welche ein erfolgreiches Scale-Up im weiteren Verlauf des Projektes gefährden könnten, wird eine Risikoanalyse durchgeführt. Dazu wird die in Figur 14 aufgezeigte Matrix verwendet. Die Risiken werden anhand der, in Absatz 2.4.2.3 erwähnten Risikodimensionen unterteilt und mit der Risikomatrix bewertet. Es wird jeweils die Eintrittswahrscheinlichkeit und die Stärke der Auswirkung mit eins bis drei Punkten bewertet. Diese Bewertungen warden multipliziert und so ein Risikofaktor für jedes identifizierte Risiko berechnet. Für jedes Risiko werden mögliche Gegenmassnahmen definiert.

### 4 Resultate

### 4.1 Prozessanalyse

Die Prozessanalyse beinhaltet die Temperaturmessungen in einer Standardfritteuse sowie die Massenbilanz der Membranfiltration.

### 4.1.1 Temperatur- und Luftfeuchtigkeitsmessungen in Standard Fritteuse

Figur 15 zeigt die Messergebnisse der vier Temperatursonden und der Luftfeuchtigkeit als Funktion der Zeit. Die Lufttemperatur im Innenbereich der Fritteuse erreicht einen Maximalwert von 40.5°C (12:39 Uhr). Die Oberflächentemperaturen erreichen ihr Maximum bei 55.2° (Seitenwand, 12:45 Uhr) und 57.1°C (Auslauf, 12:47 Uhr). An den Temperaturstürzen der Öltemperaturen sind die einzelnen Frittiervorgänge erkennbar. Sie bleibt aber immer unter 182.4°C. Im Gegensatz zur Temperatur, nimmt die Luftfeuchtigkeit im Innenraum der Fritteuse während der Frittierzeit ab. Der höchste Wert wird noch vor dem ersten Frittiervorgang mit 29.7%H gemessen. Der Niedrigste liegt bei 16.2%H.

**4.1.2 Massenbilanz während der Membranfiltration**

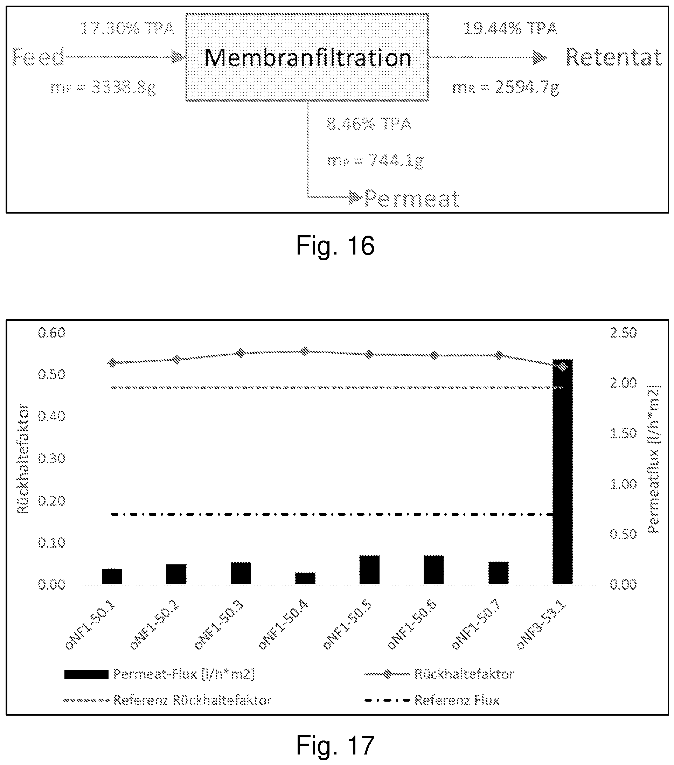

In Figur 16 sind die gemessenen Massen und TPA-Werte ersichtlich. Der $TPA_F$ liegt bei 17.30% (Standardabweichung (SD): 0.12), der $TPA_P$ bei 8% (SD: 0.21) und der $TPA_R$ bei 19.44 (SD: 0.21). Die Masse des Frittieröls im Feed beträgt 3338.8 g und die des Permeat 744.1 g. Damit ergibt sich die errechnete Masse des aufkonzentrierten Retentates im Membransystem von 2594.7 g. Durch Einsetzen in die Formel 8 ergibt sich:

$$x = 3338.8g \cdot 0.17 - 2594.7g \cdot 0.19 - 744.1g \cdot 0.08$$

$x$ = 10.35g

Somit ist ersichtlich, dass 10.35g an polaren Anteilen (1.7% vom gesamt TPA im Feed) nach der Filtration nicht mehr nachgewiesen werden können und als Verlust angesehen werden müssen.

**4.2 Membranfiltration**

**4.2.1 Membranfiltration nach vorhergehender Fraktionierung**

Die hydrophile sowie die hydrophobe Membran zeigten keinen Permeatflux im Temperaturbereich von -4 bis 30°C. Der TMP betrug 25bar. Nach zwei Stunden ohne Permeatflux wurde der Versuch abgebrochen. Somit konnten keine weiteren Resultate generiert werden und die Membranfiltration von fraktioniertem Frittieröl muss unter diesen Bedingungen als nicht machbar bezeichnet werden.

**4.2.2 Membranselektion**

Die Resultate der Vorversuche zur Membranselektion sind in Figur 17 zusammengefasst. Der Rückhaltefaktor bewegt sich bei allen Versuchen im Bereich zwischen 0.52 und 0.56, also über dem definierten Referenzwert von 0.47. Die Permeatfluxe der Versuche mit der oNF-1 Membran liegen alle unter dem Referenzwert von 0.7 l/h·m². Allein der Versuch oNF3-53.1 zeigt einen Permeatflux der mit 2.2 l/h·m² um 214% über dem Referenzwert liegt.

**4.2.3 Membrancharakterisierung**

Die Membrancharakterisierung wurde mit den beiden Membranen PERVAP 4060 und GMT oNF-3 durchgeführt. Die Resultate der durchgeführten Versuche werden in den folgenden Abschnitten 4.2.3.1 und 4.2.3.2 aufgeführt.

**4.2.3.1 PERVAP 4060**

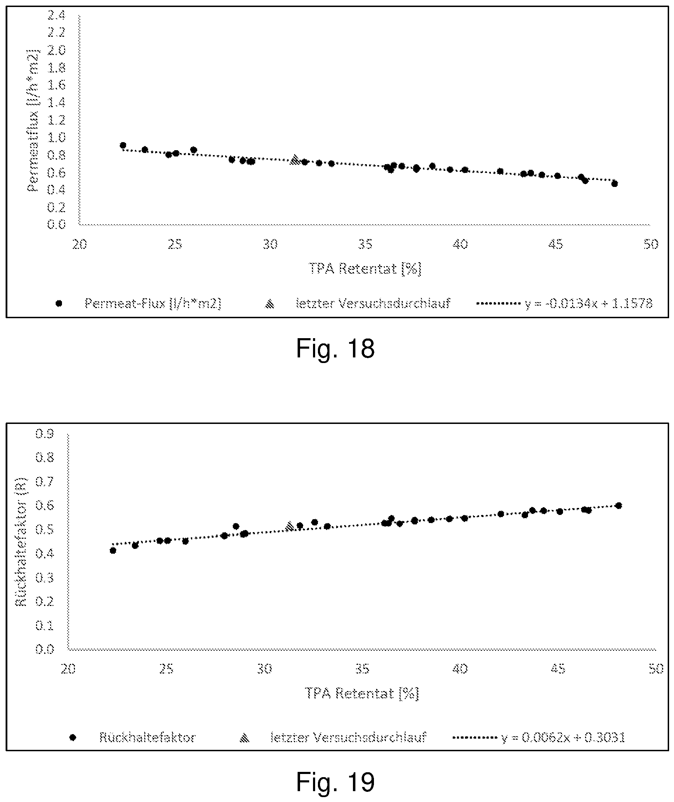

In Figur 18 ist ersichtlich, dass der Permeatflux bei steigendem $TPA_R$ abnimmt. So liegt er zu Beginn des Versuches und einem $TPA_R$ von 22.3% bei 0.92 l/h·m² und sinkt am Ende des Versuches ($TPA_R$: 48.1%) um 48% auf 0.47 l/h·m².

Der Permeatflux beim letzten Versuchsdurchlauf, bei dem das Retentat mit dem Ausgangfrittieröl ersetzt wurde ($TPA_R$: 31.31%), liegt bei 0.76 l/h·m² und somit im Bereich der Regressionsgerade.

Gleichzeitig ist zu beobachten, dass mit zunehmendem $TPA_R$, der $TPA_P$ ebenfalls zunimmt. Die Werte des $TPA_P$ bewegen sich zwischen 13.05% und 19.24%. Somit verändert sich, wie in Figur 19 ersichtlich, auch der Rückhaltefaktor. Liegt er bei einem $TPA_R$ noch bei 0.41 steigt er bei einem $TPA_R$ von 48.1% auf 0.60. Wie auch der Permeatflux liegt der Rückhaltefaktor des letzten Versuchsdurchlaufs im Bereich der Regressionsgeraden bei 0.52.

**4.2.3.2 GMT oNF-3**

Die Resultate der einzelnen Charakterisierungsversuche mit der Membran GMT oNF-3 sind der Übersichtlichkeit halber in die untersuchten Parameter Druck, Temperatur und Überströmung unterteilt. Zudem wird der Langzeitversuch, wobei das Retentat aufkonzentriert werden sollte, einzeln aufgeführt.

Druck (oNF3-53a)

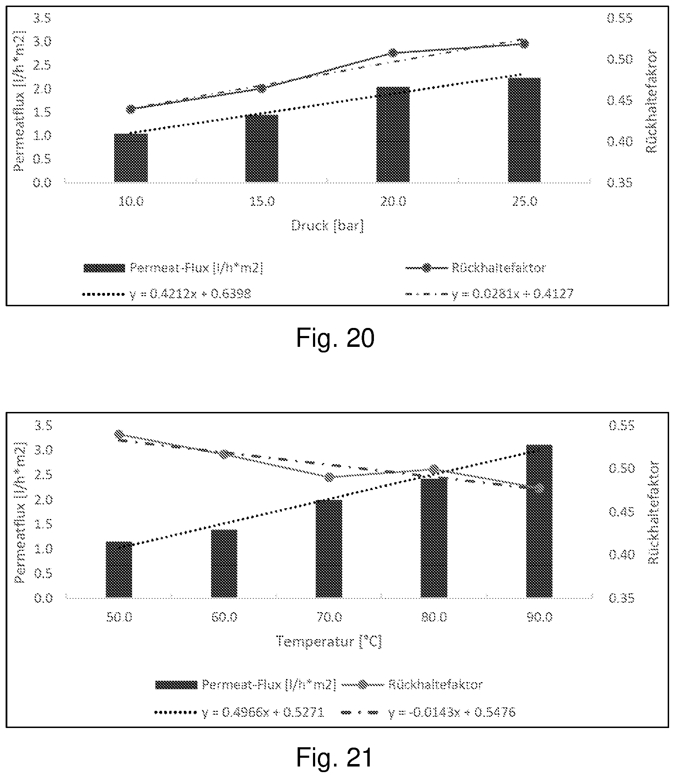

In Figur 20 ist ersichtlich, dass der Rückhaltefaktor sowie der Permeatflux bei Erhöhung des Druckes steigen.

Beim tiefsten getesteten TMP von 10 bar, wurde ein Permeatflux von 1.034 l/h·m$^2$ gemessen, dies bei einem Rückhaltefaktor von 0.44. Bei doppeltem TMP von 20 bar hat sich auch der Permeatflux mit 2.051 l/h·m$^2$ nahezu verdoppelt. Der Rückhaltefaktor erhöht sich bei steigendem TMP ebenfalls. So liegt er mit 10bar bei 0.44 und steigt bei 20bar bis auf 0.52.

Temperatur (oNF3-53b)

Bei steigender Temperatur nimmt der Permeatflux zu und der Rückhaltefaktor gleichzeitig ab. In Figur 21 ist zudem ersichtlich, dass der höchste Permeatflux mit 3.12 l/h·m$^2$ bei einer Temperatur von 90°C gemessen wird.

Überströmung (oNF3-53c)

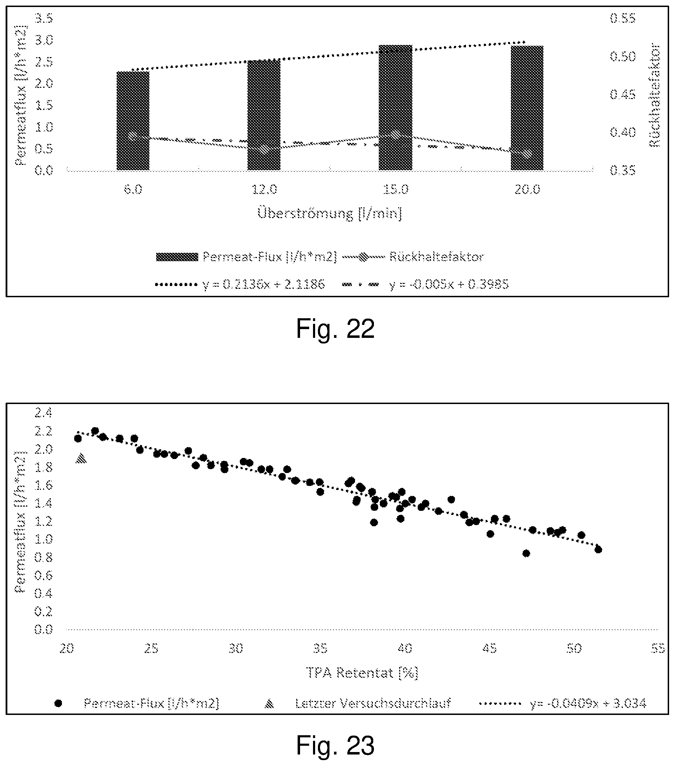

In Figur 22 wird folgendes gezeigt: Der Volumenstrom beeinflusst den Permeatflux geringfügig. So erhöht er sich von 2.29 l/h·m$^2$ bei einem Volumenstrom von 6 l/min auf einen maximalen Permeatflux von 2.90 l/h·m$^2$ bei 15 l/min. Wird der Volumenstrom auf 20 l/min erhöht, sinkt der Permeatflux unwesentlich auf 2.88 l/h·m$^2$.

Langzeitversuch

Im Langzeitversuch ist eine klare Tendenz des Permeatflux im Verhältnis zum $TPA_R$ zu erkennen. Je höher der $TPA_R$, desto geringer ist der Permeatflux. Dieser Zusammenhang ist in Figur 23 als Regressionsgerade dargestellt und lässt sich mit der Funktion y = -0.0409x + 3.034 beschreiben. Das Bestimmheitsmass liegt hierbei bei $R^2$ = 0.9377. Der gemessene Permeatflux des letzten Versuchsdurchlaufs liegt bei 1.90l/h·m$^2$ und ist damit leicht unter dem durch die Regressionsgerade errechneten und erwarteten Wert von 2.18l/h·m$^2$.

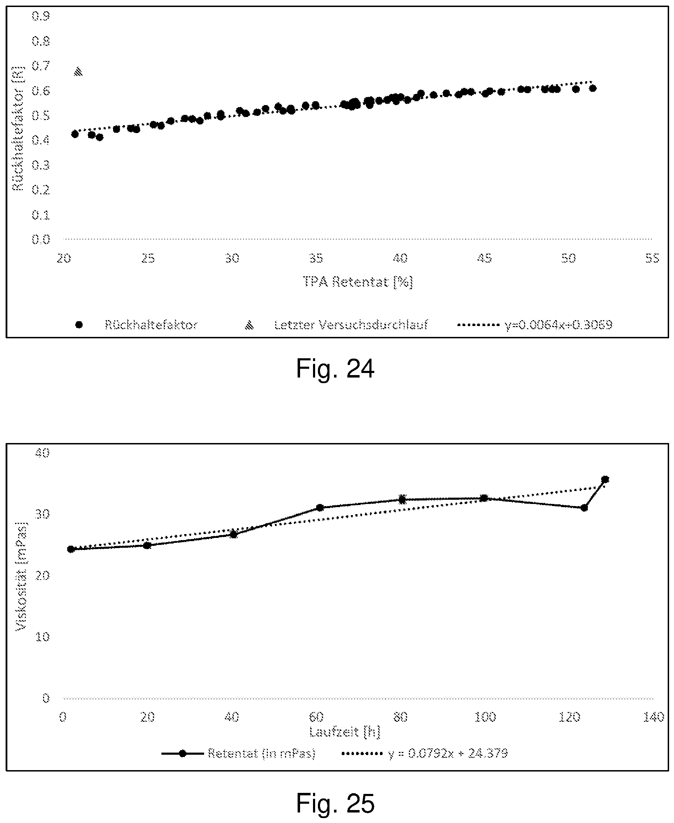

Der $TPA_P$ steigt bei einer Erhöhung des $TPA_R$. Bei einem $TPA_R$ von 20.70% wird ein $TPA_P$ von 11.89% gemessen. Steigt der $TPA_R$ auf 51.45%, liegt der $TPA_P$ bereits bei 20.06%. Das bedeutet, dass sich auch der Rückhaltefaktor verändert, was in Figur 24 erkennbar ist. Der Rückhaltefaktor liegt bei einem $TPA_R$ bei 0.43 und steigt bis auf ein Maximum von 0.61 an. Die Regressionsgerade kann mit der Funktion y = 0.0064x + 0.3069 und einem Bestimmtheitsmass von $R^2$ = 0.9489 beschrieben werden. Der damit berechnete Rückhaltefaktor für den letzten Versuchsdurchlauf ist 0.44. Der gemessene Wert ist mit 0.68 höher als der durch die Regressionsgerade zu erwartete Wert.

Viskosität

Die dynamische Viskosität des Frittieröles beim Beginn des Versuchs und einer Temperatur von 70°C beträgt 24.35mPa·s. Wie in Figur 25 ersichtlich, steigt die Viskosität bis 31.08 mPa·s und bleibt bis zur Probennummer 53d.60 (ca. 60h) in diesem Bereich. Am Ende des Versuches weist das Retentat eine dynamische Viskosität von 35.70mPa.s auf, was eine Steigerung über den gesamten Versuchsverlauf von 11.35mPa·s bedeutet.

Anhand der durchgeführten Versuche können folgende Bedingungen definiert werden, welche für die spezifische Anwendung mit der GMT oNF-3 die besten Separationsergebnisse mit dem höchsten Permeatflux erzielen.

- TMP: 25bar
- Überströmung: 15 l/min
- Temperatur: 80°C
- TPA in Retentat: <45%

**4.3 Systemdesign**

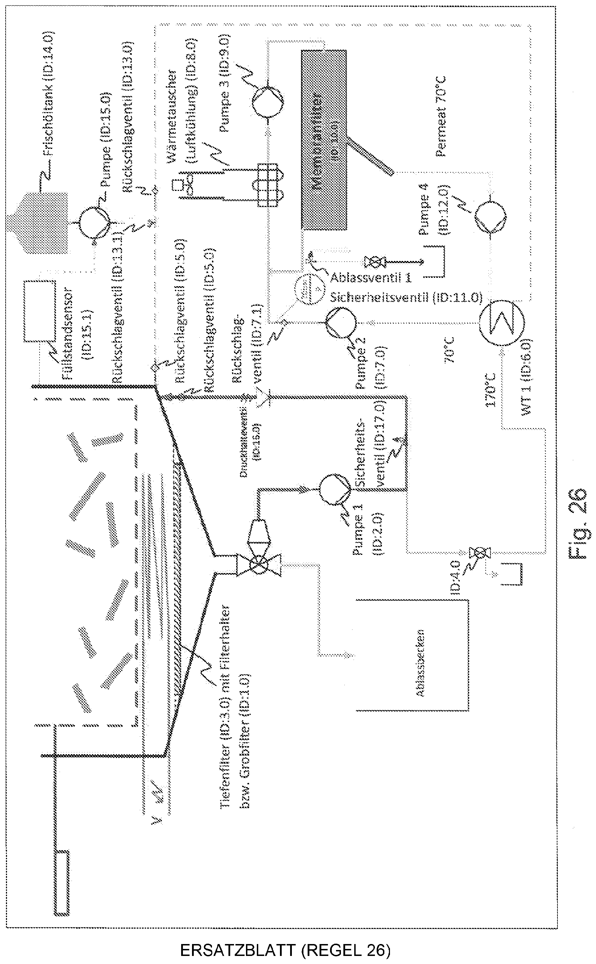

Die Figur 26 zeigt die Verfahrensskizze der neuen OLFO Fritteuse. Sie basiert auf zwei Filterkreisläufen und einem Vorfilter direkt im Frittierbecken. Der erste Kreislauf (grün) führt aus dem Frittierbecken über den Tiefenfilter und wieder zurück in die Fritteuse. Angetrieben wird dieser Kreislauf durch Pumpe 1 mit einem erwarteten Durchfluss von 20 l/h. Der zweite Kreislauf beinhaltet die Membranfiltration und ist in Gelb eingezeichnet. Dabei wird ein Teilstrom des ersten Kreislaufes verwendet, um durch den Tiefenfilter vorgefiltertes Frittieröl in den Membrankreislauf einzuspeisen. Durch einen leichten Überdruck im Kreislauf 1, welcher durch das Druckhalteventil (ID: 16) aufrechterhalten wird, fliesst durch das Öffnen vom Ventil (ID: 4), Öl in den Kreislauf 2. Das Frittieröl wird über einen Wärmetauscher auf die für die Membranfiltration nötige Temperatur gekühlt und mit Pumpe 2 (ca. 0.4 l/h) der definierte Druck aufgebaut. Der Druck im Membransystem wird mit einem Rückschlagventil gehalten und die Pumpe 3 fördert das Frittieröl im Membrankreislauf mit einem Volumenstrom von 170l/h. Die dabei entstehende Wärmeenergie soll mit dem Wärmetauscher 2 abgeführt werden. Um den Membrankreislauf entleeren zu können, ist das Ablassventil 1 bzw. das Sicherheitsventil vorgesehen.

Das entstehende Permeat wird drucklos über den Wärmetauscher 1 wieder zurück in die Fritteuse geleitet.

Durch den gleichen Anschluss soll zudem der Ölverlust, der durch den Austrag mit dem Produkt in der Fritteuse entsteht, automatisch mit frischem Frittieröl ersetzt werden. Hierzu wird ein Füllstandsensor (ID: 15.1) eingesetzt, der die Pumpe des Frischöltanks (ID: 15.0) ansteuert.

**4.4 Simulation**

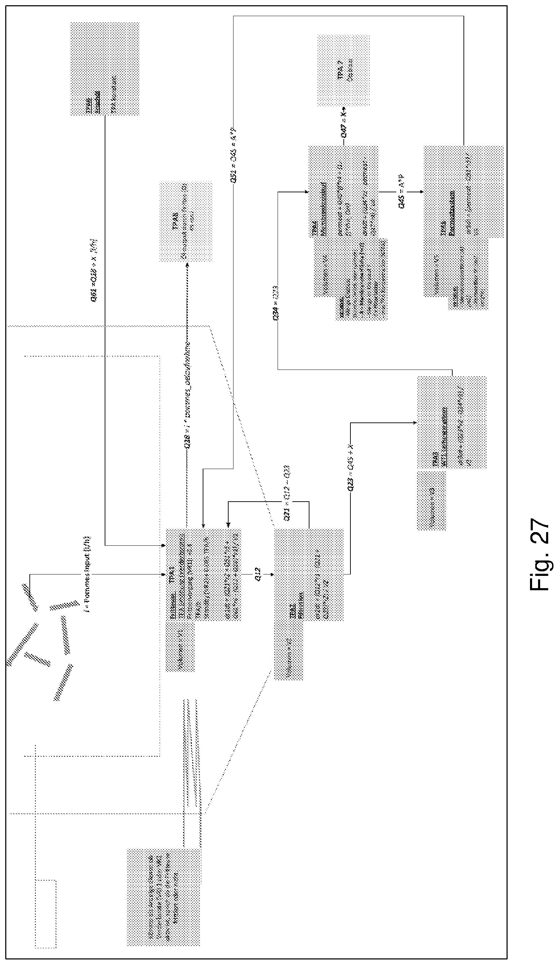

Eine Übersicht der aufgestellten Beziehungen liefert die Figur 27..

Die Simulation berechnet zum einen die TPA Konzentrationen [%] der Teilsysteme: Fritteuse, Permeatsystem und Membrankreislauf und zum anderen das entstehende Volumen des verbrauchten Frischöls sowie des Ölabfalls und des Öl-Outputs durch die Pommes Frites im Verlauf der Zeit. Parameter wie die Membranfläche, Filterfaktor, Permeatflux und Volumen im Membrankreislauf bleiben dabei variabel einstellbar.

Die Versuche aus Abschnitt 4.2.3.2 zeigten, dass bei zu hoher Konzentration des Retentats im Membransystem, die Filtrationsleistung abnimmt. Aus diesem Grund muss das Retentat zu einem bestimmten Zeitpunkt aus dem Membransystem abgelassen werden, um das System stabil zu halten. Die Simulation betrachtet dazu zwei mögliche Prozessführungen, welche einzeln simuliert werden können.

Kontinuierlicher Ölablass vom Retentatkreislauf:

Hierbei wird angenommen, dass das Retentat mit einer variabel einstellbaren, konstanteren Ölablassrate abgeführt wird. Um das Ablassen von einwandfreiem Frittieröl zu verhindern, wird ein Schwellenwert des $TPA_R$ definiert, ab welchem der Ablass gestartet wird.

Zyklischer Ölablass

Beim zyklischen Ölablass wird angenommen, dass der Membrankreislauf, also das Retentat, zweimal täglich komplett abgelassen wird.

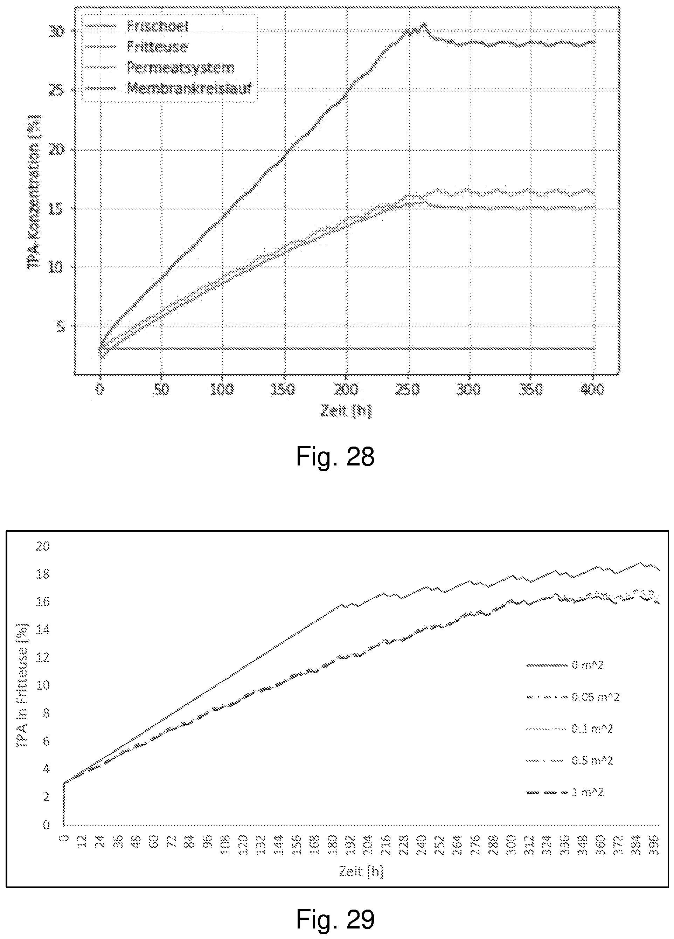

Die Figur 28 zeigt einen Ausschnitt aus der Simulation. Der Prozess wird über 400h simuliert und in der Graphik die TPA-Konzentrationen in den einzelnen Teilsystemen dargestellt. Der Permeatflux ist auf 1.20 l/h/m$^2$ und die Membranfläche auf 0.24 m$^2$ determiniert. Dabei ist zu sehen, dass sich die TPA-Konzentration in der Fritteuse und die des Permeatsystems angleichen. Da der Schwellenwert auf 16% TPA eingestellt ist und somit ab diesem TPA Gehalt Retentat aus dem Kreislauf abgelassen wird, ist an diesem Punkt eine Abflachung der Kurven ersichtlich. Die Konzentration des Membrankreislaufs, also des Retentats, nimmt zu und steigt im definierten Zeitraum auf maximal 31% TPA.

In Figur 29 wird der Einfluss der Membranfläche auf den TPA Verlauf in der Fritteuse aufgezeigt. Es ist ersichtlich, dass bereits ab einer geringen Membranfläche von 0.05m$^2$ eine Wirkung einsetzt, die sich bei Vergrösserung der Membranfläche nur geringfügig verändert. So beträgt der TPA nach 400h bei einer Membranfläche von 0.05 m$^2$ 16.48%. Wird die Membranfläche auf 1 m$^2$ erhöht, liegt der TPA am Ende der 400h bei 15.95%.

**4.5 Frittierversuch mit Prototyp**

**4.5.1 NIR Analyse**

Die Messungen mit dem FT-NIR ergaben Werte für TPA, SZ, AnZ und polymere Triglyceride (PTG). In den folgenden Abschnitten werden die Werte der einzelnen Verderbskennzahlen aufgezeigt und zusätzlich der berechnete DEGLEV dargestellt.

**4.5.1.1 TPA**

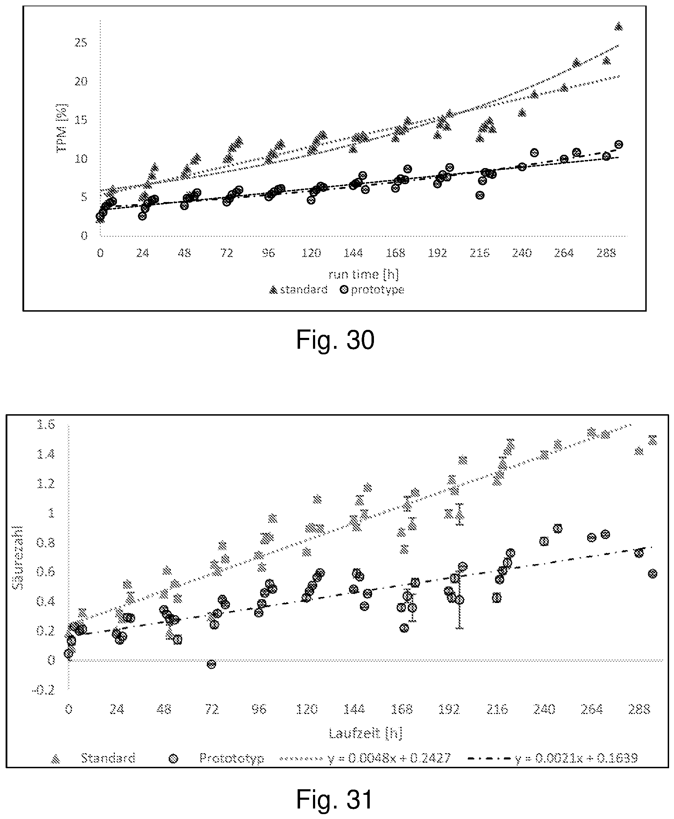

Wie in Figur 30 sichtbar, sind die TPA Werte des Prototyps über den gesamten Verlauf tiefer, als die der Standard-Fritteuse und steigen zudem langsamer an. Dies zeigt sich in der Steigung der beiden linearen Regressionsgeraden. So liegt die Steigung des Standards bei 0.052 und die des Prototyps bei 0.023.

Die Residual der FT-NIR Messungen betragen für den TPA im Durchschnitt 11-12%, die Standardabweichung im Durchschnitt unter 0.1 und gesamthaft nie über 0.4.

Die Regressionsgeraden weisen Bestimmtheitsmasse $R^2$ von 0.847 beim Standard bzw. 0.842 beim Prototypen auf. Am Ende der Versuche liegt der TPA des Standards bei 27.18 und der TPA des Prototyps bei 11.84. Gleichzeitig liegt der TPA vom Retentat bei 12.99. Der Kruskal Wallis-Test für die gesamten Datenreihen ergibt p-Werte von >0.002 und zeigt somit signifikante Unterschiede zwischen allen drei Probereihen ($\alpha$ = 0.05).

#### 4.5.1.2 Säurezahl

Die Säurezahlen der gemessenen Frittierölproben von Standard und Prototyp sind in Figur 31 in Abhängigkeit der Laufzeit aufgezeigt. Wie bereits beim TPA weist die Standardfritteuse im Vergleich zum Prototyp über die gesamte Laufzeit, eine höhere Säurezahl auf. Auch die Steigung der Regressionsgeraden des Standards ist mit 0.0048 höher, als die bei 0.0021 liegende Steigung des Prototyps ($R^2$=0.9033 bzw. 0.6852 beim Prototyp). Die Säurezahl am Ende der Versuche beläuft sich beim Standard auf 1.50 und beim Prototypen auf 0.59. Die Säurezahl vom Retentat beträgt zum Gleichen Zeitpunkt 0.54. Der Residual der Säurezahl NIR-Messungen beläuft sich im Durchschnitt auf unter 10%. Gemäss dem Kruskal-Wallis-Test sind die Datenreihen des Standards, Retentat und dem Prototyp signifikant unterschiedlich ($\alpha$ = 0.05).

#### 4.5.1.3 Anisidin Zahl

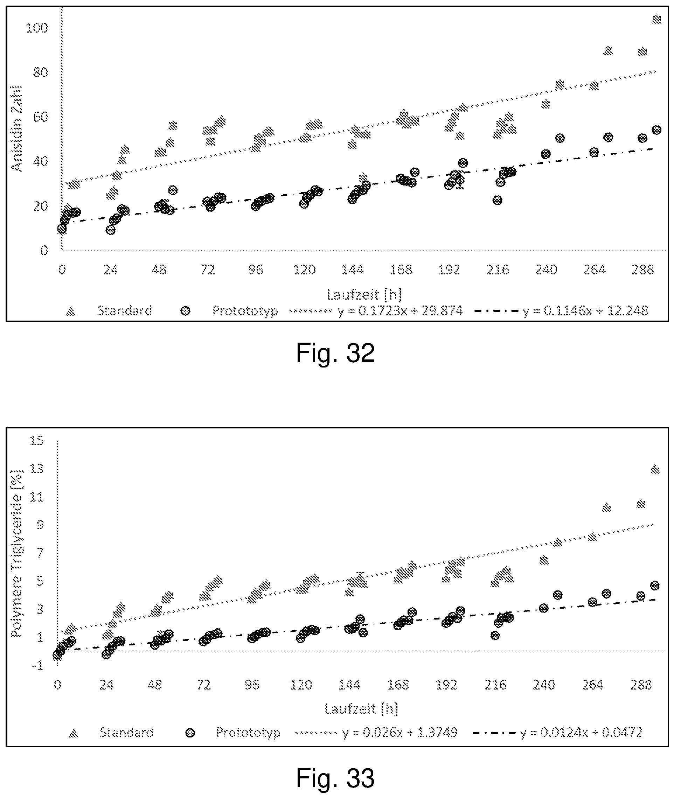

Der Residual der Anisidin Zahl Messungen liegt im Mittelwert bei 18%. Die Regressionsgeraden zeigen eine gering unterschiedliche Steigung. Die des Standards liegt bei 0.172 und die des Prototyps bei 0.115. Die Ausgangswerte liegen bei 9.67 beim Standard bzw. 9.87 beim Prototyp und steigen auf 104.38 und 54.38. Das Bestimmtheitsmass der Regressionsgerade vom Standard ist $R^2$ = 0.681 und das des Prototyps $R^2$ = 0.838. Die Datenreihen vom Standard, Retentat und Prototyp weisen laut Kruskal-Wallis-Test auch hier einen signifikanten Unterschied auf ($\alpha$ = 0.05). Figur 32 zeigt den Verlauf der Anisidin Zahl von Standard und Prototyp im Verlauf der Versuchszeit.

#### 4.5.1.4 Polymere Triglyceride

Wie in Figur 33 ersichtlich, liegen die PTG beim Standard höher als beim Prototypen und die Regressionsgerade zeigt eine grössere Steigung. So beträgt der Endwert des Standards 13.03% und die Steigung 0.026. Beim Prototypen sind es 4.70% bzw. 0.012 Steigung. Es besteht laut Kruskal-Wallis-Test ein signifikanter Unterschied aller drei Probenreihen, Standard, Retentat und Prototyp ($\alpha$ = 0.05).

#### 4.5.1.5 DEGLEV

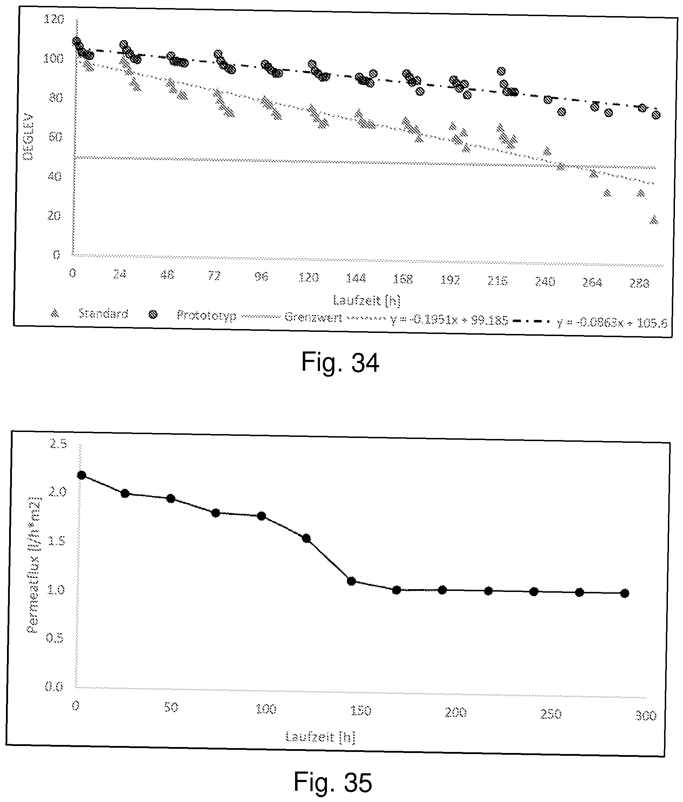

Der anhand der Formel 5 berechnete DEGLEV ist für den Standard und Prototypen in Figur 34 aufgezeigt. Der Grenzwert, welcher angibt ab wann ein Frittieröl als verdorben gilt, ist auf 50 festgelegt und in der Figur 34 mittels einer grünen Linie eingetragen. Das Frittieröl des Prototyps unterschreitet diese Grenze während dem gesamten Versuch nicht und weist nach 295h Laufzeit einen DEGLEV von 76.76 auf. Das Frittieröl der Standardfritteuse unterschreitet den Grenzwert am zwölften Versuchstag nach 264h Laufzeit und weist am Versuchsende einen Wert von 23.49 auf.

#### 5.5.2 Permeatflux

Der Permeatflux zu Beginn des Versuches liegt bei 2.18 l/h m². Im Verlauf des Versuches nimmt er ab und pendelt sich zwischen 1.00 und 1.10 l/h m² ein. Figur 35 zeigt den Verlauf des Permeatflux während des Frittierversuches.

#### 4.5.3 Viskosität

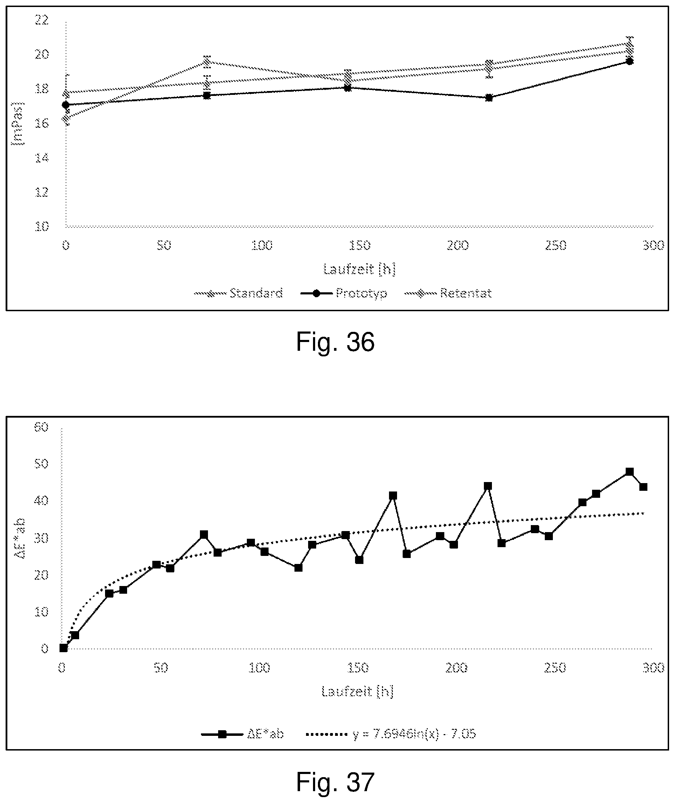

In Figur 36 sind die Proben vom Standard, Prototyp und Retentat gegenübergestellt. Dabei sind unterschiedliche Verläufe der Viskositätskurven ersichtlich. Die zuletzt gemessenen Proben nach 288h weisen alle eine Viskosität in einem Bereich zwischen 19.62 und 20.68 mPa·s auf. Der Kruskal-Wallis-Test über die gesamten Proben ergibt die in Tabelle 12 ersichtlichen p-Werte und somit einen signifikanten Unterschied zwischen dem Frittieröl aus der Standardfritteuse und dem Frittieröl des Prototypen und dem Retentat ($\alpha$=0.05).

Tabelle 12: P-Werte des Kurskal-Wallis-Test über den gesamten Viskositätsverlauf

| Probe | Standard | Prototyp | Retentat | Gruppen |
|---|---|---|---|---|
| Standard | 1 | 0.003 | 0.074 | A |
| Prototyp | 0.003 | 1 | 0.019 | B |
| Retentat | 0.894 | 0.019 | 1 | B |

### 4.5.4 Farbe

Um die Farbdifferenz zwischen Standard und Prototyp zu quantifizieren, wurde mit der Formel 1 die Farbdifferenz ΔE*ab berechnet und in Figur 37 dargestellt. Sie zeigt einen deutlichen Anstieg des ΔE*ab von 0.24 auf 43.83 und kann mit der Funktion y = 7.5007$ln(x)$ - 6.0945 und $R^2$ = 0.7378 beschrieben werden.

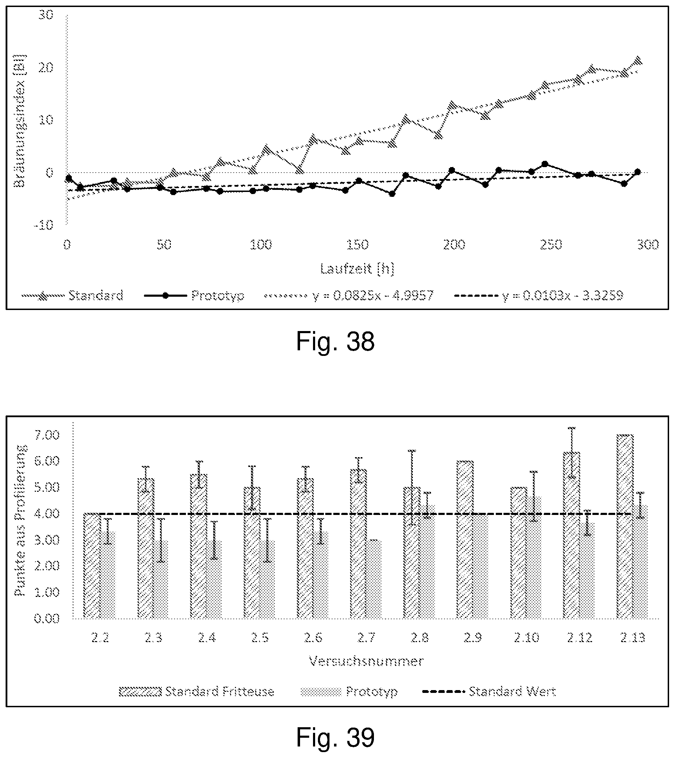

Der Bräunungsindex (BI) ist in Figur 38 dargestellt. Alle Messungen liegen zu Beginn des Versuchs im negativen Bereich. Während der BI vom Standard und Retentat im Verlauf der Zeit bis auf 21.55 bzw. 15.25 steigen, bleibt der BI vom Prototyp meist unter null und steigt auf maximal 1.71. Die Unterschiede werden zusätzlich durch die lineare Regressionsgerade sichtbar. Die des Prototyps weist eine Steigung von 0.0103 auf, die des Standards eine von 0.0825.

### 4.5.5 Sensorik

Der In-Out Test ergab für die Pommes Frites keine «out» Bewertung auf. Die Pommes Frites werden also während dem ganzen Versuch als geniessbar bewertet. Das Frittieröl der Standard Fritteuse wird am Versuchstag 6 von 33% der Prüfer (= ein Prüfer) und am Versuchstag 13 von 67% (= zwei Prüfer) als «just out» bewertet. An den restlichen Versuchstagen liegen 100% der Bewertungen «in» oder «just in» des Standardproduktes. Die Werte des Versuchstages 1 und 11 fehlen aufgrund von einer nicht ausreichenden Anzahl an Prüfpersonen.

Die Resultate des deskriptiven Teils des In-Out Tests werden in den folgenden Abschnitten für das Frittieröl und die Pommes Frites getrennt zusammengefasst. Hierbei wird sich auf die auffälligsten Attribute konzentriert.

#### 4.5.5.1 Frittieröl

Aussehen - Farbintensität

Die Figur 39 zeigt die wahrgenommene Farbintensitäten aus der Standard Fritteuse und des Prototyps. Die des Prototyp-Öles wird meist schwächer bewertet als die des StandardfritteusenÖles. Sie liegt bis zur Versuchsnummer 2.8 unter dem definierten Standardwert. Mit Berücksichtigung der Standardabweichung können an Versuchstag 8 und 10 keine Unterschiede in der Farbintensität festgestellt werden.

Geruch - Ranzig

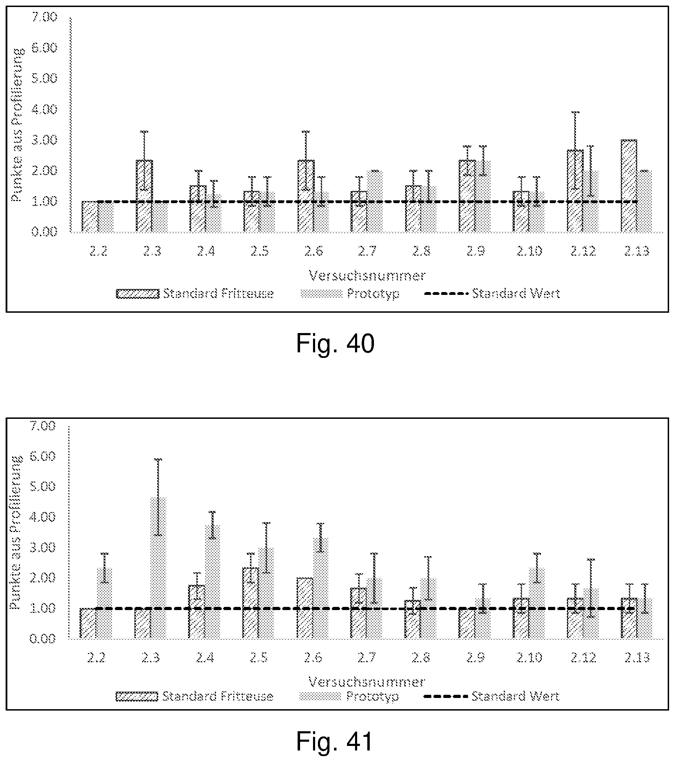

Das Frittieröl der Standard Fritteuse wird bereits am dritten Versuchstag als leicht ranzig wahrgenommen. Deutliche Unterschiede zwischen den beiden Ölen sind erst bei der Versuchsnummer 13 zu erkennen, wo die Ranzigkeit des Prototyp Frittieröles mit zwei Punkten bewertet wird und die der Standard Fritteuse mit drei Punkten. Figur 40 zeigt die Beurteilung der olfaktorischen Ranzigkeit im deskriptiven In-Out Test der Öle von Standard Fritteuse und Prototyp.

Geruch - Fischig

Die Figur 41 verdeutlicht, dass das Frittieröl des Prototyps zu Beginn als fischig wahrgenommen wird. Diese Wahrnehmung nimmt im Verlauf des Versuchs jedoch ab. Am Ende der Versuchsreihe wird das Attribut «fischig» olfaktorisch nur noch von einer Prüfperson schwach wahrgenommen.

Geschmack - Ranzig

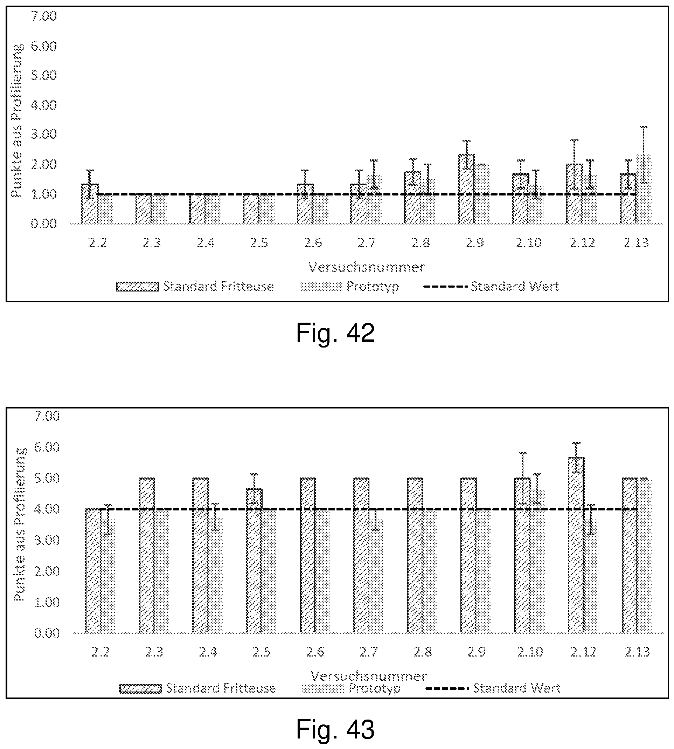

Bei der olfaktorischen Wahrnehmung werden die Frittieröle am siebten Versuchstag erstmalig als ranzig beurteilt. Wie in Figur 42 sichtbar, können mit Berücksichtigung der Standardabweichung, während der gesamten Versuchsreihe keine deutlichen Unterschiede zwischen Frittieröl aus der Standardfritteuse und Frittieröl aus dem Prototyp festgestellt werden.

### 4.5.5.2 Pommes Frites

Aussehen - Gold-Braun Färbung

Die Pommes Frites der Standard Fritteuse werden als intensiver in der Gold-Braun Färbung wahrgenommen als die des Prototypen. Am Ende der Versuchsreihe wird das Attribut bei beiden Frittierölen mit fünf Punkten bewertet. Figur 43 zeigt die Beurteilung der Gold-Braun Färbung im deskriptiven In-Out Test der Pommes Frites aus der Standard Fritteuse und Prototyp.

Geruch - Ranzig

Das Attribut Ranzig in Pommes Frites wird ofaktorisch bis zum Versuchstag 11 nicht wahrgenommen. Die Pommes Frites aus der Standard Fritteuse werden an den Versuchstagen 11 und 12 jeweils von einer Prüfperson mit zwei Punkten bewertet.

Geschmack - Röstig

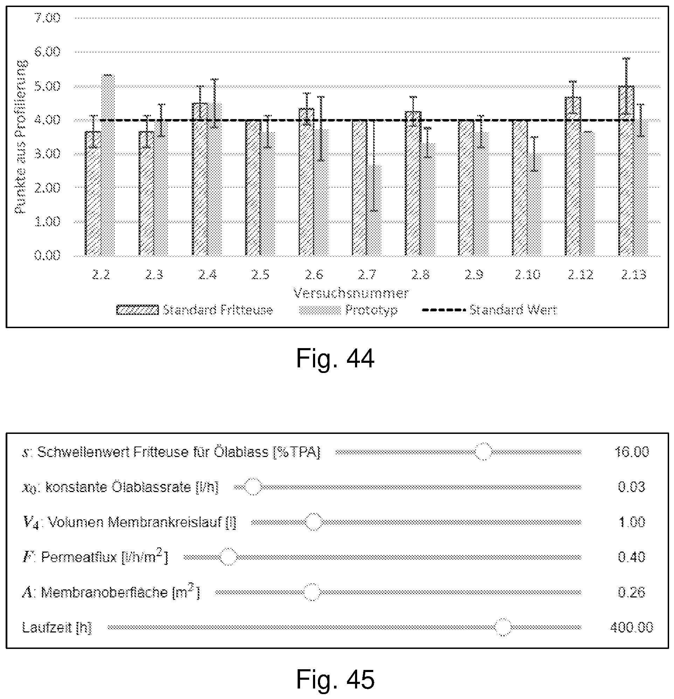

Das Attribut Röstig zeigt in Figur 44 keine klaren Tendenzen. Es wird meist im Bereich des Standardwertes wahrgenommen. Es zeigt bei den Versuchsnummern 2.8, 2.10 und 2.12 aber eine stärkere Wahrnehmung der Röstigkeit der Pommes Frites aus der Standard Fritteuse. Am Ende der Versuchsreihe sind, mit Berücksichtigung der Standardabweichung, keine Unterschiede mehr zu erkennen.

**4.6 Risikoanalyse**

In der Tabelle 13 ist die Übersicht der Risikoanalyse ersichtlich. Das Risiko der fehlenden Konformitätserklärung ist in der Risikodimension «Wirtschaft» eingeteilt und hat den höchsten Risikofaktor. Zu den A-Risiken gehören zudem zu hohe Produktionskosten und fehlende wirtschaftliche Mittel für die weitere Forschung. Diese zwei Risiken der Wirtschaftsdimension werden jeweils mit dem Risikofaktor 6 bewertet. Sie lassen sich kontrollieren und überwachen, hätten aber grosse Auswirkungen auf den weiteren Verlauf des Projekts.

Tabelle 13 Risikobewertung basierend auf sechs Risikodimensionen.

| Risikodimension | potenzielles Risiko | Wahrscheinlichkeit | Auswirkung | Risikofaktor | mögliche Gegenmassnahmen |
|---|---|---|---|---|---|
| Gesundheit | Schadstoffe reichern sich trotz sinkendem TPA im Frittieröl an und gelangen so in das Endprodukt. | 2 | 2 | **4** | Bei Feldversuchen sollten Frittierölproben auf Schadstoffe wie Acrylamid untersucht werden. |
|  | Membran erhält keine Konformitätserklärung für den Lebensmittelkontakt. | 3 | 3 | **9** | Direkte Kommunikation mit GMT und ggf. Angebot zu persönlichem Gespräch. Teile der Konformitätsarbeit könnten beispielsweise über das Projekt übernommen werden. |
| Umwelt | Energieverbrauch zu hoch, sodass die Öleinsparung umwelttechnisch keinen Sinn mehr macht. | 1 | 2 | **2** | Energieverbrauch schon von Beginn des Systemdesigns berücksichtigen. |
| Soziales | Akzeptanz bei den Konsumenten ist nicht vorhanden. | 1 | 1 | **1** | Kommunizieren, dass keine Zusatzstoffe verwendet werden und der Prozess auf einem rein physikalischen Trennverfahren beruht und einwandfreie Produkte hervorbringt. |
| Wirtschaft | Produktionskosten übersteigen das wirtschaftlich vertretbare Limit. | 2 | 3 | **6** | Kostenberechnungen bereits früh im Systemdesign durchführen, regelmässig überwachen und gegebenenfalls. Massnahmen zur Kostenreduktion ergreifen. |
|  | Fehlende wirtschaftliche Mittel zur Weiterführung des Projektes bzw. die Entwicklungskosten übersteigen das Projektbudget. | 2 | 3 | **6** | Kommunikation des zu Verfügung stehenden Projektbudgets und dessen Überwachung. Projektplanung laufend überwachen und bei Unsicherheiten oder Engpässen Projektpartner informieren. |
| Sicherheit | Leitungen oder Schläuche geben dem hohen Druck nach bzw. die nötigen Sicherheitszertifikate werden nicht erteilt. | 1 | 3 | **3** | Alle Sicherheitsbestimmungen müssen eingehalten und ausschliesslich Materialien verwendet werden, die den Temperatur- und Druckbedingungen standhalten. Die nötigen Sicherheitsmassnahmen sollten bekannt und dokumentiert werden. |

| Risikodimension | potenzielles Risiko | Wahrscheinlichkeit | Auswirkung | Risikofaktor | mögliche Gegenmassnahmen |
|---|---|---|---|---|---|
| **Technik** | Pumpenbeschaffung mit den nötigen Anforderungen erweist sich als nicht möglich. | 2 | 2 | **4** | Frühzeitig verschiedene Lieferanten kontaktieren, ähnliche Anwendungen identifizieren und deren Pumpen evaluieren. |
| | Die Hitze im Fritteusen-Innenraum könnte die Steuerungen belasten oder beschädigen. | 2 | 2 | **4** | Wo möglich werden Leitungen isoliert und ggf. eine Lüftung installiert. |
| | Das System passt nicht in eine Fritteuse. | 2 | 2 | **4** | Die Auslegung der neuen Fritteuse so definieren, dass der Prozess optimiert ist, und mit möglichst wenig Materialien auskommt (*reduce to the max*). Das Filtersystem kann im Fall von zu engen Platzverhältnissen ggf. auch als externes Tool entwickelt werden. |
| | Die Reinigung des gesamten Systems übersteigt die Kompetenz des bedienenden Mitarbeiters und ist zu aufwendig für den alltäglichen Betrieb, was die Fritteuse für den Kunden unattraktiv macht. | 2 | 1 | **2** | Die Handhabung der Reinigung sollte bereits in der Phase des Systemdesigns betrachtet werden und alle Teile so konstruiert sein, dass sie mit wenig Aufwand gereinigt werden können. Das Membranmodul könnte auch durch den Servicetechniker ausgetauscht und extern gereinigt werden. |
| | Das System bringt nicht konstant die gleichen Leistungen. Da viele neue Prozessschritte im System vorhanden sind, ist die Funktionsweise noch schwer voraussehbar. | 3 | 1 | **3** | Durch die verschiedenen Frittiermedien und - Güter, herrschen jeweils andere Bedingungen. Die Anlage sollte deshalb in breiten Feldversuchen getestet werden (SVGroup). So können die Fritteusen auf die individuellen Bedingungen jedes einzelnen Kunden eingestellt werden. |
| | Feststoffe im System führen zu Störungen und Ausfällen. | 3 | 1 | **3** | Der Vorfiltration sollte in der weiteren Entwicklungsphase genügend Beachtung geschenkt werden, um jegliche Partikel im restlichen System auszuschliessen und eine optimale Vorfiltration zu gewährleisten. |

EP 4 103 028 B1

**5 Diskussion**

Aus den erzielten Resultaten sollen im folgenden Abschnitt Schlüsse für eine erfolgreiche Fortsetzung des Scale-Up gezogen und aufgezeigt werden.

**5.1 Allgemeine Vorgehensweise**

Die durchgeführten Arbeiten können zum grössten Teil an den im Theorieteil (Abschnitt 1.4.2, Figur 4) aufgezeigten Aufbau eines Konzeptdesigns gespiegelt werden. Die Definition der Zielsetzung wurde im Vorfeld dieser Arbeit durchgeführt und wurde deshalb nicht genauer betrachtet. Die Membranselektion wurde durchgeführt und wird weiter unten diskutiert.

Die nächsten Schritte nach Figur 4 sind die Bestimmung der Systemparameter und die Durchführung von Modultests. Diese Schritte wurden mit der Prozessanalyse (Abschnitt 5.2) und den Membrancharakterisierungen (Abschnitt 5.3) durchgeführt. Bei den Pilotversuchen sollte bereits die Auswahl der Konfiguration der Membranelemente durchgeführt werden (Siehe auch Abschnitt 1.4.2.1).

Die Membrancharakterisierung lieferte wichtige Daten, um mit dem Systemdesign starten zu können und das entwickelte Verfahren in einer Prozesssimulation abzubilden. Die Simulation zeigte daraufhin auf, wie sich die verschiedenen Systemparameter auf den TPA und den Frittierölverbrauch auswirken.

Mit der Konstruktion und dem Bau des ersten Prototyps sowie den damit durchgeführten Frittierversuchen ist eine erste Evaluierung des Systems vorgenommen worden, welche in Abschnitt 5.6 diskutiert wird.

Die in Abschnitt 5.7 diskutierte Risikoanalyse sollte während der Optimierung des Systemdesigns beachtet und regelmässig aktualisiert werden.

Allgemein kann bemerkt werden, dass während dem gesamten Systemdesign das Einbinden eines Konstrukteurs von Vorteil ist. Dieser sollte die folgenden Kompetenzen mitbringen:

- Kann das Verfahren professionell abbilden
- Kann die Umsetzbarkeit beurteilen
- Kann einen systematisch aufgebauten Prototyp konstruieren und umzusetzen

Zwar konnte eine primäre Evaluierung des Systems mit dem Bau des in dieser Arbeit beschriebenen Prototyp durchgeführt werden, doch handelte es sich dabei erst um eine Annäherung bzw. Vereinfachung des angedachten Verfahrens. Um in Zukunft ein geschlossenes System in einem, für die Endanwendung realistischem Massstab, entwickeln und testen zu können, ist dieser externe Beitrag für die Konstruktionsarbeit unabdingbar.

**5.2 Prozessanalyse**

**5.2.1 Temperatur- und Luftfeuchtigkeitsmessungen in einer Standard Fritteuse**

Die Fritteuse war in einem normalen Mittagsservice im Einsatz, in dem Pommes Frites produziert wurden. Die Versuchsbedingungen können daher als sehr praxisnah angesehen werden. Die gemessenen Temperaturen waren jedoch tiefer als erwartet. Im Vorfeld der Messungen wurde vermutet, dass im Inneren der Fritteuse Temperaturen von über 100°C herrschen, was die Auslegung der zu verbauenden Materialien in der neuen OLFO Fritteuse beeinflussen würde. Da die Temperaturen der Oberflächen jedoch 60°C nicht überschritten, sind sie für die Verfahrenstechnik wenig problematisch. Allerdings ist anzumerken, dass bei einer geplanten Neuentwicklung, Frittieröl mit Temperaturen von bis zu 180°C durch Leitungen im Innenraum der Fritteuse fliessen wird und dies zu deutlich höheren Umgebungstemperaturen führen kann.

Da an Werkstücken in Maschinen ein Grossteil der geometrischen Abweichungen auf Temperatureinflüsse zurückzuführen sind, sollte bei der Entwicklung einer geschlossenen Prototypfritteuse der herrschenden Temperaturen genügend Beachtung geschenkt und die Werkstoffe dementsprechend ausgewählt werden.

**5.2.2 Massenbilanz während der Membranfiltration**

Es wird angenommen, dass im Membransystem keine Masse verloren geht. Die analysierten TPA-Gehalte des Permeats und Retentats müssten sich also theoretisch mit dem $TPA_F$ ausgleichen. So können mit der Massenbilanz unerwartete Veränderungen des Produktes während dem Membranseparationsprozess erfasst werden.

Bei Untersuchungen zur Massenbilanz bei der Membranfiltration (PERVAP 4060) mit Frittieröl wurde ein TPA Verlust von 29.5g während einer Stunde Filtration festgestellt. Die Filtrationszeit betrug dabei allerdings lediglich 60min, was durch den geringen Permeatflux nur zu einem schwachen Unterschied der $TPA_F$ und $TPA_R$ führte. Dieser geringe Unterschied vergrössert wiederum den Einfluss von möglichen Messungenauigkeiten bei der TPA Analyse auf die Massenbilanz. Um diesen Einfluss zu minimieren wurde in diesem Versuch die Filtrationszeit erhöht und somit auch das Delta zwischen $TPA_F$ und $TPA_R$ vergrössert, um so verlässlichere Resultate zu erlangen.

Die Resultate dieses Versuches zeigten, mit einem TPA Verlust von 10.35g, einen Verlust von 1.79% des Ausgangs-TPA im Feed. Nun könnte daraus geschlossen werden, dass während der Filtration Veränderungen im Frittieröl auftreten. Da auch während der Filtration Oxidations- bzw. Abbauprozesse ablaufen können, wäre allerdings eher eine Erhöhung des TPA zu erwarten gewesen. Daher ist der prozentual kleine Verlust von 1.79%, eher auf Messungenauigkeiten der Analytik zurückzuführen. Aus der Massenbilanz wird daher geschlossen, dass während der Membranfiltration keine Veränderungen der Konzentrationen stattfinden bzw. keine Masse an TPA entsteht oder verloren geht.

### 5.3 Membranfiltration

Bevor in den Unterabschnitten detailliert auf die einzelnen Versuche eingegangen wird, befasst sich dieser Teil mit dem allgemeinen Überblick und Diskussion der Membranversuche.

Es konnte festgestellt werden, dass sich die Membran oNF-3 der GMT Membrantechnik GmbH für den Einsatz mit Frittieröl am besten eignet. Sie weist, verglichen mit der PERVAP 4060 einen wesentlich höheren Permeatflux bei ähnlichem Rückhaltefaktor auf. Da für die PERVAP 4060 somit eine höhere Membranfläche benötigt werden würde, wird im weiteren Verlauf des Projektes mit der GMT oNF-3 weitergearbeitet.

Wird die Leistung der Membranen mit der Literatur verglichen, wird ersichtlich, dass der Permeatflux beider getesteten Membranen weiterhin unter der Leistung einer Standard Membrananwendung liegt. Der Permeatflux einer typischen NF Anwendung liegt bei 20-50 $l/m^2$ h (5-20 bar) und ist somit um ein Zehnfaches höher als bei den getesteten Membranen.

Zusammenfassend wurden bei den charakterisierten Membranen folgende, in Tabelle 14 dargestellten, Abhängigkeiten deutlich.

Tabelle 14: Zusammenfassung der Einflüsse der verschiedenen Prozessparameter bei den Versuchen mit der GMToNF-3 und der PERVAP 4060.

| Einflüsse der Prozessparameter | | | |
|---|---|---|---|
| *Parameter* | | *Permeatflux* | *Rückhaltefaktor* |
| *Druck* | hoch | steigt ↑ | steigt ↑ |
| | tief | sinkt ↓ | sinkt ↓ |
| *Temperatur* | hoch | steigt ↑ | sinkt ↓ |
| | tief | sinkt ↓ | steigt ↑ |
| *Überströmung* | hoch | steigt ein wenig ↑ | kein Effekt |
| | tief | sinkt ein wenig ↓ | kein Effekt |
| *$TPA_R$* | hoch | sinkt ↓ | steigt ↑ |
| | tief | steigt ↑ | sinkt ↓ |

De facto liegt für die GMT oNF-3 keine Konformitätserklärung für den Einsatz in Lebensmittel vor. Diese ist für den kommerziellen Einsatz der Membran mit Lebensmittelkontakt allerdings essentiell.

Der Permeatflux der Charakterisierungsversuche wurde jeweils über einen Filtrationszeitraum von einer Stunde gemessen, um kurzzeitige Schwankungen während den Messungen auszugleichen. Allerdings wären für Resultate mit statistisch abgesicherten Werten Bestätigungsversuche nötig.

Obwohl bei allen Versuchen gebrauchtes Frittieröl vom gleichen Restaurationsbetrieb eingesetzt wurde, sind die Ausgangsöle der einzelnen Versuche, aufgrund der verschiedenen Einflüsse während dem Frittieren, nicht immer identisch. Deshalb sollten die Absolutwerte der Versuche mit Vorsicht verglichen werden und der Fokus auf den Verlauf der Tendenzen gesetzt werden.

### 5.3.1 Membranfiltration nach vorhergehender Fraktionierung

Wie bereits in Abschnitt 3.4.1 ersichtlich, war das Ziel dieses Versuches die Fettkristalle, die bei der Fraktionierung im Contherm entstehen, zu separieren. Eine Schwierigkeit bestand darin, das Frittieröl bis zum Keramikmodul auf den gewünschten -4°C zu halten. Als Membran wurde die Keramikmembran mit 5nm Porengrösse gewählt, da sie bei vorausgegangen Versuchen den höchsten Flux aufwies (jedoch keine Rückhaltung der TPA). Es wurde angenommen, dass damit die Fettkristalle zurückgehalten werden können und sich polare Anteile durch die Membran abscheiden.

Die Resultate zeigten bei diesem Versuchsaufbau keinerlei Flux. Somit konnten keine weiteren Resultate generiert werden und dieser Ansatz wird nicht weiterverfolgt. Dies auch aus dem Grund, dass eine Kühlung von Frittieröl auf -4°C in einem laufenden Frittiersystem nicht realistisch erscheint und einen hohen Energieverbrauch bedeuten würde.

### 5.3.2 Membranselektion

Mit der GMT oNF-1 Membran konnten während der Vorversuche keine zufriedenstellenden Resultate erzielt werden. Zwar lag der Rückhaltefaktor über dem Referenzwert der PERVAP 4060, der geringe Permeatflux relativiert dies allerdings wieder, weshalb die Membran für weitere Versuche als ungeeignet angesehen wird. Die GMT oNF-3 Membran wies bereits beim ersten Versuch einen zufriedenstellenden Rückhaltefaktor und einen im Vergleich zum Referenzwert mehr als dreifachen Permeatflux auf. So wurden keine Bestätigungsversuche durchgeführt und nach einer Laufzeit von zwei Stunden entschieden, diese Membran weiter zu charakterisieren.

### 5.3.3 PERVAP 4060

Die Resultate der Versuche liegen im erwarteten Bereich. So konnte die Annahme, dass sich der Permeatflux bei erhöhtem $TPA_R$ senkt bestätigt werden. Es konnte gezeigt werden, dass sich der Rückhaltefaktor mit zunehmendem $TPA_R$ erhöht. Diese beiden Effekte könnten auf die erhöhte Konzentration an PTG zurückzuführen sein. Mit steigender PTG-Konzentration steigt auch die Viskosität des Frittieröles, was wiederum den Permeatflux negativ beeinflusst und auch den Rückhaltefaktor erhöhen kann.

Der letzte Versuchsdurchlauf des Versuchs aus Abschnitt 4.2.3.1, bei dem das Retentat mit dem Ausgangsfrittieröl ersetzt wurde, zeigte wieder eine Erhöhung des Permeatflux in den, anhand der Regressionsgeraden, zu erwarteten Bereich. Dies bestätigt die Annahme, dass die Abnahme des Permeatflux von der Retentat Zusammensetzung und nicht von einem Fouling abhängt.

Die Probennahme während diesem Langzeitversuch wurde in zeitlich unregelmässigen Abständen durchgeführt. Eine regelmässigere Probennahme im Versuchsaufbau wäre wünschenswert gewesen. Da aber hauptsächlich der Einfluss der TPA Konzentration im Retentat beurteilt werden sollte, wurde dies aus organisatorischen Gründen vernachlässigt.

### 5.3.4 GMT oNF-3

Die Einflüsse des Druckes und der Temperatur auf den Permeatflux lagen im erwarteten Rahmen und verhalten sich tendenziell ähnlich wie die der PERVAP 4060. Es ist bekannt, dass der Permeatflux bei steigendem Druck und sinkender Viskosität zunimmt. Da die Viskosität von Öl temperaturabhängig ist und bei steigender Temperatur abnimmt, kann der erhöhte Permeatflux bei steigender Temperatur mit der dadurch sinkenden Viskosität in Zusammenhang gebracht werden. Die optimalen Temperaturbedingungen liegen deshalb vermutlich am Schnittpunkt der beiden Regressionsgeraden in Figur 21.

Bei der Charakterisierung der Durchflussabhängigkeit wurde der letzte Versuch oNF3-53c4 nach 15 Minuten abgebrochen, da die Temperaturentwicklung durch die Pumpe so hoch war, dass keine konstanten und somit vergleichbaren Temperaturwerte eingehalten werden konnten. Aus diesem Grund wurden die in den 15 Minuten gemessenen Parameter auf eine Stunde hochgerechnet. Laut Literatur müsste der Permeatflux bei steigender Überströmung zunehmen. Dies konnte durch Versuche jedoch nicht eindeutig bestätigt werden.

Die Versuche 53a.1, 53b.2 und 53c.1 wurden mit den exakt gleichen Versuchsbedingungen durchgeführt und können deshalb miteinander verglichen und als Indikator der Reproduzierbarkeit verwendet werden. Zur besseren Übersicht sind diese Resultate in Tabelle 15 ersichtlich. Die Permeatflux Werte der drei Versuche weisen eine Standardabweichung von 0.13 l/m²h auf und die des Rückhaltefaktors eine Standardabweichung von 0.049. In Versuch 53c war der $TPA_R$ um rund 7.5% tiefer als bei 53a und 53b. Dies erklärt den höheren Permeatflux und den tieferen Rückhaltefaktor. Anhand diesem Vergleich der Resultate wird davon ausgegangen, dass die Membran bei den gleichen Prozessbedingungen eine konstante Leistung aufbringt.

Tabelle 15: Die zum Vergleich des Permeatflux und Rückhaltefaktor zusammengestellten Resultate der Versuche 53a.1, 53b.2 und 53c.1.

| Versuchsnummer | TPA Retentat [%] | Permeatflux [l/h·m₂] | Rückhaltefaktor |
|---|---|---|---|
| 53a.3 | 27.08 | 2.05 | 0.51 |

(fortgesetzt)

| Versuchsnummer | TPA Retentat [%] | Permeatflux [l/h·m$_2$] | Rückhaltefaktor |
|---|---|---|---|
| 53b.2 | 26.99 | 2.00 | 0.49 |
| 53c.1 | 19.56 | 2.29 | 0.40 |

Die Viskosität des zu filtrierenden Mediums ist bei der Auslegung eines Membranfiltersystems ein wichtiger Parameter, der zu bestimmen ist. Deshalb wurden Viskositätsmessungen des Retentates durchgeführt und diese in Figur 25 im Verlauf der Zeit aufgezeigt. Sie nimmt wie erwartet durch die Aufkonzentrierung der TPA zu. Bei einem TPA Wert von 51% liegt sie bei 3 5.70mPa·s. Mit Blick auf die PTG wird der Grund für die erhöhte Viskosität deutlich. Liegt der PTG Gehalt zu Beginn des Langzeitversuchs (Viskosität: 24.35mPas) noch bei 9.53%, steigt dieser bis auf 27.94% an und verursacht so vermutlich den Anstieg der Viskosität.

## 5.4 Systemdesign

In den Vorversuchen wurde klar, dass sich der gewünschte Teil des Frittieröles, also der Teil mit den tieferen TPA, im Permeat befindet. Die Schwierigkeit beim Systemdesign bestand nun darin, einen Prozess zu entwickeln, der diesen Voraussetzungen gerecht wird. Hätten sich die Abbauprodukte im Permeat befunden und dieses den hohen Gehalt an TPA aufgewiesen, hätte ein einfacherer Prozess ausgereicht und die kontinuierliche Abführung des Permeats hätte genügt. So musste jedoch ein System mit zwei Kreisläufen entwickelt werden, um die Vermischung des Retentates mit hoher Konzentration an TPA, mit dem sich im Frittierbecken befindenden Frittieröl zu verhindern. Dieses komplexere System führt allerdings dazu, dass mehr Apparaturen wie Pumpen und Ventile eingesetzt werden müssen und das System so fehleranfälliger wird. Für eine zuverlässige Funktion des gesamten Systems ist es essentiell, dass keine Feststoffpartikel ins Leitungssystem gelangen, welche zur Verschmutzung oder Verstopfung von Ventilen oder Pumpen führen könnten. Zudem neigen Ströme mit einem Feststoffgehalt an Obeflächen zu verkleben oder sich in toten Räumen abzulagern. Dies unterstreicht, dass die gesamte Fritteuse im hygienischen Design (hygienic design) konzipiert werden sollte. Dieses zielt unter anderem darauf ab, tote Räume zu verhindern und die Lebensmittelsicherheit zu verbessern. Hierbei sind besonders die Dichtungen zu beachten. Bei Dichtungen können durch Druck- und Temperaturveränderungen Deformationen entstehen und so auch die genannten toten Räume. Das hygienic design sollte auch bei der Materialauswahl angewendet werden. Es sollten physiologisch unbedenkliche Materialien eingesetzt werden, die keine Wechselwirkungen mit dem Lebensmittel und keine Stoffmigration zulassen. Beispiele für solche Materialien sind Edelstahl 316L, PEEK oder PTFE. Kontaminationen des Produktes, Korrosion, Verschmutzung und Schaumbildung können so verhindert werden.

Der Wärmetauscher im Prozess ist nötig, da die Membrananlage und die Membranen Temperaturen von 170°C nicht zulassen und die mögliche Auswahl an Pumpen und anderen Armaturen grösser ist, wenn sie für tiefere Temperaturen ausgelegt sein müssen. Allerdings sollte die Abkühlung auf ein Minimum reduziert werden und eine Wärmerückgewinnung stattfinden, um den Energieverbrauch zu minimieren.

Um einen ständigen Druckverlust im Membranfiltersystem zu verhindern, und so Energie einzusparen, wird mit dem Rückhalteventil (ID: 7.1) der Druck im System gehalten. So muss ausschliesslich die Pumpe 2 den Druck von 20bar aufbringen (bei 0.4 l/h). Die Pumpe 3, die einen Durchfluss von ca. 170l/h aufbringen sollte, kann so drucklos betrieben werden. Die entstehende Wärme bei der Querstromfiltration könnte mit einer Luftkühlung in Wärmetauscher 2 abgeführt werden.

Die Regelung des Ablassventils ist noch zu definieren und sollte so eingestellt werden, dass die TPA Konzentration im Membrankreislauf einen vorbestimmten Wert nicht übersteigt. Anhand des Langzeitversuchs aus Abschnitt 4.2.3.2 sollte dieser Wert zwischen 40 und 45% TPA festgelegt werden. Ab dieser Konzentration nimmt die Viskosität soweit zu, dass kein ausreichender Permeatflux mehr garantiert werden kann und das Frittieröl verdünnt werden muss. Zudem ist zu bedenken, dass die TPA Konzentration im Permeat direkt von der TPA Konzentration im Retentat abhängt. Um mit dem Permeat noch einen positiven Effekt auf die Ölqualität in der Fritteuse haben zu können, sollte der TPA$_P$ 18% nicht überschreiten. Das würde bedeuten, dass bei einem Filterfaktor von 0.6 der TPA$_R$ bei maximal 45% liegen darf. Dieser Wert müsste mit geeigneten Sensoren überwacht werden, um damit die Ventile anzusteuern. Es sind zwei Arten des Ölablasses denkbar. Zum einen den kontinuierlichen Ablass mit definierten Volumenstrom, sobald ein definierter TPA Wert erreicht ist, oder einen batchartigen Ablass des gesamten Retentatkreislaufes nach Erreichen des maximal TPA$_R$. Diese zwei Arten werden in Abschnitt 4.4 bzw. 5.5 beschrieben und diskutiert.

Der Permeatflux wird im Wärmetauscher 1 wieder erhitzt und zurück in die Fritteuse geführt. Wichtig ist hierbei, dass der Zufluss im Frittierbecken unter dem Ölniveau platziert ist, damit kein zusätzlicher Sauerstoffkontakt entsteht. Dies gilt für das gesamte System, es sollte idealerweise komplett geschlossen sein, um vor Licht und Sauerstoff geschützt zu werden.

Das System ist so zu designen, dass eine Reinigung für die Gastronomie-Mitarbeit so einfach wie möglich durchzuführen ist. Um die Lebensdauer der Membranen zu verlängern und die Reinigung der Membran zu ermöglichen, wäre ein auswechselbares Membranmodul möglich, das durch den Servicemitarbeiter komplett ausgetauscht werden kann, um es daraufhin betriebsintern zu reinigen und bei Bedarf die Membranen zu erneuern. Ein Ausfall der Fritteuse während der Reinigung kann so vermieden werden.

Anhand der Versuche konnten einige Übertragungskriterien identifiziert werden, welche für eine erfolgreiche Modelübertragung bzw. Massstabveränderung beachtet werden müssen. Um im veränderten Massstab vergleichbare Ergebnisse zu erzielen ist es wichtig, dass die beiden Systeme eine geometrische Ähnlichkeit aufweisen, also vom gleichen Membranmodultyp sind. Des Weiteren sollten Parameter wie TMP, Überströmungsgeschwindigkeit, Rückhaltefaktor sowie die Öltemperatur konstant sein (Siehe auch Abschnitt 5.3). Da es sich beim Membransystem um ein strömungsabhängiges System handelt, sollte für die Massstabsveränderung die dimensionslose Reynolds-Zahl herangezogen und beachtet werden. Mit dem aktuellen System konnte diese allerdings nur grob berechnet werden, da Angaben zu den genauen Massen der Membranplatten vom Hersteller nicht zu Verfügung gestellt wurden und nur schwer messbar sind. In Mikrokanälen gilt eine Strömung als turbulent, wenn Re >300. Die berechnete Reynold-Zahl liegt bei 0.035 und somit klar im laminaren Bereich.

## 5.5 Simulation

Die Simulation erwies sich als nützliches Tool zum besseren Verständnis der Zusammenhänge im gesamten System. So konnte festgestellt werden, dass die Membranfläche bzw. Der Permeatflux einen kleineren Einfluss auf das gesamte System haben als zunächst angenommen. In Figur 29 war zu sehen, dass die Membranfläche von $0.05 m^2$ bereits ausreichen würde, um die TPA Konzentration konstant zu halten und mit einer Erhöhung der Fläche keine wesentlichen Verbesserungen zu erzielen sind. Dies lässt darauf schliessen, dass das kontinuierliche Ablassen von altem Frittieröl allein, bereits einen Einfluss auf die Lebensdauer des Frittieröles hat. Diese Punkte müssten in einem praktischen Versuch bestätigt werden.

Die Kurven des TPA Gehaltes des Permeat und der Fritteuse gleichen sich im Verlauf der Zeit an. Dies zeigt die in Abschnitt 5.4 bereits angesprochene Limitierung des Systems. Bei steigender TPA-Konzentration im Retentat steigt zeitgleich die TPA-Konzentration im Permeat, da diese direkt vom TPAR und dem Rückhaltefaktor abhängt. So kann der Rückhaltefaktor als entscheidendes Kriterium für die kontinuierliche Membranfiltration in einer Gastronomiefritteuse angesehen werden.

Der Vergleich der Ölablassarten lässt sich mit der Simulation vereinfacht durchführen. Die Menge des Ölverbrauchs hängt beim kontinuierlichen Ablass stark vom Volumenstrom ab. Ist dieser hoch steigt der Frittierölabfall, gleichzeitig verbessert sich aber die Ölqualität. Eine Frittierölablassrate von 0.03 l/h bei einem Schwellenwert von 16% TPA sollte laut Simulation ausreichen, um den TPA Gehalt in der Prototypfritteuse konstant auf unter 18% zu halten.

Mit in Figur 45 aufgezeigten Einstellungen liegt das Volumen des benötigten Frischöles mit der kontinuierlichen Ablassart bei rund 58 Liter. Wird auf den batchweisen Ablass umgestellt, beläuft sich die benötigte Frischölmenge auf rund 85 Liter. Dies allerdings bei einer besseren Ölqualität in der Fritteuse. Zudem ist anzumerken, dass beim batchweisen Frittierölablass der Retentatkreislauf von Beginn an zweimal täglich entleert wird. Dies führt dazu, dass das Frittieröl des Retentatkreislaufs trotz tiefer TPA-Konzentration entsorgt wird. Wie beim kontinuierlichen Ablass müsste auch hier ein Schwellenwert definiert werden, der das Ablassen von (frischem) Frittieröl verhindert.

Um alle Einflüsse durchsimulieren und so Optimierungen vornehmen zu können, ist eine Erweiterung der Simulation zu empfehlen. Eine übersichtliche Benutzeroberfläche mit allen verstellbaren Parametern würde ein effizientes Arbeiten ermöglichen und die Überwachung aller hinterlegten Daten erleichtern.

## 5.6 Frittierversuch mit Prototyp

### 5.6.1 Versuchsaufbau

Der verwendete Prototyp weicht von der in Abschnitt 4.3 aufgeführten Verfahrensskizze ab. Der in Figur 26 aufgezeigte, erste Kreislauf (grün) wurde nicht berücksichtigt. Es wurde ausschliesslich der Kreislauf der Membranfiltration nachgebaut, um dessen Auswirkungen auf eine sich im Betrieb befindende Fritteuse isoliert aufzuzeigen. Der erste Kreislauf bei der kontinuierlich über den Tiefenfilter filtriert werden soll, wurde zeitgleich betrachtet. So können beide Kreisläufe unabhängig voneinander auf dessen Wirksamkeit beurteilt werden.

Die Vergleichbarkeit des Prototyps mit der Standard Fritteuse war während dem gesamten Versuchs dadurch gegeben, dass in beiden Fritteusen jeweils die exakt gleichen Arbeitsschritte durchgeführt wurden. Somit konnte auch bei ändernden Bedingungen eine Vergleichbarkeit der beiden Fritteusen garantiert werden. Zu beachten ist jedoch, dass trotz gleich grosser Frittierbecken, das Frittieröl/Frittiergut Verhältnis nicht gleich war. Der relativ grosse Feedtank im Membrankreislauf, welcher mit der Fritteuse direkt verbunden ist, vergrösserte die effektive Ölmenge im gesamten Kreislauf der Prototyp Fritteuse. Dies könnte aufgrund einer grösseren Menge an Frischöl zu einem langsameren Verderb im Prototyp geführt haben. Durch die Probennahme im Frittierbecken des Prototyps sowie im Retentatkreislauf wurde dem Prototypsystem jeweils die doppelte Menge Öl entzogen, welches durch Frischöl ersetzt werden musste. Um diesen Unterschied zur Standardfritteuse auszugleichen, wurden der Standardfritteuse jeweils zwei Proben à 50ml entnommen, anstatt der nötigen einzelnen Probe à 50ml. Diese grossen Probenmengen führten jedoch dazu, dass die Fritteusen täglich mit ein bis zwei Liter frischem Frittieröl aufgefüllt werden mussten.

### 5.6.2 Herausforderungen während der Versuchsdurchführung

Der Start der Frittierversuche musste aufgrund von verschiedenen technischen Problemen mehrmals verschoben werden. Aus diesen Problemlösungsprozessen konnten jedoch nützliche Erkenntnisse gewonnen werden, weshalb hier auf diese Herausforderungen und die daraus gewonnenen Erfahrungen eingegangen wird.

Die grösste Verzögerung verursachte ein Aufschäumen des Frittieröles in der Prototypfritteuse, welches beim Absenken des Frittiergutes auftrat. Als mögliche Ursachen wurden Partikel aus dem Tiefenfilter, der Einfluss der Pumpe auf die Wasserverteilung im Frittieröl, Eiweissstoffe im Rapsöl (verursacht durch nasse Saat) und falsche Temperaturführung ausgemacht. Zudem können ungeeignete Materialien der Bauteile zur Schaumbildung führen, weshalb die verbauten Dichtungen und Schläuche ebenfalls zu den möglichen Ursachen gezählt wurden. Diese potenziellen Auslöser wurden, wie im Protokoll festgehalten, systematisch ausgeschlossen. Die Dichtungen und Schläuche wurden zunächst über die Spezifikationen beurteilt. Die Pumpe ist nur für den Betrieb bei 80°C ausgelegt, konnte aber als Ursache für das Aufschäumen ausgeschlossen werden. Die Schläuche sind bis 250°C für Lebensmittel zugelassen. Um die verwendeten Silikonschläuche dennoch als Ursache ausschliessen zu können, wurden 2cm des Schlauches, 300ml frischem Frittieröl bei 100°C für drei Stunden ausgesetzt. Nach dem Entfernen des Silikonschlauches wurde mit dem Frittieröl 100g Pommes Frites bei 170°C frittiert. Dies führte wieder zum bekannten Schäumen, womit die Schläuche als Ursache für die Schaumbildung identifiziert waren. Diese wurden daraufhin durch reine PTFE Schläuche ersetzt, welche in der Handhabung nicht optimal sind, aber den Druck- und Temperaturbedingungen im Prozess standhalten und die Lebensmittelkonformität aufweisen. Für eine weitere Prototypfritteuse sollten in Zukunft jedoch andere Schläuche verwendet oder idealerweise Edelstahlleitungen verbaut werden.

Als weitere Herausforderung konnte die Gewährleistung einer konstanten Pumpenleistung identifiziert werden. Die Pumpe fiel mehrfach wegen Verunreinigungen aus und musste geöffnet und gereinigt werden. Es wurde festgestellt, dass beim Reinigen der Fritteuse und dem damit verbundenen Austausch des Tiefenfilters, Feststoffe in das Leitungssystem gelangten. Diese führten zur Verunreinigung der Pumpe und der Ventile, was in einer Verringerung der Pumpenleistung resultierte. Dies unterstreicht die Wichtigkeit der Vorfiltration für einen störungsfreien Prozess. Für die weitere Verfahrensentwicklung ist daher darauf zu achten, dass der Tiefenfilter ohne Verunreinigung der Leitungen ausgewechselt werden kann.

Der Verderbsverlauf des Frittieröls verlief bei beiden Fritteusen langsamer als erwartet. Daraufhin wurde das Versuchsdesign für die letzten drei Versuchstage angepasst, um mit den vorhandenen Ressourcen das Frittieröl auf einen TPA von >27% zu bringen. Der Grund für den langsam verlaufenden Frittierölverderb kann auf die relativ grosse Probenmenge (täglich 500ml pro Fritteuse) und dem sehr hitzestabilen stabilen HOLL Rapsöl zurückgeführt werden. Die Probenmenge musste mit der entsprechenden Menge an Frischöl ausgeglichen werden. Dazu kam der Frittieröl austrag durch das Frittiergut, welcher ebenfalls mit Frischöl ausgeglichen wurde.

### 5.6.3 Systemparameter des Membransystems

In Abschnitt 5.3 wurden Systemparameter vorgeschlagen, mit denen optimale Filtrationsleistungen erzielt werden sollten. Anhand der Simulation konnte jedoch gezeigt werden, dass der Permeatflux einen kleineren Einfluss auf das gesamte System hat, als zunächst angenommen. Aus diesem Grund wurde entschieden, auf Systemparameter zu setzen, welche die Membran weniger belasten und die benötigte Energie reduzieren (siehe Abschnitt 3.7). Der Prozess wurde mit den gewählten Parametern im Vorfeld der Versuche simuliert. Diese zeigten, dass die gewünschte Frittieröl-Verbesserung auch mit diesen Systemparametern zu erreichen sind.

Die Temperatur im Feedtank verhielt sich über die gesamte Versuchsdauer stabil. Der Druckverlust stieg im Verlaufe der Zeit allerdings und der Eingangsdruck wurde an Versuchstag 11 auf 23bar erhöht, um einen TMP von 20bar halten zu können. Die Überströmung konnte konstant auf 6l/min gehalten werden.

### 5.6.4 Analytik

Der Fokus der analytischen Beurteilung der beiden Fritteusen lag auf den TPA, welche vom Gesetzgeber in der Schweiz als Verderbsindikator gilt. In diesem Abschnitt wird der Verlauf der TPA mit den zusätzlich durchgeführten Analysen und Berechnungen in Verbindung gebracht und diskutiert.

In Abschnitt 4.5.1.1 konnte gezeigt werden, dass der Anstieg der TPA des Prototyps geringer ausfiel, als der der Standardfritteuse. Dies konnte mit einer linearen Regressionsgeraden quantifiziert werden. Der TPA Anstieg verhält sich Erfahrungsgemäss nicht linear. Dennoch wurden Bestimmtheitsmasse von über 0.84 erreicht, was ausreicht, um die Anstiege der TPA in beiden Fritteusen vergleichen zu können. So ist deutlich zu erkennen, dass der Prototyp die TPA auch nach über 280h auf einem akzeptierbaren Level von <12% halten kann, während die TPA Konzentration in der Standardfritteuse bis über 27% ansteigt und somit nach Schweizer und Europäischem Recht als Verdorben gilt. Bestätigt wird dies, wenn neben dem TPA auch die Säurezahl als Indikator hinzugezogen wird und anhand der Formel 5 der DEGLEV berechnet wird (Siehe Abschnitt 4.5.1.5). Währendem der Prototyp nach 295h noch klar über dem Schwellenwert von 50 lag, galt das Frittieröl der Standardfritteuse nach 252h bereits als verdorben. Werden die Regressionsgeraden der Prototyp Fritteuse extrapoliert, würde der DEGLEV erst nach 644h (27 Tage) den Schwellenwert von 50 unterschreiten und der TPA wäre erst nach 1014h (42 Tage) über dem Grenzwert von 27%.

Im simulierten Prozess erreicht die Fritteuse nach 300h einen TPA von rund 15% (Siehe Abschnitt 4.4). Dies ist ein höherer Wert, als die während dem Versuch gemessenen TPA Werte von 11.84% nach 295h (Siehe Abschnitt 4.5.1.1), was dafür spricht, dass das Ziel einer konstanten Frittierölqualität erreichbar ist. Allerdings stellt sich noch die Frage, warum der TPAR während dem Versuch auf maximal 13.35% ansteigt und somit auch signifikant tiefer ist als der TPA in der Standardfritteuse. Basierend auf der Simulation hätte dieser bis auf rund 30% TPA ansteigen müssen. Ein möglicher Grund für den tiefen Wert könnte sein, dass Reaktionsprodukte, welche den Frittierölverderb katalysieren, durch die Membranfiltration reduziert werden und den Ölverderb so verlangsamen.

Die Anisidin Zahl kann zur Einschätzung des oxidativen Abbaus herangezogen werden. Die gemessenen Proben in Abschnitt 4.5.1.3 zeigen schon von Beginn an eine höhere Anisidin Zahl in der Standardfritteuse als im Prototyp. Die leicht höhere Steigung der Regressionsgerade der Standardfritteuse lässt zudem auf einen schnelleren oxidativen Verderb schliessen. Allerdings ist das Bestimmtheitsmass dieser Regressionsgeraden eher tief ($R^2$ = 0.681). Der Residual der Messungen zeigt zudem einen vergleichsweise hohen Wert an, was darauf schliessen lässt, dass die gemessenen Spektren nicht den Kalibrierungsspektren entsprechen und deshalb Messungenauigkeiten auftreten können. So ist eine verlässliche Aussage über die oxidativen Unterschiede in den beiden Fritteusen schwierig vorzunehmen.

Die PTG erhöhen sich, wie in Abschnitt 4.5.1.4 aufgeführt, im Verlaufe der Zeit und können so die Viskosität des Frittieröls beeinflussen. Dies liess sich mit den durchgeführten Messungen in Abschnitt 4.5.3 bestätigen. Allerdings sind die Unterschiede der Viskosität zwischen Prototyp und Standard mit 0.4mPa·s eher gering während die PTG deutliche Unterschiede aufzeigen. Die Viskosität sollte erfahrungsgemäss einen Einfluss auf den Permeaflux haben. Dieser nimmt, wie in Abschnitt 4.5.2 gezeigt, im Verlauf des Versuches ab, pendelt sich aber nach ca. 175h bei 1.07 l/h m² ein. Die Kurven von Viskosität und Permeatflux lassen vermuten, dass die Abnahme des Permeatflux nicht allein von der Viskosität abhängt, sondern die in Abschnitt 5.6.2 beschriebenen Verschmutzungen der Leitungen auch die Membranen betroffen haben könnten und so zu einem verstärkten Fouling und einer Abnahme des Permeatflux geführt haben.

Die Farbe des Frittieröles gilt als weiterer, vor allem in der Gastronomie verwendeter, Indikator für dessen Verderb. Die Farbdifferenz ΔE*ab gibt allerdings ausschliesslich den Unterschied zwischen zwei Proben an, liefert jedoch keinerlei Information über die Art des Unterschieds. Ein ΔE*ab Wert von 1 wird als von Auge nicht mehr sichtbarer Unterschied angesehen. Ein ΔE*ab Wert ab 10 lässt hingegen den Schluss zu, dass es sich um verschiedene Farben handelt. So zeigte die Farbdifferenz in Abschnitt 4.5.3, dass dieser Wert bereits nach dem ersten Versuchstag überschritten wird und es deutliche Unterschiede zwischen den beiden Ölen gibt.

Da es sich bei der Verfärbung von Frittieröl meist um eine Braunfärbung handelt, gibt der BI einen guten Anhaltspunkt, um die beiden Frittieröle bezüglich ihres Verderbs zu vergleichen. Das Frittieröl des Prototyps weist am Ende des Versuchs mit 0.18 einen um 21.37 tieferen BI auf als das Frittieröl der Standardfritteuse. Der BI konnte somit die Farbdifferenz verdeutlichen und bestätigte, dass es sich um eine Veränderung der Braunfärbung handelt. Der L* Wert des Prototyps liegt am Ende der Versuche um 12.9 Einheiten höher als der der Standardfritteuse, was zusätzlich eine Verdunkelung des Friiteröles indiziert.

Die In-Out Tests am Versuchstag 1 und 11 konnten aufgrund einer unzureichender Prüferzahl nicht durchgeführt werden und fehlen deshalb im Abschnitt 4.5.5. Der DEGLEV dient, wie in Abschnitt 1.5 beschrieben, dazu den sensorischen Verderb des Frittieröles zu bestimmen und basiert auf der Korrelation von analytischen Werten und einem binären In-Out Test. Die Ergebnisse der in Abschnitt 4.5.5 beschriebenen Tests sollten deshalb zum gleichen Schluss kommen wie die Resultate des DEGLEV. Gemäss diesem, hätte das Frittieröl der Standardfritteuse am Tag 12 bereits als «out» beurteilt werden müssen. Die Prüfer bewerteten das Frittieröl der Standardfritteuse aber erst am Tag 13 als verdorben. Dabei sollte angemerkt werden, dass eine intensivere Schulung der Prüfer sowie eine höhere Prüferzahl in Zukunft angestrebt werden sollte, was zu genaueren Ergebnissen führen könnte.

Durch die Bewertung des Frittieröles und der Pommes Frites stellte sich zudem heraus, dass ein als «out» bewertetes Frittieröl nicht direkt zu einer «out» Bewertung des Frittiergutes führt. Die Pommes Frites wurden während dem gesamten Versuch als «in» bewertet. Die Profildaten des deskriptiven In-Out Test sollten als Zusatzinformation angesehen werden und die In-Out Entscheidung nicht ersetzen oder relativieren. Dennoch liefern sie wertvolle Informationen zu den verschiedenen Attributen. So wurde im Frittieröl der Standardfritteuse in den ersten Versuchstagen ein fischiger Geruch wahrgenommen, wessen Ursprung noch nicht geklärt werden konnte und bei zukünftigen Versuchen im Auge behalten werden sollte. Zudem konnte festgestellt werden, dass die Pommes Frites des Prototyps tendenziell heller wahrgenommen wurden als die der Standardfritteuse.

### 5.7 Risiken

Wie bereits angesprochen, ist der gesamte Prozess auf die GMT Membran ausgelegt, was ein erhebliches Risiko birgt. Es müsste neu mit der Membranselektion begonnen werden, wenn diese aufgrund von fehlenden Konformitätserklärungen nicht eingesetzt werden könnte. Aus diesem Grund erhielt dieses Risiko drei Punkte bei der Schwere der Auswirkung. Die Wahrscheinlichkeit ist mit der höchsten Punktzahl bewertet, da die Konformitätserklärung vom Hersteller einen grossen finanziellen Aufwand bedeuten würde, und nach ersten Gesprächen keine klare Tendenz erkannt werden konnte, dass die Firma GMT bereit ist, diesen Aufwand und somit auch das Risiko auf sich zu nehmen.

In den Risikodimensionen «Wirtschaft» und «Technik» wurden die grössten Risiken identifiziert. Neben den technischen Herausforderungen muss eine Wirtschaftlichkeit der Neuentwicklung für Gastrofrit, aber auch für deren Kunden gewährleistet sein. Um die Risiken in der technischen Dimension zu minimieren, wird es entscheidend sein, welche Materialien bzw. Komponenten verbaut werden können. Dabei wird beispielsweise die Temperaturbedingung ein limitierender und entscheidender Faktor sein. Besonders in der technischen Dimension sollte die Risikoanalyse, in Kooperation mit den entsprechenden Industriepartnern, erweitert werden.

Eine Risikoanalyse sollte immer mit allen beteiligten Projektpartnern durchgeführt werden, da sonst gewisse Blickwinkel ausser Acht gelassen werden könnten. Aus diesem Grund soll die durchgeführte Risikoanalyse nicht als abschliessend betrachtet werden, sondern eher als Basis für eine Risikoanalyse im Rahmen des Projektteams OLFO. Durch die Definierung von sogenannten «Showstoppern» soll der Zeitpunkt definiert werden, an dem das Weiterführen des Projektes hinterfragt werden sollte. Wird ein Risiko in einer Phase als zu hoch oder die Kosten um dieses Risiko zu mindern als nicht ökonomisch bewertet, kann das Projekt mit geringerem Ressourcenverlust gestoppt oder Gegenmassnahmen ergriffen werden.

### 6 Schlussfolgerung

Bereits in vorausgegangen Studien und projektinternen Versuchen konnte gezeigt werden, dass eine Membranfiltration zur Reduktion der TPA in Frittieröl eingesetzt werden kann. Bis anhin wurde aber jeweils der geringe Permeatflux als Hürde für die kommerzielle Nutzung aufgeführt. Die Auswahl an für Speiseöl geeigneten lipophilen NF-Membranen ist sehr begrenzt. So ist auch die verwendete Membran GMT oNF-3 noch nicht für Lebensmittel zugelassen und muss durch Konformitätsarbeit noch als lebensmitteltauglich erklärt werden.

Verglichen mit bisherigen Experimenten konnte in dieser Arbeit der Permeatflux gesteigert werden und mit dem entwickelten Filtrationssystem wurde gezeigt, wie eine Membran mit einem dennoch eher geringem Permeatflux, erfolgreich zur einer bedeutsamen Verbesserung der Frittierölqualität einer Gastronomie-Fritteuse beitragen kann. Die meisten Verderb indizierenden Parameter wiesen im Vergleich mit der Standardfritteuse auf eine deutliche Verbesserung der Frittieröllqualität im Prototyp hin. Obwohl das Öl-Produkt-Verhältnis der verglichenen Fritteusen nicht identisch war, ist davon auszugehen, dass dies nicht der alleinige Grund für die beobachtete Verbesserung ist und die Membranfiltration einen bedeutsamen Nutzen bringt.

Die Versuche waren darauf ausgelegt eine konstante und gute Frittierölqualität in der Prototyp Fritteuse zu gewährleisten und lieferten diesbezüglich vielversprechende Resultate. Allerdings ist zu beachten, dass das endgültige Ziel des Fritteusen-Käufers eine Verringerung der eingesetzten Frittierölmenge ist. Da mit dem entwickelten System immer noch Frittieröl aus dem Retentat entsorgt werden muss, ist der Ölabfall nicht komplett zu vermeiden. Für die Akzeptanz beim Käufer wird es von Bedeutung sein, wie viel Frittieröl im Vergleich zu einer normalen Fritteuse eingespart werden kann. Die effektiv erzielbare Öleinsparung hängt beispielsweise vom Volumen des Membrankreislaufes, des Rückhaltefaktors und der Menge des Ölablasses ab und sollte bei der endgültigen Auslegung der OLFO Fritteuse beachtet werden. Die Einsparung lässt sich über die Simulation abschätzen. Verglichen mit der Standardfritteuse kann eine Reduktion des Ölabfalls um ca. 50% erwartet werden.

Dennoch handelt es sich um einen ersten Prototyp und den ersten praxisnahen Frittierversuch. Die positiven Effekte wie die Verlangsamung des TPA Anstiegs, die Farbverbesserung und die Reduktion der PTG müssen mit weiteren Versuchen experimentell bestätigt werden. Hierzu bietet sich an, diese Versuche bereits mit einer nächsten Prototyp Generation durchzuführen, um näher an die Bedingungen der endgültigen OLFO Fritteuse zu gelangen. So müsste beispielsweise das gesamte System geschlossen sein und die Menge an Frittieröl im Membrankreislauf auf einen Liter reduziert werden. Die sensorischen Eigenschaften der Produkte, besonders der fischige Geruch, sollten in Praxistests dabei weiter überwacht werden. Die Vorfiltration kann anhand der parallel zu dieser Arbeit laufenden Bachelorarbeit beurteilt werden und für die weitere Entwicklung von Bedeutung sein.

Für die weiteren Schritte der Fritteusen-Entwicklung sollten die fehlenden Faktoren wie die Konfiguration der Membranelemente, mit externen Experten erarbeitet werden. Beispielsweise wäre die externe Unterstützung eines Membranmodul-Herstellers, wie BMT zu empfehlen. So kann weiter am Prototyp gearbeitet und das Systemdesign neu evaluiert werden, bis eine Implementierung und erste Feldtests in der Gastronomie möglich sind.

Der in der Risikoanalyse bedenklichste Faktor, die Konformitätserklärung für die verwendete Membran, sollte zeitnah geklärt werden um das weiteres Vorgehen planen zu können. Im Falle einer Ablehnung könnte eine Zusammenarbeit mit dem Membranhersteller angestrebt werden, um die Konformitätsarbeit in Kooperation durchzuführen und den Aufwand für GMT zu verringern.

Abschliessend kann festgehalten werden, dass die Entwicklung der OLFO Fritteuse sich auf einem guten Weg befindet und die Fortführung der Forschungsarbeiten zu empfehlen ist. Hierbei ist es wichtig die entsprechende Expertise für das Design-Team zu akquirieren. So kann eine optimale Voraussetzung geschaffen werden, um ein umweltfreundliches, innovatives und kundenorientiertes Produkt auf den Markt zu bringen, das die Erwartungen der Kunden übertrifft und ein einfaches, sicheres und kosteneffizientes Frittieren ermöglicht.

Es ist zu beachten, dass die hier gezeigten und beschriebenen Ausführungsformen repräsentativ für die Erfindung und ihre beste Ausführungsform sind und nicht dazu dienen, den Umfang der vorliegenden Erfindung in irgendeiner Weise einzuschränken.

Die Beschreibung und die Figuren sind eher illustrativ als einschränkend zu betrachten, und alle hierin beschriebenen Modifikationen sollen in den Umfang der beanspruchten Erfindung einbezogen werden. Dementsprechend sollte der Umfang der Erfindung durch die beigefügten Ansprüche und nicht nur durch die oben beschriebenen Beispiele bestimmt werden.

Vorteile, andere Vorteile und Lösungen, die hier erwähnt werden, sind nicht als kritische, erforderliche oder wesentliche Merkmale oder Komponenten eines oder aller Ansprüche zu verstehen.

Wie hierin verwendet, sind die Begriffe "umfasst", "umfassend" oder Variationen davon, um eine nicht-exklusive Auflistung von Elementen beziehen, so dass jede Vorrichtung, Verfahren, Methode, Artikel oder Zusammensetzung der Erfindung, die eine Liste von Elementen umfasst, die nicht nur die Elemente rezitiert, sondern kann auch andere Elemente wie die in der vorliegenden Spezifikation beschrieben umfassen. Sofern nicht ausdrücklich anders angegeben, ist die Verwendung des Begriffs "bestehend aus" oder "bestehend aus" oder "im Wesentlichen bestehend aus" nicht dazu gedacht, den Umfang der Erfindung auf die nachfolgend aufgeführten Elemente zu beschränken. Andere Kombinationen und / oder Modifikationen der oben beschriebenen Elemente, Materialien oder Strukturen, die in der Praxis der vorliegenden Erfindung verwendet werden, können variiert oder durch den Fachmann zu anderen Designs angepasst werden, ohne von den allgemeinen Grundsätzen der Erfindung abweicht.

Die oben genannten Patente und Artikel werden hiermit durch Bezugnahme in diese Offenbarung aufgenommen, sofern nicht anders angegeben, soweit sie nicht im Widerspruch zu dieser Offenbarung stehen.

Weitere Merkmale und Ausführungsformen der Erfindung sind in den beigefügten Ansprüchen beschrieben.

Des Weiteren sollte die Erfindung so betrachtet werden, dass sie alle möglichen Kombinationen aller in der vorliegenden Beschreibung, den beigefügten Ansprüchen und/oder Zeichnungsfiguren beschriebenen Merkmale umfasst, die als neu, erfinderisch und industriell anwendbar angesehen werden können.

Zusätzliche Merkmale und Funktionen der Erfindung sind in den beigefügten Ansprüchen und/oder in der Zusammenfassung beschrieben. Diese Ansprüche und/oder die Zusammenfassung werden hiermit in ihrer Gesamtheit durch Bezugnahme in diese Spezifikation aufgenommen und sollten als Teil der Anmeldung in der eingereichten Form betrachtet werden.

Bei den hier beschriebenen Ausführungsformen der Erfindung sind zahlreiche Variationen und Modifikationen möglich. Obwohl bestimmte illustrative Ausführungsformen der Erfindung hier gezeigt und beschrieben wurden, ist eine breite Palette von Änderungen, Modifikationen und Substitutionen in der vorangegangenen Offenbarung in Betracht gezogen. Während die obige Beschreibung viele spezifische Details enthält, sollten diese nicht als Einschränkungen des Umfangs der Erfindung verstanden werden, sondern vielmehr als Beispiele für die eine oder andere bevorzugte Ausführungsform davon. In einigen Fällen können einige Merkmale der vorliegenden Erfindung ohne eine entsprechende Verwendung der anderen Merkmale verwendet werden. Dementsprechend ist es angebracht, dass die vorstehende Beschreibung breit ausgelegt werden und als nur illustrativ zu verstehen, wobei der Umfang der Erfindung nur durch die Ansprüche begrenzt ist.

**Patentansprüche**

1. Frittiersystem mit einer Frittiervorrichtung und einem Filtrationssystem, wobei die Frittiervorrichtung ein Gehäuse, das durch Außenwände begrenzt ist, und einen Behälter umfasst, der geeignet ist, eine Flüssigkeit zu enthalten, wobei die Flüssigkeit vorzugsweise ein Öl ist, wobei die Frittiervorrichtung mit dem Filtrationssystem verbunden ist, wobei das Filtrationssystem so konfiguriert ist, dass es kontinuierlich einen Strom der Flüssigkeit in einer Konfiguration mit geschlossenem Kreislauf aufnimmt und zurück in den Behälter führt, wobei der Behälter zumindest einen Tiefenfilter und/oder Vorfilter (ID: 3.0) umfasst, wobei das Filtrationssystem einen ersten und einen zweiten Filterkreislauf umfasst, wobei der erste Filterkreislauf flüssigkeitsführende Schläuche und zumindest eine Pumpe (ID: 2.0) zum pumpen der Flüssigkeit umfasst und so konfiguriert ist, dass der Strom der Flüssigkeit durch den Tiefenfilter und/oder Vorfilter fliesst, wobei der zweite Filterkreislauf flüssigkeitsführende Schläuche, zumindest zwei Pumpen (ID: 7.0, 9.9, 12.0) und ein aus einem Membranfilter (ID: 10.0) gebildetes Filterelement umfasst, wobei die flüssigkeitsführenden Schläuche des zweiten Filterkreislaufs so an den ersten Filterkreislauf angeschlossen sind, dass ein Teilstrom des Stroms des ersten Filterkreislaufs als Strom in den zweiten Filterkreislauf geleitet wird.

2. Frittiersystem nach Anspruch 1, wobei der Teilstrom durch die erste Pumpe des zweiten Filterkreislaufs in den zweiten Filterkreislauf gefördert wird.

3. Frittiersystem nach Anspruch 2, wobei während dem Betrieb nach der ersten Pumpe des zweiten Filterkreislaufes ein gegenüber vor der ersten Pumpe des zweiten Filterkreislaufs um zumindest 18 bar, vorzugsweise zumindest 20 bar, oder vorzugsweise zumindest 22 bar, oder vorzugsweise zumindest 24 bar, besonders bevorzugt zumindest 25 bar erhöhter Druck entsteht.

4. Frittiersystem nach Anspruch 3, wobei der Strom der Flüssigkeit nach der ersten Pumpe des zweiten Filterkreislaufs mittels der zweiten Pumpe des zweiten Filterkreislaufs durch das Filterelement gepumpt wird.

5. Frittiersystem nach einem der vorhergehenden Ansprüche, wobei die zweite Pumpe des zweiten Filterkreislaufs die Flüssigkeit durch den Membranfilter pumpt, so dass der Strom der Flüssigkeit eine Überströmung und eine Unterströmung im Membranfilter erzeugt, wobei die Überströmung und die Unterströmung durch ein Membrantuch getrennt sind, wobei die Unterströmung ein geschlossener Kreislauf ist und dabei ein Permeat und ein Retentat entsteht.

6. Frittiersystem nach Anspruch 5, wobei das Permeat, durch eine dritte Pumpe des zweiten Filterkreislaufs, zurück in den Behälter geleitet wird.

7. Frittiersystem nach einem der vorhergehenden Ansprüche, wobei der zweite Filterkreislauf einen Wärmetauscher umfasst, wobei der Wärmetauscher so konfiguriert ist, dass der Strom der Flüssigkeit nach der ersten und vor der zweiten Pumpe des zweiten Filterkreislaufs auf zumindest unter 170 °C, vorzugsweise auf unter 140°C, besonders bevorzugt auf unter 110 °C gekühlt wird.

8. Frittiersystem nach Anspruch 7, wobei der Wärmetauscher eine herkömmliche Heizung umfasst, wobei die herkömmliche Heizung optional eine Silikonheizung ist.

9. Frittiersystem nach einem der Ansprüche 7 oder 8, wobei der Wärmetauscher so konfiguriert ist, dass das Permeat nach dem Membranfilter und vor Eintritt in den Behälter erwärmt wird.

10. Frittiersystem nach einem der vorhergehenden Ansprüche, wobei das Filtersystem im Inneren des Gehäuses angeordnet ist und, optional, vor Licht geschützt ist.

11. Frittiersystem nach einem der Ansprüche 1 bis 9, wobei das Filtersystem außerhalb des Gehäuses angeordnet ist und, optional, vor Licht geschützt ist.

12. Verfahren zum Filtern von Öl mittels eines Frittiersystems nach einem der vorhergehenden Ansprüche, wobei die Flüssigkeit kontinuierlich durch den Membranfilter gepumpt oder gesaugt wird.

**Claims**

1. Deep-frying system comprising a deep fryer and a filtration system, wherein the deep fryer comprises a housing, which is delimited by outer walls, and a container that is suitable for containing a liquid, wherein the liquid is preferably an oil, wherein the deep fryer is connected to the filtration system, wherein the filtration system is configured such that it continuously receives a flow of the liquid in a closed-circuit configuration and leads said flow back into the container, wherein the container comprises at least one depth filter and/or pre-filter (ID: 3.0), wherein the filtration system comprises a first and a second filter circuit, wherein the first filter circuit comprises liquid-carrying tubes and at least one pump (ID: 2.0) for pumping the liquid, and is configured such that the flow of the liquid flows through the depth filter and/or pre-filter, wherein the second filter circuit comprises liquid-carrying tubes, at least two pumps (ID: 7.0, 9.9, 12.0) and a filter element formed from a membrane filter (ID: 10.0), wherein the liquid-carrying tubes of the second filter circuit are connected to the first filter circuit such that a partial flow of the flow of the first filter circuit is fed into the second filter circuit as flow.

2. Deep-frying system according to claim 1, wherein the partial flow is conveyed through the first pump of the second filter circuit into the second filter circuit.

3. Deep-frying system according to claim 2, wherein, during operation, a pressure arises downstream of the first pump of the second filter circuit that is increased by at least 18 bar, preferably at least 20 bar, or preferably at least 22 bar, or preferably at least 24 bar, particularly preferably at least 25 bar, compared with upstream of the first pump.

4. Deep-frying system according to claim 3, wherein the flow of the liquid downstream of the first pump of the second filter circuit is pumped through the filter element by means of the second pump of the second filter circuit.

5. Deep-frying system according to any of the preceding claims, wherein the second pump of the second filter circuit pumps the liquid through the membrane filter, so that the flow of the liquid generates an overflow and an underflow in the membrane filter, wherein the overflow and the underflow are separated by a membrane cloth, wherein the underflow is a closed circuit, and a permeate and a retentate are thereby formed.

6. Deep-frying system according to claim 5, wherein the permeate is guided back into the container by a third pump of the second filter circuit.

7. Deep-frying system according to any of the preceding claims, wherein the second filter circuit comprises a heat exchanger, wherein the heat exchanger is configured such that the flow of the liquid downstream of the first and upstream of the second pump of the second filter circuit is cooled to at least below 170°C, preferably to below 140°C, particularly preferably to below 110°C.

8. Deep-frying system according to claim 7, wherein the heat exchanger comprises a conventional heater, wherein the conventional heater is optionally a silicone heater.

9. Deep-frying system according to either claim 7 or claim 8, wherein the heat exchanger is configured such that the permeate is heated downstream of the membrane filter and before entry into the container.

10. Deep-frying system according to any of the preceding claims, wherein the filter system is arranged inside the housing and, optionally, is protected from light.

11. Deep-frying system according to any of claims 1 to 9, wherein the filter system is arranged outside the housing and, optionally, is protected from light.

12. Method for filtering oil by means of a deep-frying system according to any of the preceding claims, wherein the liquid is continuously pumped or sucked through the membrane filter.

**Revendications**

1. Système de friture comportant un dispositif de friture et un système de filtration, dans lequel le dispositif de friture comprend un boîtier, qui est délimité par des parois externes, ainsi qu'un récipient, lequel est apte à contenir un fluide, dans lequel le fluide est de préférence une huile, dans lequel le dispositif de friture est relié au système de filtration, dans lequel le système de filtration est configuré de sorte à recevoir en continu un flux de fluide dans une configuration à circuit fermé et à le renvoyer dans le récipient, dans lequel le récipient comprend au moins un filtre en profondeur et/ou un préfiltre (ID : 3-0), dans lequel le système de filtration comprend un premier et un second circuit de filtration, dans lequel le premier circuit de filtration comprend des tuyaux transportant du fluide et au moins une pompe (ID : 2-0) pour le pompage du fluide et est configuré de sorte que le flux de fluide s'écoule à travers le filtre en profondeur et/ou préfiltre, dans lequel le second circuit de filtration comprend des tuyaux transportant du fluide, au moins deux pompes (ID : 7.0, 9.9, 12.0) et un élément de filtre formé à partir d'un filtre à membrane (ID :

10.0), dans lequel les tuyaux transportant du fluide du second circuit de filtration sont raccordés au premier circuit de filtration de telle sorte qu'un flux partiel du flux du premier circuit de filtration est dirigé sous forme de flux dans le second circuit de filtration.

2. Système de friture selon la revendication 1, dans lequel le flux partiel est transporté à travers la première pompe du second circuit de filtration dans le second circuit de filtration.

3. Système de friture selon la revendication 2, dans lequel pendant le fonctionnement en aval de la première pompe du second circuit de filtration, il se produit une pression augmentée d'au moins 18 bar, de préférence d'au moins 20 bar, ou de préférence d'au moins 22 bar, ou de préférence d'au moins 24 bar, de manière particulièrement préférée d'au moins 25 bar par rapport à celle existant en amont de la première pompe du second circuit de filtration.

4. Système de friture selon la revendication 3, dans lequel le flux de fluide en aval de la première pompe du second circuit de filtration est pompé au moyen de la deuxième pompe du second circuit de filtration à travers l'élément de filtre.

5. Système de friture selon l'une des revendications précédentes, dans lequel la deuxième pompe du second circuit de filtration pompe le fluide à travers le filtre à membrane, de sorte que le flux de fluide produit un sur-écoulement et un sous-écoulement dans le filtre à membrane, dans lequel le sur-écoulement et le sous-écoulement sont séparés par une toile de membrane, dans lequel le sous-écoulement est un circuit fermé et produit ainsi un perméat et un rétentat.

6. Système de friture selon la revendication 5, dans lequel le perméat est dirigé en retour dans le récipient à travers une troisième pompe du second circuit de filtration.

7. Système de friture selon l'une des revendications précédentes, dans lequel le second circuit de filtration comprend un échangeur de chaleur, dans lequel l'échangeur de chaleur est configuré de telle sorte que le flux de fluide en aval de la première et en amont de la deuxième pompe du second circuit de filtration, est refroidi à une température inférieure à 170 °C, de préférence inférieure à 140 °C, de manière particulièrement préférée inférieure à 110 °C.

8. Système de friture selon la revendication 7, dans lequel l'échangeur de chaleur comprend un chauffage classique, dans lequel le chauffage classique est éventuellement un chauffage au silicone.

9. Système de friture selon l'une des revendications 7 ou 8, dans lequel l'échangeur de chaleur est configuré de telle sorte que le perméat est chauffé en aval du filtre à membrane et avant d'entrer dans le récipient.

10. Système de friture selon l'une des revendications précédentes, dans lequel le système de filtration est disposé dans l'intérieur du boîtier et, éventuellement, est protégé de la lumière.

11. Système de friture selon l'une des revendications 1 à 9, dans lequel le système de filtration est disposé en dehors du boîtier et, éventuellement, est protégé de la lumière.

12. Procédé de filtration d'huile au moyen d'un système de friture selon l'une des revendications précédentes, dans lequel le fluide est pompé ou aspiré en continu à travers le filtre à membrane.

Fig. 1

Fig. 2

Fig. 3

Fig. 4

Fig. 5

Fig. 6A

Fig. 6B

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

EP 4 103 028 B1

Fig. 34

Fig. 35

Fig. 36

Fig. 37

Fig. 38

Fig. 39

Fig. 40

Fig. 41

Fig. 42

Fig. 43

Fig. 44

Fig. 45

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4622135 A